# EUROPEAN PATENT SPECIFICATION

(11) **EP 1 185 021 B1**
(45) Date of publication and mention of the grant of the patent: **14.02.2007**
(21) Application number: 01919777.1
(22) Date of filing: 04.04.2001
(51) Int. Cl.: H04L 9/08, H04L 9/32, H04N 7/16, G11B 20/00

(54) **INFORMATION PROCESSING SYSTEM AND METHOD**
VERFAHREN UND VORRICHTUNG ZUR INFORMATIONSVERARBEITUNG
SYSTEME ET PROCEDE DE TRAITEMENT DES INFORMATIONS

(30) Priority: 06.04.2000 JP 2000105329; 15.06.2000 JP 2000179692; 18.10.2000 JP 2000317803
(43) Date of publication of application: 06.03.2002
(73) Proprietor: SONY CORPORATION, Tokyo 141-0001 (JP)
(72) Inventor: ISHIGURO, Ryuji, c/o SONY CORPORATION, Tokyo 141-0001 (JP); OSAWA, Yoshitomo, c/o SONY CORPORATION, Tokyo 141-0001 (JP); OISHI, Tateo, c/o SONY CORPORATION, Tokyo 141-0001 (JP); ASANO, Tomoyuki, c/o SONY CORPORATION, Tokyo 141-0001 (JP); MITSUZAWA, Atsushi, c/o SONY CORPORATION, Tokyo 141-0001 (JP)
(74) Representative: Pratt, Richard Wilson
(86) International application number: PCT/JP2001/002929
(87) International publication number: WO 2001/078299

(56) References cited:
- WO-A1-01/03364
- WO-A1-01/03365
- DE-A- 19 511 298
- JP-A- 11 187 013
- US-A- 5 748 736
- US-A- 6 049 878
- WALDVOGEL M ET AL: "THE VERSAKEY FRAMEWORK: VERSATILE GROUP KEY MANAGEMENT" , IEEE JOURNAL ON SELECTED AREAS IN COMMUNICATIONS, IEEE INC. NEW YORK, US, VOL. 17, NR. 9, PAGE(S) 1614-1631 XP002941560 ISSN: 0733-8716 * page 1616 - page 1621 *
- CHUNG KEI WONG ET AL: "SECURE GROUP COMMUNICATIONS USING KEY GRAPHS" , SIGNAL PROCESSING. EUROPEAN JOURNAL DEVOTED TO THE METHODS AND APPLICATIONS OF SIGNAL PROCESSING, ELSEVIER SCIENCE PUBLISHERS B.V. AMSTERDAM, NL, VOL. 28, NR. 4, PAGE(S) 68-79 , USA XP002941561 ISSN: 0165-1684 * page 69 - page 74 *
- CHANG I ET AL: "KEY MANAGEMENT FOR SECURE INTERNET MULTICAST USING BOOLEAN FUNCTIONMINIMIZATION TECHNIQUES" , PAGE(S) 689-698 XP002941562 * page 690 - page 694 *
- 'The versakey framework: versatile group key management' IEEE JOURNAL ON SELECTED AREAS IN COMMUNICATIONS vol. 17, no. 9, September 1999, pages 1614 - 1631, XP002941560
- 'Secure group communications using key graphs' PROCEEDINGS OF ACM SIGCOMM'98, [Online] 02 September 1998, pages 68 - 79, XP002941561 Retrieved from the Internet: <URL:http://www.acm.org/sigcomm/sigcomm98/t p/technical.html>
- 'Key management for secure internet multicast using boolean function minimization techniques' PROCEEDINGS OF INFOCOM'99, [Online] vol. 2, 24 March 1999, pages 689 - 698, XP002941562 Retrieved from the Internet: <URL:http://www.ieee-infocom.org/1999/>

## Description

### Technical Field

The present invention relates to an information processing system, an information processing method, an information recording medium, and a program distributing medium, and particularly, to a system and a method for distributing an encryption processing key in a system involving an encryption processing. Particularly, the invention relates to an information processing system, an information processing method, an information recording medium, and a program distributing medium, which uses a tree-structured hierarchical key distributing system, reconstructs a hierarchical key distributing tree according to a distributing device to reduce data quantity contained in a distributing key block to thereby reduce a distributing message quantity, relieves the load on content key distribution or data distribution when various keys are renewed, and can hold data safely.

### Background Art

Recently, various software data (which will be hereinafter called contents) such as game programs, voice data, image data, and so on have been actively circulated through a network such as an internet, or storage media capable of being circulated such as DVD, CD, etc. These contents are reproduced by reception of data by: a PC (Personal Computer) owned by a user, or a game apparatus; or by loading a memory medium; or are stored in a recording device within a recording and reproducing apparatus attached to PC and the like, for example, a memory card, a hard disk and the like. The contents is utilized by reproducing it from the storage medium.

Information apparatuses such as a video game apparatus, PC and the like have an interface for receiving the contents from a network or for getting access to DVD, CD and the like, and further have control means necessary for reproducing the contents, and RAM, ROM and the like used as a memory region for programs and data.

Various contents such as music data, image data, or programs are called from a memory medium by user's instructions from the information apparatus such as a game apparatus, PC and the like used as a reproducing apparatus or by user's instructions provided via input means, and are reproduced though information apparatus or a display, a speaker and the like.

The distribution rights of many software contents such as game programs, music data, image data and the like are held by owners and sales agents. Accordingly, the use of software is granted to only authorized users so that reproduction without permission is not allowed. That is, generally, data security is important.

One procedure for limiting use of the contents to authorized users is to use encryption processing of the contents. Namely, for example, various encrypted contents such as voice data, image data, game programs are distributed via the Internet or the like, and means for decrypting the encrypted contents, that is, a decryption key, is given only to persons confirmed to be authorized users.

There are a variety of data encrypting and decrypting methods using an encryption key and a decryption key. One example is a known system called a common key encryption system. The DES (Data Encryption Standard) is one example of a common key encryption system.

The encryption key and the decryption key used for the encryption processing and decrypting as described above can be obtained by using a unidirectional function such as a hash function. If, for example, a unidirectional function is applied to a pass-word determined by a user as an input, and an encryption key and a decryption key are produced on the basis of the hashed password, it is substantially impossible, from the encryption key and the decryption key thus obtained, to conversely obtain the pass-word.

Another encryption system is the public key encryption system. A document encrypted by the public key can be subjected to decrypting processing using a private key corresponding to the public key used for the encrypting. The private key is owned by the individual who issued the public key, and the document encrypted by the public key can be decrypted by the individual having the private key. A typical public key encryption system is the RSA (Rivest-Shamir-Adleman) encryption system. By making use of such an encryption system, there can be provided a system which enables decryption of encrypted contents only by an authorized user who has the private key.

A content distribution system may have many encrypted contents stored in recording media such as a network, or DVD, CD. It is necessary to provide a content key for decrypting encrypted contents only to authorized users. There is proposed a system in which the content key itself is encrypted to provide it to an authorized user, and the encrypted content key is decrypted using a decryption key owned by only the authorized user.

The judgment whether or not a user is authorized is generally carried out by executing authenticating processing before distribution of contents or content keys, for example, between a content provider who is a transmitter of contents and a user's device. In general authenticating processing, confirmation is made of a mating party, and a session key effective only for communication is produced. When authentication is established, data, for example, contents or a content key is encrypted using the produced session key for communication. The authenticating system includes mutual authentication using a common key encryption system, and an authentication system using a public key system. In the authentication using a common key, a common key in the system wide is necessary, which is inconvenient at the time of renewal processing. Further, in the public key system, the computation load is large and necessary memory quantity increases, and the provision of such a processing means on each device is not desirable.

The documents D1, 'The versakey framework: versatile group key management', "'IEEE JOURNAL ON SELECTED AREAS IN COMMUNICATIONS'," 17/9/00-09-1999, 1614-1631, XP002941560, and D2 'Secure Group Communications Using Key Graphs', "Department of Computer Sciences University of Texas at Austin", 09-1998,68-79, XP002941561 both disclose an information processing system having a group of information processing devices organised in a hierarchical tree structure having a plurality of terminal nodes connected to a top node via one or more intermediate nodes, each device corresponding to a node, and each device having processing means storing a key set comprising a node key unique to that device, the root key of the top node and the node keys of any devices in a direct path between the node of that device and the top node, the processing means being operable to decrypt, using said key set, encrypted data distributed to said device. New keys may be sent to the leaves. Instead of encrypting new keys for every leaf, advantage if taken of the hierarchy. A message is sent only to these leaves and the nodes on the direct paths from these leaves to the root node containing the required new key(s) relevant to these leaves and nodes. In the message, the key for a node is encrypted by the key of a subordinate node or leaf. Both documents disclose only the management of keys in the group of nodes. D2 discloses the generation of messages used to provide new sets of keys to nodes. Each node which requires a new set of keys is sent new keys encrypted by the old key of that node.

Aspects of the invention are specified in the claims to which attention is invited.

An information processing system according to an embodiment of the present invention is one for distributing encrypted message data capable of being used only in not less than one selected device. The individual device comprises: encryption processing means for holding a key set. The key set has a node key unique to each node in a hierarchical tree structure having a plurality of different devices. The processing means executes a decrypting process on encrypted message data distributed to a device using the key set. The encrypted message data distributed to the device has data encrypted with a renewal node key. The renewal node key is obtained in the decrypting process using an enabling key block (EKB) including encrypted key data by which the renewal node key is encrypted. The enabling key block (EKB) includes a data part comprising the encrypted key data and a tag part as position discrimination data of the encrypted key data in the hierarchical tree structure.

Further, in one embodiment of the information processing system according to the present invention, the encrypted key data included in the enabling key block (EKB) is data into which a node key constituting the hierarchical tree structure is encrypted using a subordinate node key or a subordinate leaf key. The position discrimination data stored in the tag part is constituted as a tag indicating whether or not, for each node, there is encrypted key data, associated with subordinate left and right node (or leaf) positions, stored in the enabling key block (EKB).

Further, in one embodiment of the information processing system according to the present invention, the encrypted key data included in the enabling key block (EKB) is constituted on the basis of only keys corresponding to a node or a leaf of a reconstructed hierarchical tree reconstructed, by selecting paths constituting a simplified 2-branched type tree with terminal nodes or leaves with which the enabling key block (EKB) can be decrypted at the lowest stage, to omit unnecessary nodes. Position discrimination data stored in the tag part includes data indicating whether the encrypted key corresponding to the tag of the enabling key block (EKB) is stored or not.

Further, in one embodiment of the information processing system according to the present invention, the encrypted key data included in the enabling key block (EKB) is constituted on the basis of only a key corresponding to a node or a leaf of a reconstructed hierarchical tree. The tree is reconstructed by selecting paths constituting a simplified 2-branched type tree with terminal nodes or leaves with which the enabling key block (EKB) can be decrypted at the lowest stage to omit unnecessary nodes. Position discrimination data stored in the tag part includes tags indicating whether encrypted key data at left and right: node or leaf position at subordinate of a node position of each of not less than one encrypted key data stored in the enabling key block (EKB), and data indicating whether the encrypted key corresponding to the tag is stored or not.

Further, in one embodiment of the information processing system according to the present invention, the reconstructed hierarchical tree is a tree constituted by selecting a sub-root which is a top node of an entity defined as a subset tree of devices having a common attribute.

Further, in one embodiment of the information processing system according to the present invention, the encrypted key data included in the enabling key block (EKB) is constituted, in a simplified multi-branched type tree having terminal node or leaf with which the enabling key block (EKB) can be decrypted at the lowermost stage, on the basis of only keys corresponding to a top node and terminal nodes or leaves of a reconstructed hierarchical tree. The tree is reconstructed by selecting paths directly connecting the terminal nodes or leaves and a top of the multi-branched type tree to omit an unnecessary node, and position discrimination data stored in the tag part includes data indicating whether an encrypted key corresponding to the tag of the enabling key block (EKB) is stored or not.

Further, in one embodiment of the information processing system according to the present invention, the reconstructed hierarchical tree is a tree having not less than three branches connecting the top node constituting the simplified multi-branched type tree with terminal nodes or leaves constituting the simplified tree directly.

Further, in one embodiment of the information processing system according to the present invention, the encryption processing means in the device has a constitution for sequentially extracting the encrypted key data with data of the tag part in the enabling key block (EKB), executing decrypting process to obtain the renewal node key, and executing decryption of the encrypted message data with the renewal node key obtained.

Further, in one embodiment of the information processing system according to the present invention, the message data is a content key that can be used as a decryption key for decrypting content data.

Further, in one embodiment of the information processing system according to the present invention, the message data is an authentication key used in the authentication process.

Further, in one embodiment of the information processing system according to the present invention, the message data is a key for generating an integrity check value (ICV) of the content.

Further, in one embodiment of the information processing system according to the present invention, the message data is a program code.

Further, an information processing method according to the present invention for distributing encrypted message data capable of being used one or more selected devices, comprises: an enabling key block (EKB) generating step of generating an enabling key block (EKB) including a data part including encrypted key data into which the renewal node key into which at least one of the node keys in a group constituted by nodes and leaves connected at subordinate of a top node which is one node of the hierarchical tree structure is renewed is encrypted with a node key or a leaf key in the group, and a tag part which is position discrimination data in the hierarchical tree structure of encrypted key data stored in the data part; and a message data distribution step for generating message data encrypted with the renewal node key to distribute it to a device.

Further, one embodiment of the information processing method according to the present invention comprises a decrypting processing step of executing decrypting process to the encrypted message data using the key set in a device holding a different key set of a node key peculiar to each node in the hierarchical structure and a leaf key peculiar to each device.

Further, in one embodiment of the information processing method according to the present invention, the enabling key block (EKB) generating step includes a step of encrypting a node key constituting the hierarchical tree structure using a subordinate node key or a subordinate leaf key to generate the encrypted key data, and a step of generating a tag indicating whether there is encrypted key data at a node or leaf position at subordinate left and right positions of a node position of each of not less than one encrypted key data stored in the enabling key block (EKB) or not to store it in the tag part.

Further, in one embodiment of the information processing method according to the present invention, the enabling key block (EKB) generating step includes a step of generating a reconstructed hierarchical tree by selecting paths constituting a simplified 2-branched type tree with a terminal node or leaf capable of decrypting the enabling key block (EKB) at the lowest stage to omit unnecessary nodes; a step of generating an enabling key bock (EKB) on the basis of only a key corresponding to a constitution node or leaf of the reconstructed hierarchical tree; and a step of storing data indicating whether an encrypted key corresponding to a tag of the enabling key block (EKB) is stored in the tag part or not.

Further, in one embodiment of the information processing method according to the present invention, the step of generating the reconstructed hierarchical tree is executed by selecting a sub-root which is a top node of entity defined as a subset tree of devices having a common attribute.

Further, in one embodiment of the information processing method according to the present invention, the enabling key block (EKB) generating step includes a step of generating, in the simplified branched type tree with a terminal node or leaf capable of decrypting the enabling key bock (EKB) at the lowest stage, the reconstructed hierarchical tree, the tree being reconstructed by selecting a path directly connecting the terminal node or leaf with the top of the multi-branched type tree; and a step of storing data indicating whether an encrypted key corresponding to a tag of the enabling key bock (EKB) is stored in the tag part or not.

Further, in one embodiment of the information processing method according to the present invention, the reconstructed hierarchical tree, generated in the step of generating the reconstructed hierarchical tree, is generated as a tree having not less than three branches having a top node constituting a simplified multi-branched type tree and a terminal node or leaf constituting a simplified tree connected directly.

Further, in one embodiment of the information processing method according to the present invention, the decrypting processing step includes a renewal node key obtaining step of obtaining the renewal node key by sequentially extracting encrypted key data stored in the data part on the basis of position discrimination data stored in the tag part of the enabling key block (EKB) to sequentially execute decrypting process; and a message data decrypting step for executing decryption of the encrypted message data with the renewal node key.

Further, in one embodiment of the information processing method according to the present invention, the message data is a content key capable of being used as a decryption key for decrypting the content data.

Further, in one embodiment of the information processing method according to the present invention, the message data is an authentication key used in the authentication process.

Further, in one embodiment of the information processing method according to the present invention, the message data is a key of generating an integrity check value (ICV) of contents.

Further, in one embodiment of the information processing method according to the present invention, the message data is a program code.

Further, an information recording medium according to the present invention stores an enabling key block (EKB) including a data part including encrypted key data into which the renewal node key into which at least one of the node keys in a group constituted by nodes and leaves connected under a top node which is one node of the hierarchical tree structure is renewed is encrypted with a node key or a leaf key in the group, and a tag part which is position discrimination data in the hierarchical tree structure of encrypted key data stored in the data part, and message data encrypted by the renewal node key.

Further, in one embodiment of the information recording medium according to the present invention, the encrypted key data included in the enabling key block (EKB) is data into which the node key constituting the hierarchical tree structure is encrypted using a subordinate node key or a subordinate leaf key; and the position discrimination data stored in the tag part is constituted as a tag indicating whether there is key data at the node of leaf position at the subordinate left and right positions of the node position of each of not less one encrypted key data stored in the enabling key block (EKB).

Further, in one embodiment of the information recording medium according to the present invention, the encrypted key data included in the enabling, key block (EKB) is constituted on the basis of only a key corresponding to a node or a leaf of a reconstructed hierarchical tree reconstructed by selecting paths constituting a simplified 2-branched type tree with a terminal node or leaf capable of decrypting the enabling key block (EKB) at the lowest stage to omit unnecessary nodes; and the position discrimination data stored in the tag part includes data indicating whether an encrypted key corresponding to the tag of the enabling key block (EKB) is stored or not.

A program distributing medium according to the present invention stores a computer program which, in use, executes on a computer system a process of generating an enabling key block (EKB) into which a renewal node key into which at least one of the node keys in a group constituted by nodes and a leaves connected under the top node which is one node of the hierarchical tree structure is renewed is encrypted with a node key or a leaf key in the group. The computer program includes a step of generating a reconstructed hierarchical tree by selecting a path constituting a simplified 2-branched type tree with a terminal node or a leaf capable of decrypting the enabling key block (EKB) at the lowest stage to omit an unnecessary node; a step of generating the enabling key block (EKB) on the basis of only a key corresponding to a constitution node or leaf of the reconstructed hierarchical tree; and a step of storing data indicating whether an encrypted key corresponding to a tag of the enabling key block (EKB) is stored or not.

In the present invention, the hierarchical tree structure is used to make the quantity of data necessary for key renewal as small as possible by using the enabling key block including the tag part. The enabling key block allows keys to be directed only to those nodes or leaves which require new keys.

Further, the enabling key block has an encrypted key data part and a tag part showing a position of the encrypted key, whereby the quantity of data is reduced to enable rapid execution of decrypting processing in a device.

A program distributing medium useful in the present invention is a medium for distributing a computer program in the form that can be read by a computer capable of executing, for example, various program codes. The medium maybe a recording medium such as CD, FD, MO, etc., or a transfer medium such as a network. The network may have any suitable form.

Objects, features .and advantages of the present invention will be apparent from the detailed description with reference to the embodiments and the accompanying drawings.

### Brief Description of the Drawings

FIG. 1 illustrates an example of an information processing system according to the present invention.
FIG. 2 is a block diagram of an example of a recording and reproducing apparatus that can be used in the information processing system according to the present invention.
FIG. 3 shows a tree structure explaining encryption processing of various keys and data in the information processing system according to the present invention.
FIGS. 4A and 4B each show an example of an enabling key block (EKB) used in distribution of various keys and data in the information processing system according to the present invention.
FIG. 5 illustrates the distribution of content keys using an enabling key block (EKB), and the decryption thereof in the information processing system according to the present invention.
FIG. 6 illustrates an example of a format of an enabling key block (EKB) in the.information processing system according to the present invention.
FIGS. 7A to 7C explain the structure of a tag of an enabling key block (EKB) in the information processing system according to the present invention.
FIGS. 8A and 8B show an enabling key block (EKB) and an example of a data structure for distributing content keys and contents in the information processing system according to the present invention.
FIG. 9 shows an example of processing in a device in the case of distributing an enabling key block (EKB), content keys, and contents in the information processing system according to the present invention.
FIG. 10 illustrates an enabling key block (EKB) and content stored on the same recording medium in the information processing system according to the present invention.
FIG. 11A illustrates a conventional system for sending encrypted contents in an information processing system and FIG. 11B illustrates a system, according to the present invention, for sending encrypted contents and an enabling key block (EKB).
FIG. 12 illustrates an authentication processing sequence according to an applicable common key encryption system in the information processing system according to the present invention.
FIG. 13 is a view (1) showing an enabling key block (EKB), a data constitution for distributing an authentication key, and a processing example by a device in the information processing system according to the present invention.
FIG. 14 is a view (2) showing an enabling key block (EKB), a data constitution for distributing an authentication key, and a processing example by a device in the information processing system according to the present invention.
FIG. 15 is a view showing an authentication processing sequence by a public key encryption system applicable in the information processing system according to the present invention.
FIG. 16 is a view showing a process for distributing an enabling key block (EKB) and content keys using the authentication principle by a public key encryption system in the present invention.
FIG. 17 is a view showing a process for distributing an enabling key block (EKB) and encrypted program data in the information processing system according to the present invention.
FIG. 18 is a view showing an example of MAC value production used in production of a. content integrity check value (ICV) applicable in the present invention.
FIG. 19 is a view (1) showing a data structure for distributing an enabling key block (EKB) and an ICV producing key, and an example of processing in a device in the information processing system according to the present invention.
FIG. 20 is a view (2) showing a data structure for distributing an enabling key block (EKB) and an ICV producing key, and an example of processing in a device in the information processing system according to the present invention.
FIGS. 21A and 21B are views each for explaining a copy prevention function where an applicable content integrity check value (ICV) is stored in a medium in the present invention.
FIG. 22 is a view for explaining a system for controlling an applicable content integrity check value (ICV) separately from a content storage medium in the present invention.
FIG. 23 is a view for explaining an example of category classification of a hierarchical tree structure in the information processing system of the present invention.
FIGS. 24A and 24B are views each explaining a process of producing a simplified enabling key block (EKB) in the information processing system of the present invention.
FIGS. 25A. and 25B are views each explaining a process of producing an enabling key block (EKB) in the information processing system of the present invention.
FIGS. 26A and 26B are views each explaining a simplified enabling key block (EKB) (Example 1) in the information processing system of the present invention.
FIGS. 27A and 27B are views each explaining a simplified enabling key block (EKB) (Example 2) in the information processing system of the present invention.
FIGS. 28A to 28C are views each explaining entity control in a hierarchical tree structure in the information processing system of the present invention.
FIGS. 29A to 29C are views each explaining, in detail, entity control in a hierarchical tree structure in the information processing system of the present invention.
FIGS. 30A and 30B are views each explaining entity control in a hierarchical tree structure in the information processing system of the present invention.
FIG. 31 is a view for explaining a reserve node in an entity control system of a hierarchical tree structure in the information processing system of the present invention.
FIG. 32 is a view for explaining a new entity registration sequence in an entity control system of a hierarchical tree structure in the information processing system of the present invention.
FIG. 33 is a view for explaining a relationship between a new entity and a host entity in an entity control system of a hierarchical tree structure in the information processing system of the present invention.
FIGS. 34A and 34B are views each explaining a sub-EKB used in an entity control system of a hierarchical tree structure in the information processing system of the present invention.
FTGS. 35A to 35D are views each explaining device revoke processing in an entity control system of a hierarchical tree structure in the information processing system of the present invention.
FIG. 36 is a view explaining device revoke processing sequence in an entity control system of a hierarchical tree structure in the information processing system of the present invention.
FIGS. 37A and 37B are views each explaining renewal of a sub-EKB at the time of device revocation in an entity control system of a hierarchical tree structure in the information processing system of the present invention.
FIGS. 38A to 38D are views each explaining entity revoke processing in an entity control system of a hierarchical tree structure in the information processing system of the present invention.
FIG. 39 is a view for explaining entity revoke processing sequence in an entity control system of a hierarchical tree structure in the information processing system of the present invention.
FIG. 40 is a view explaining a relationship between a revoke entity and a host entity in an entity control system of a hierarchical tree structure in the information processing system of the present invention.
FIG. 41 is a view explaining a capability setting in an entity control system of a hierarchical tree structure in the information processing system of the present invention.
FIG. 42 is a view explaining a capability setting in an entity control system of a hierarchical tree structure in the information processing system of the present invention.
FIGS. 43A and 43B are views each explaining a capability control table for controlling a key issuing center (KDC) in the information processing system of the present invention.
FIG. 44 is an EKB production processing flowchart on the basis of a capability control table for controlling a key issuing center (KDC) in the information processing system of the present invention.
FIG. 45 is a view explaining a capability notice processing at the time of new entity registration in the information processing system of the present invention.

### [Outline of System]

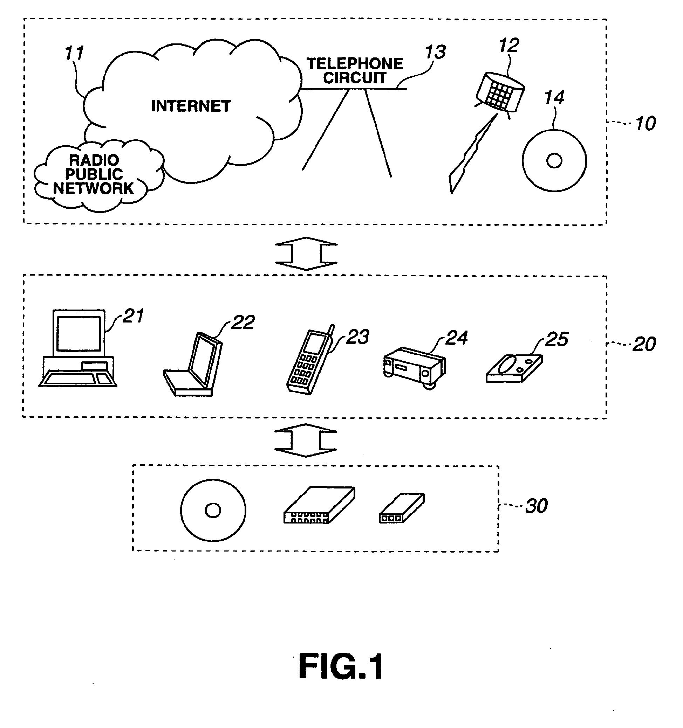

FIG. 1 shows an example of a content distributing system to which the data processing system of the present invention can be applied. The content distributing side 10 transmits a content or a content key encrypted to various content reproducing apparatuses on the content receiving side 20. The apparatus on the content receiving side 20 decrypts an encrypted content or a content key received to obtain a content or a content key, and carries out reproduction of image data and voice data or execution of various programs. The exchange of data between the content distributing side 10 and the content receiving side 20 is executed through a network such as the Internet or through a recording medium such as DVD, CD.

The data distributing means on the content distributing side 10 include the Internet 11, a satellite broadcasting 12, a telephone circuit 13, media 14 such as DVD, CD, etc. The devices on the content receiving side 20 include a personal computer (PC), portable apparatuses 23 such as a portable device (PD), a portable telephone, PDA (Personal Digital Assistants), etc., a recording and reproducing unit 24 such as DVD, CD players, and a reproduction exclusive-use unit 25 such as a game terminal. In these devices on the content receiving side 20, contents distributed from the content distributing side 10 are obtained from communication means such as a network, or from media 30.

### [Structure of Device]

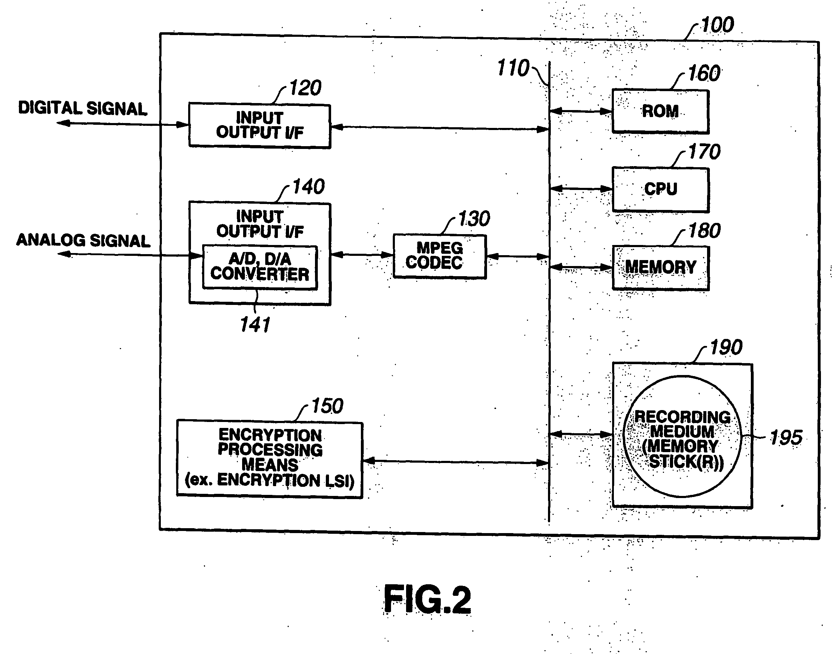

FIG. 2 shows a block diagram of a recording and reproducing device 100 as one example of a device on the content receiving side 20 shown in FIG. 1. The recording and reproducing device 100 has an input/output I/F (Interface) 120, a MPEG (Moving Picture Experts Group) codec 130, an I/F (Interface) 140 provided with an A/D, D/A converter 141, an encryption processing means 150, ROM (Read Only Memory) 160, CPU (Central Processing Unit) 170, a memory 180, and a drive 190 for a recording medium 195, which are connected to each other by a bus 110.

The input/output I/F 120 receives a digital signal representing various contents such as an image, voice, a program, etc. supplied from the outside to output it to the bus 110, and receives a digital signal from the bus 110 to output it to the outside. The MPEG codec 130 decrypts MPEG coded data supplied through the bus 110 to output it to the input/output I/F 140, and MPEG-decrypts a digital signal supplied from the input/output I/F 140 to output it to the bus 110. The input/output I/F 140 contains an A/D, D/A converter 141 therein. The input/output I/F 140 receives an analog signal as a content supplied from the outside, which is subjected to A/D (Analog Digital) conversion by the A/D, D/A converter 141 whereby the signal is output as a digital signal to the MPEG codec 130, and a digital signal from the MPEG codec 130 is subjected to D/A (Digital Analog) conversion by the A/D, D/A converter 141, which is output as an analog signal to the outside.

The encryption processing means 150 is comprises, for example, one LSI (Large Scale Integrated circuit) chip, to execute encrypting, decrypting processing or authentication processing of a digital signal as a content supplied through the bus 110, and output encrypted data and decrypted data to the bus 110. The encryption processing means 150 can be also realized by not only the one LSI chip but by a combination of various software or hardware. The constitution of the processing means formed from the software configuration will be described later.

ROM 160 stores program data processed by the recording and reproducing device. The CPU 170 executes programs stored in the ROM 160 and the memory 180 to thereby control the MPEG codec 130 and the encryption processing means 150. The memory 180 is for example, a non-volatile memory, which stores a program that is executed by the CPU 170, data necessary for operation of CPU 170, and a key set used in the encryption processing executed by the device. The key set will be explained later. The drive 190 drives the recoding medium 195 capable of recording and reproducing digital data to thereby read (reproduce) digital data from the recording medium 195 to output it to the bus 110, and supplies digital data supplied through the bus 110 to the recording medium 195 for recording.

The recording medium 195 is a medium capable of storing digital data, for example, an optical disk such as DVD, CD, an optical magnetic disk, a magnetic disk, a magnetic tape, or a semiconductor memory such as RAM, and in the present embodiment, the medium can be detachably mounted on the drive 190. However, the recording medium 195 may be housed in the recording and reproducing device 100.

The encryption processing means 150 shown in FIG. 2 may be constituted as a single LSI chip, and may employ a constitution that is realized by a combination of a software and a hardware.

### [Tree structure as a key distributing constitution]

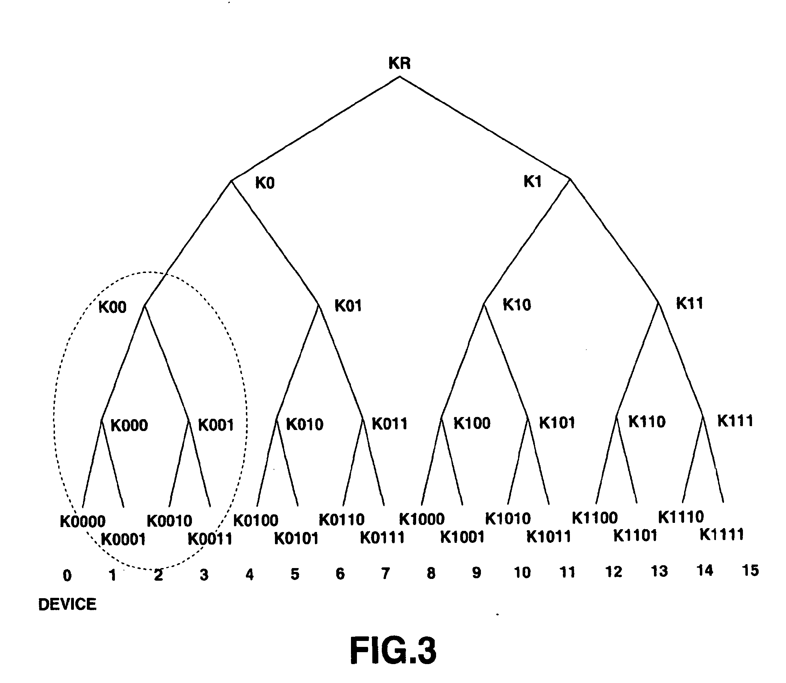

Next, the constitution for holding an encryption processing key in each device and a data distributing constitution where encrypted data are distributed from the content distributing side 10 shown in FIG.1 to each device on the content receiving side 20 will be described using FIG. 3.

Numbers 0 to 15 shown in the lowest stage in FIG. 3 are individual devices on the content receiving side 20. That is, each leaf of the hierarchical tree structure shown in FIG. 3 corresponds to a device.

Each of devices 0 to 15 stores a key set comprising a leaf key assigned to that device (also termed a leaf) and keys assigned to all the nodes on the direct path from that leaf to the root, in the hierarchical tree shown in FIG. 3. The key set is assigned at the time of manufacture or at the time of shipment, or afterwards. K0000 to K1111 shown in the lowest stage of FIG. 3 are respectively leaf keys assigned to devices 0 to 15, and keys from KR to K111 described in the second node from the lowest stage are node keys.

In the tree structure shown in FIG. 3, for example, a device or leaf 0 has a leaf key K0000 and node keys K000, K00, K0, KR. A device 5 has keys K0101, K010, K01, K0 KR. A device 15 has keys K1111, K111, K11, K1, KR. In the tree of FIG. 3 only 16 devices 0 to 15 are described, and the tree structure is shown systematically as a symmetrical 4-stage structure. However, much more devices may be provided in the tree, and the parts of the tree may have a different number of stages.

Further, each device included in the tree structure shown in FIG. 3 includes various recording media, for example, DVD, CD, MD of the embedded type or the type detachably mounted on the device, or devices of various types using a flash memory or the like. Further, various application service may coexist. In addition to the coexisting constitution of various devices and various application, the hierarchical tree structure, which is a content or a key distributing system, shown in FIG. 3 is applied.

In the system in which various devices and applications coexist, for example, a portion surrounded by the dotted line in FIG. 3, that is, the devices 0, 1, 2 and 3 are set as a single group using the same recording medium. For example, with respect to a device included in the group surrounded by the dotted line, processing is executed such that a common content is encrypted and sent from a provider, a content key used in common to devices is sent, or payment data for content charges is also encrypted and output from each device to a provider or a settlement organization. The organization for carrying out data transmit-receiving to and from the devices such as a content provider or a settlement organization executes processing for sending data to, or receiving data from, the portion surrounded by the dotted line of FIG. 3, as one group comprising the devices 0, 1, 2, 3. A plurality of such groups are present in the tree of FIG. 3. The organization for carrying out data transmit-receiving to and from devices such as a content provider or a settlement organization functions as a message data distributing means.

Node keys and leaf keys may be controlled collectively by a single key control center, or may be controlled for each group by a message data distributing means such as a provider, or a settlement organization for carrying out transmit-receiving of various data with respect to groups. These node keys and leaf keys are subjected to renewal processing when a key is leaked. This renewal processing is executed by a key control center, a provider or a settlement organization.

In this tree structure, as will be apparent from FIG. 3, three devices 0, 1, 2, 3 included in one group hold node keys K00, K0, KR in common. By utilizing this common node key, a common content key can be distributed to only devices 0, 1, 2, 3. For example, if the node key K00 itself held in common is set as a content key, the devices 0, 1, 2, 3 can use it as a common content key without the message data distributing means sending a new key. Further, if a value Enc(K00, Kcon) obtained by ncrypting a new content key Kcon by the node key K00 is distributed to the devices 0, 1, 2 3 through a network or by being stored in the recording medium, only the devices 0, 1, 2, 3 can decrypt the encrypted content key Enc(K00, Kcon) using the common node key K00 held in the respective devices to obtain the content key: Kcon. The Enc(Ka, Kb) indicates data in which Kb is encrypted by Ka.

Further, where at the time t, keys : K0011, K001, K00, K0, KR owned by the device 3 are analyzed by a hacker and then exposed, it is necessary for protecting data transmit-received to/from the group of devices 0, 1, 2, 3 to separate the device 3 from the system. To this end, node keys: K001, K00, K0, KR are respectively renewed to new keys K(t)001, K(t)00, K(t)0, K(t)R, which renewed keys to be notified to the devices 0, 1, 2. Here, K(t)aaa indicates a renewal key of Kaaa of generation : t.

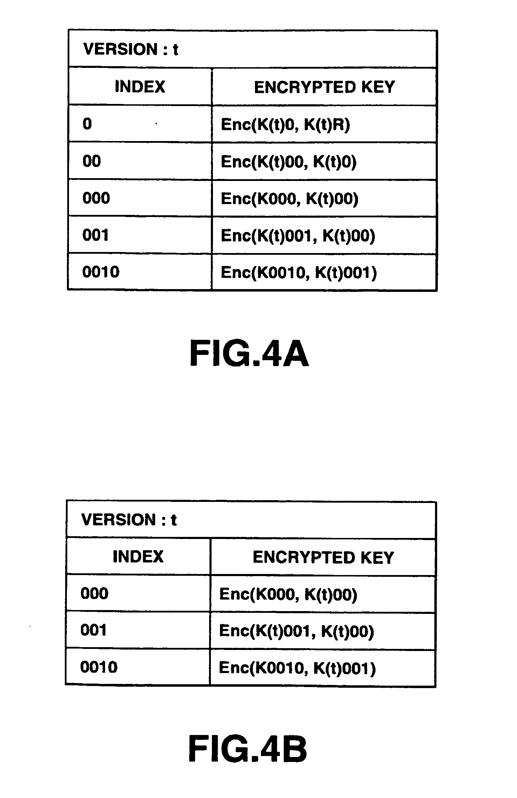

The distribution of renewal keys will be described. Renewal of a key is executed by storing a table constituted by block data called an enabling key block (EKB: Enabling Key Block) shown in FIG. 4A in a network, for example, or in a recording medium to supply it to the devices 0, 1, 2. The enabling key block (EKB) is sometimes called a key renewal block (KRB: Key Renewal Block).

The enabling key block (EKB) shown in FIG. 4A provides data only to the devices in which a node key needs to be renewed.

The example of FIGS. 4A and 4B shows, for the devices 0, 1 and 2 in the tree structure shown in FIG. 3, block data formed for the purpose of distributing a renewal node key of generation t. As will be apparent from FIG. 3, the device 0 and the device 1 require K(t)00, K(t)0, K(t)R as renewal node keys, and the device 2 requires K(t)001, K(t)00, K(t)0, K(t)R as renewal node keys.

As shown in EKB of FIG. 4A, a plurality of encrypted keys are included in EKB. The encrypted key in the lowest stage is: Enc(K0010, K(t)001). This is a renewal node key K(t)001 encrypted by a leaf key K0010 of the device 2, and the device 2 is able to decrypt this encrypted key by its leaf key to obtain K(t)001. By using K(t)001 obtained by decrypting, an encrypted key Enc(K(t)001, K(t)00) in the second stage from bottom can be decrypted to obtain a renewal node key K(t)00. Sequentially, an encrypted key Enc(K(t)00, K(t)0) in the second stage from top of FIG. 4A is decrypted to obtain a renewal node key K(t)0, and an encrypted key Enc(K(t)0, K(t)R) in the first stage from top of FIG. 4A is decrypted to obtain K(t)R. On the other hand, in the device K 0000, K0001, a node key K000 is not included to be renewed, and a key necessary for a renewal node key is K(t)00, K(t)0, K(t)R. The devices K0000 and K0001 decrypt an encrypted key Enc(K000, K(t)00) in the third stage from top of FIG. 4A to obtain K(t)00, and thereafter, an encrypted key Enc(K(t)00, K(t)0) in the second stage from top of FIG. 4A is decrypted, and an encrypted key Enc(K(t)0, K(t)R) in the first stage from top of FIG. 4A is decrypted to obtain K(t)R. By doing so, the devices 0, 1, 2 can obtain a renewed key K(t)R. The index in FIG. 4A shows the absolute address of a node key and a leaf key used as a decryption key.

Where renewal of a node key : K(t)0, K(t)R in the upper stage in the tree structure shown in FIG. 3 is unnecessary, and a renewal processing of only the node key K00 is necessary, an enabling key block (EKB) in FIG. 4B can be used to distribute a renewal nod key K(t)00 to the devices 0, 1, 2.

The EKB shown in FIG. 4B can be used, for example, to distribute a new content key in common in a specific group. Concretely, it is supposed that the devices 0, 1, 2, 3 shown by the dotted line in FIG. 3 use a recording medium, and a new common content key K(t)con is necessary. At this time, Enc(K(t)00, K(t)con) into which new common content key: K(t)con is encrypted with K(t)00 into which a common node key K00 of the devices 0, 1, 2 is renewed is distributed with EKB shown in FIG. 4B. By this distribution, distribution of data not decrypted in the apparatus of other groups such as a device 4 becomes enabled.

That is, if the devices 0, 1, 2 decrypt the encrypted sentence using K(t)00 obtained by processing EKB, a content key at the time t K(t)con can be obtained.

### [Distribution of a content key using EKB]

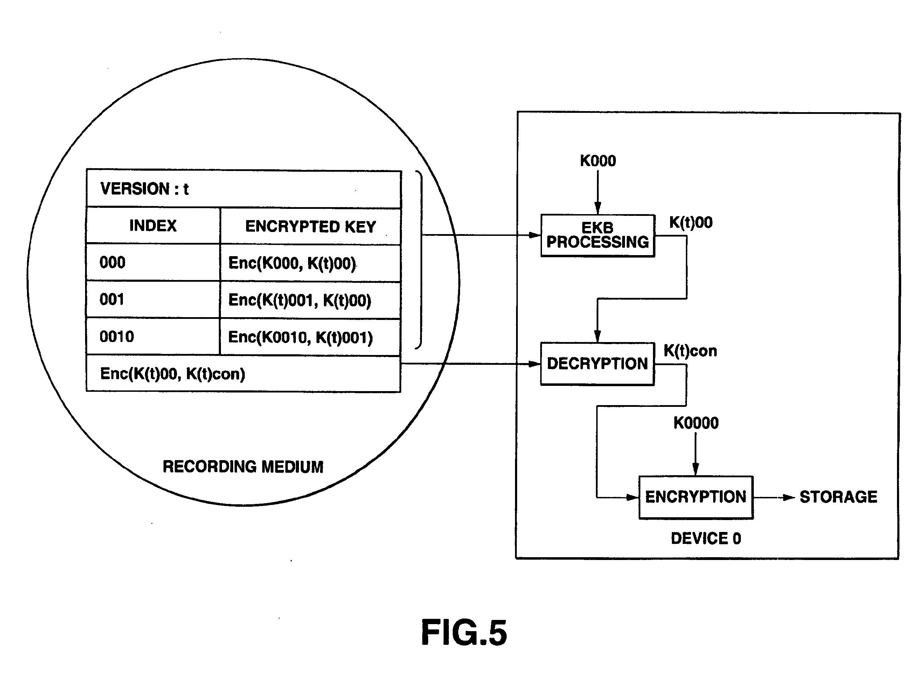

FIG. 5 shows, as an example of processing for obtaining a content key at the time t K(t)con, the processing of a device 0 which receives, through a recording medium, data Enc(K(t)00, K(t)con into which a new common content key K(t)con is encrypted using K(t)00 and EKB shown in FIG. 4B. That is, this is an example in which encrypted message data by EKB is a content key K(t)con.

As shown in FIG. 5, a device 0 uses generation : EKB at generation: t stored in the recording medium and a node key K000 stored in advance by itself to produce a node key K(t)00 by the EKB processing similar to that described above. Further, a renewal content key K(t)con is decrypted using a renewal node key K(t)00 decrypted, and is encrypted by a leaf key K0000 owned by itself and stored in order to use it later.

### [Format of EKB]

FTG. 6 shows an example of format of the enabling key block (EKB). A version 601 is a discriminator showing the version of the enabling key block (EKB). The version has a function for showing a corresponding relation between a function for discriminating latest EKB and a content. The depth shows the number of hierarchies of a hierarchical tree with respect to a device of the distributing destination of the enabling key block (EKB). A data pointer 603 is a pointer for indicating a position of data part in the enabling key block (EKB), and a tag pointer 604 is a pointer for indicating a position of a tag part, and a signature pointer 605 is a pointer for indicating a position of signature.

A data part 606 stores, for example, data having a node key to be renewed encrypted. For example, it stores various encrypted keys in connection with a renewal node key as shown in FIG. 5.

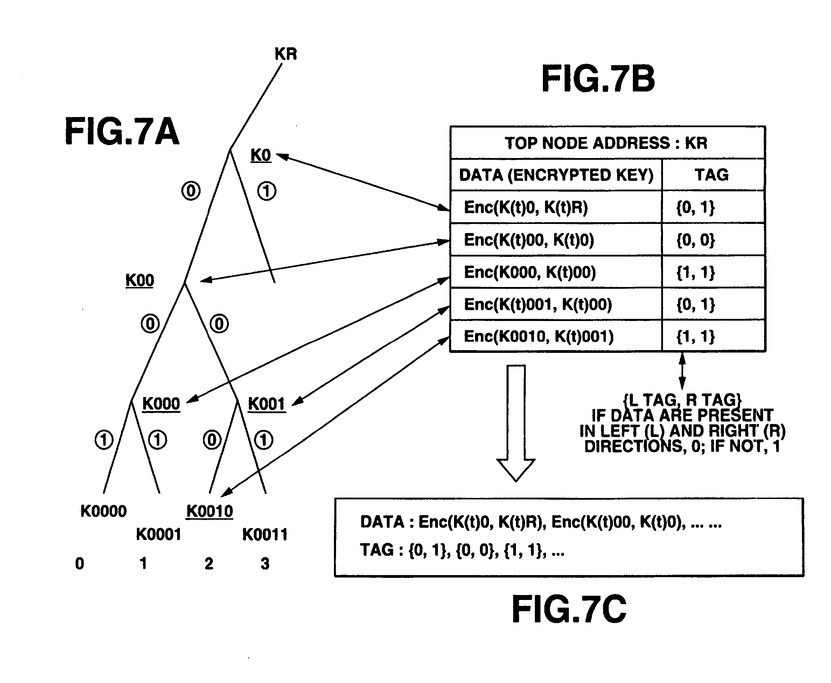

A tag part 607 is a tag for indicating a positional relationship of encrypted node keys and leaf keys stored in the data part. An attaching rule of this tag will be described with reference to FIGS. 7A to 7C. FIGS. 7A to 7C show an example for sending the enabling key block (EKB) described previously in FIG. 4A as data. The data at that time is as shown in FIG. 7B. An address of a top node included in an encrypted key at that time is used as a top node address. In this case, since a renewal key of a root key K(t)R is included, a top node address is KR. At this time, for example, data Enc(K(t)0, K(t)R) in the uppermost stage is at a position shown in a hierarchical tree shown in FIG. 7A. Next data is Enc(K(t)00, K(t)0), which is at a position under on the left hand of the previous data in the tree. Where data exists a tag is set to 0, and where data is not exist; a tag is set to 1. The tag is set as (left (L) tag, right (R) tag). Since data is exist at left of data at the top stage Enc(K(t)0, K(t)R), L tag = 0, and since data is not exist to right, R tag = 1. Tags are set to all the data to constitute a row of data and a row of tags shown in FIG. 7C.

The tag is set in order to show at which position of the tree structure data Enc(Kxxx, Kyyy) is positioned. Since the key data Enc(Kxxx, Kyyy) ... are mere enumerated data of simply encrypted keys, a position on the tree of an encrypted key stored as data can be discriminated by the aforementioned tag. For example, data constitution as in the following can be provided using the node index placed in correspondence to the encrypted data like the constitution described in FIGS. 4A and 4B previously without using the aforementioned tag:
0: Enc(K(t)0, K(t)root)
00: Enc(K(t)00, K(t)0)
000: Enc(K(t)000, K(t)00)

However, the constitution using such an index as described results in lengthy data to increase data quantities, which is not preferable in the distribution through a network. On the other hand, the aforementioned tag is used as index data showing a key position whereby a key position can be discriminated with less data quantity.

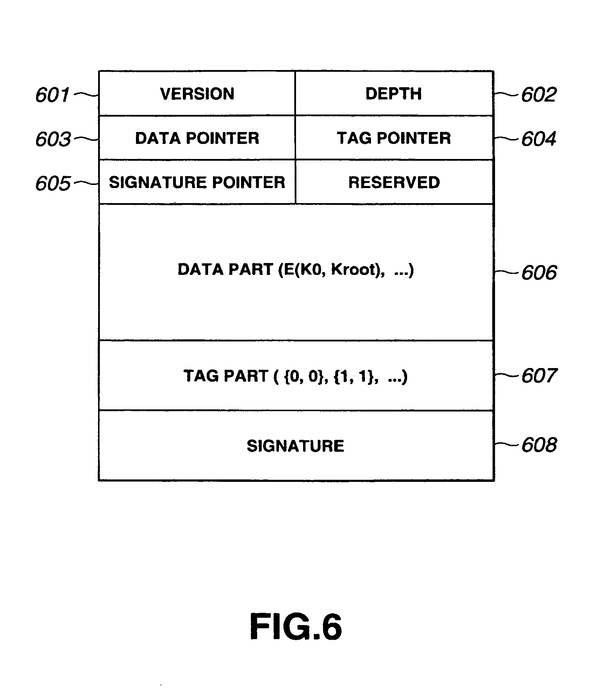

Returning to FIG. 6, the EKB format will be further described. The signature is an electronic signature executed, for example, by a key control center, a content provider, a settlement organization or the like which issued the enabling key block (EKB). The device which received EKB confirms by authentication of signature that it is an enabling key block (EKB) issued by a valid enabling key block (EKB) issuer,

### [Content Key Using EKB and Distribution of Contents]

While in the aforementioned example, a description was made of an example in which only the content key is sent along with EKB, a description will be made hereinafter of the constitution in which (i) a content encrypted by a content key; and (ii) a content key encrypted by a content key encryption key; and (iii) a content key encryption key encrypted by EKB are sent.

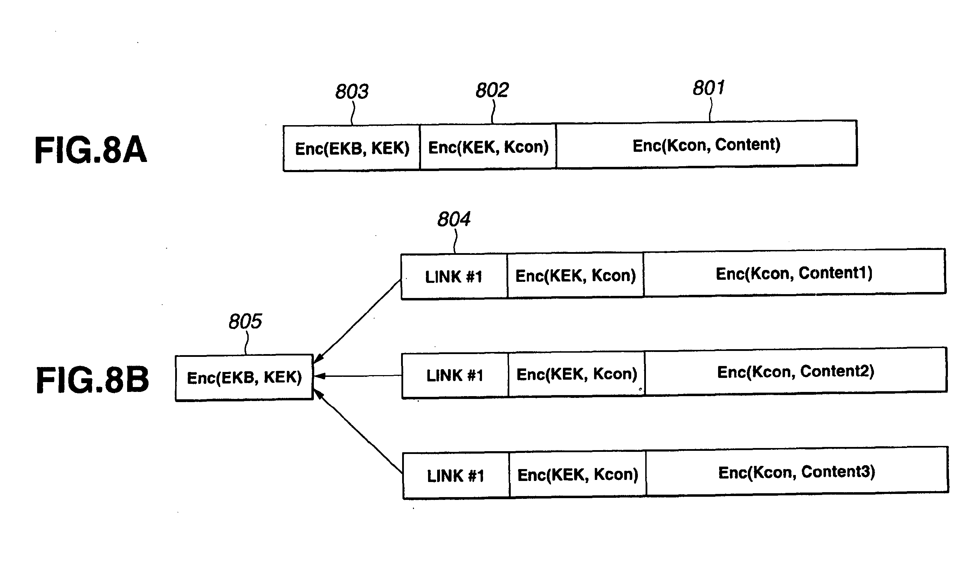

FIGS. 8A and 8B show this data constitution. In the constitution shown in FIG. 8A, Enc(Kcon, content) 801 is data in which a content is encrypted by a content key(Kcon), Enc(KEK, Kcon) 802 is data in which a content key (Kcon) is encrypted by a content key-encryption key (KEK: content Key Encryption key), and Enc(EKB, KEK) 803 is data in which a content key-encryption key KEK is encrypted by an enabling key block (EKB).

Here, the content key-encryption key KEK may be a node key (K000, K00 ...) or a root key (KR) itself, and may be a key encrypted by a node key (K000, K00 ...) or a root key (KR).

FIG. 8B shows an example of constitution where a plurality of contents are recorded.in media, which makes use of the same Enc(EKB, KEK) 805. In such a constitution as described, the same Enc(EKB, KEK) is not added to each data, but data showing a linking destination linked to Enc(EKB, KEK) is added to each data.

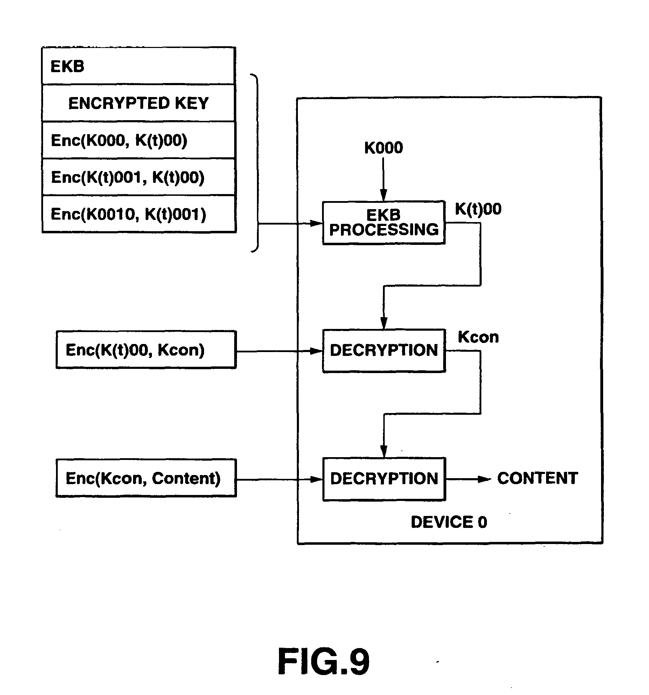

FIG. 9 shows an example of a case where a content key encryption key KEK is constituted as a renewal node key K(t)00 obtained by renewing the node key K00 shown in FIG. 3. In this case, if in a group surrounded by the dotted frame in FIG. 3, the device 3 is revoked, for example, due to the leak of a key, data having an enabling key block (EKB) shown in FIG. 9 and data into which a content key (Kcon) is encrypted by a content key encryption key (KEK = K(t)00), and data into which a content is encrypted by a content key (Kcon) are distributed to members of the other groups, that is, devices 0, 1, 2 whereby the devices 0, 1, 2 can obtain the content.

The right side in FIG. 9 shows the decrypting procedure in the device 0. The device 0, first, obtains a content key encryption key (KEK = K(t)00) by decrypting process using a leaf key K000 held by itself from the received enabling key block. Then, the device 0 obtains a content key Kcon decrypted by the K(t)00, and further carries out decrypting by the content key Kcon. The device 0 can use the content as a result of the above process. The devices 1, 2 are also able to obtain a content key encryption key (KEK=K(t)00) by processing EKB by the different procedures and are able to use the content similarly.

The devices 4, 5, 6 ... of the other groups shown in FIG. 3 are not able to obtain a content key encryption key (KEK = K(t)00) using a leaf key and a node key held by themselves even if they receive the same data (EKB) as mentioned above. The revoked device 3 is likewise not able to obtain the content key encryption key (KEK = K(t)00) by a leaf key and a node key, and only the device having the proper right is able to decrypt and use the content.

If a content key is distributed making us of EKB, in a manner as described, the encrypted content can be distributed safely and only the valid user can decrypt it.

An enabling key block (EKB), a content key, an encrypted content or the like has a constitution capable of providing distribution safely through a network, but the enabling key block (EKB), the content key and the encrypted content can be also stored in a recording medium such as DVD, CD and provided to a user. In this case, an enabling key block (EKB) is stored in one and the same recording medium as the encrypted content. The stored EKB is used to decrypt the content key and the content key is used for decrypting the encrypted content stored in the recording medium. This allows distribution of encrypted content that can be used only with a leaf key and a node key held in advance by the valid right holder only. Thus, content distribution limited to valid users can be realized in a simple way.

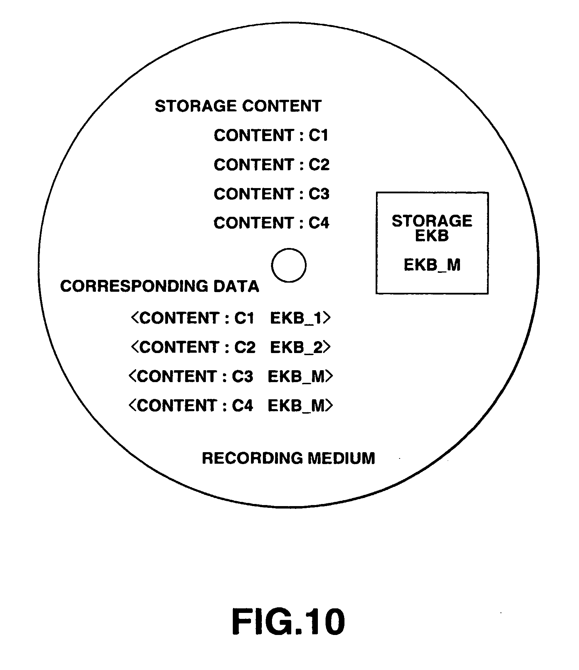

FIG. 10 shows an example of a recording medium in which an enabling key block (EKB) is stored together with encrypted content.

In the example shown in FIG. 10, there are stored in the recording medium: encrypted contents C1 to C4; data with the enabling key block corresponding to each stored content placed in correspondence thereto; and an enabling key block of version M (EKB - M). For example, EKB -1 is used to produce a content key Kcon1 for decrypting an encrypted content C1, and for example, EKB - 2 is used to produce a content key Kcon2 for encrypted content C2. In this example, the enabling key block of version M (EKB - M) is stored in a recording medium. Since contents C3, C4 are placed in correspondence to the enabling key block (EKB - M), contents C3, C4 can be obtained by decrypting the enabling key block (EKB - M). If EKB - 1, EKB - 2 are not stored on the disk, it would be necessary to obtain EKB - 1, EKB - 2 necessary for decrypting the respective content keys by new distribution means, for example, network distribution or distribution by a recording medium.

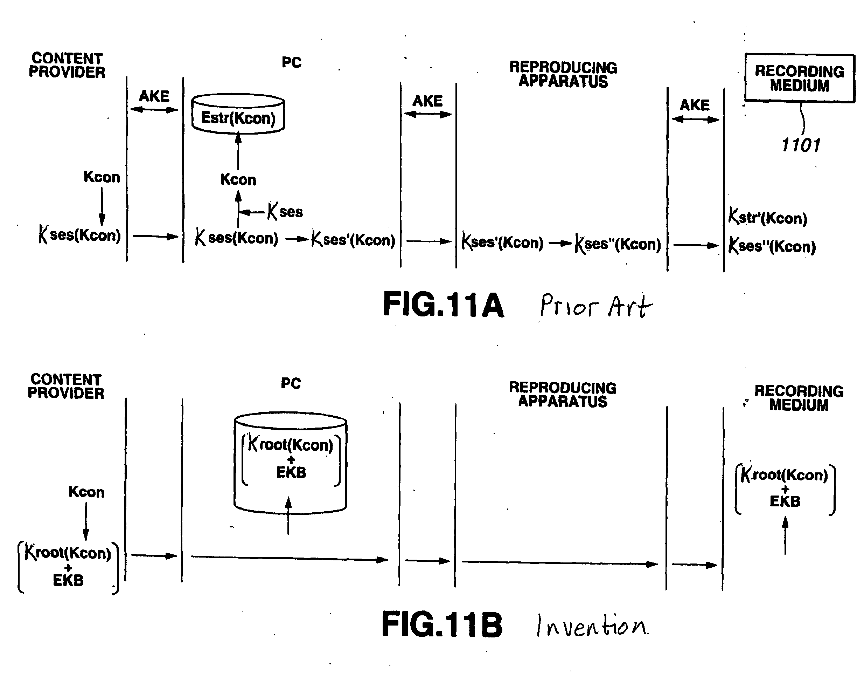

FIGS. 11A and 11B show a comparative example between a content key distribution by using EKB and conventional content key distribution where a content key is circulated among a plurality of devices. FIG. 11A shows the conventional constitution, and FIG. 11B shows an example making use of an enabling key block (EKB) according to the present invention. In FIGS. 11A and 11B, Ka (Kb) indicates data in which Kb is encrypted by Ka.

As shown in FIG. 11A, processing has been heretofore carried out in which validity of a data transmit-receiver is confirmed, authentication processing and authentication and key exchange (AKE) are executed between devices to co-own a session key Kses. The session key is used in encrypting process of data transmission, and a content key Kcon is encrypted by the session key Kses under the condition that the authentication is established to effect transmission.

For example, in a PC shown in FIG. 11A, it is possible to decrypt a content key Kses encrypted by a session key to obtain Kcon, and further possible to encrypt Kcon obtained by a stored key Kstr stored by the PC in its own memory.

In FIG. 11A, assume data is desired to be distributed in the form capable of being used only by a recording device for storing in a medium 1101 shown in FIG. 11A, when PC or a reproducing device is present. Even then, an authentication process as shown in FIG. 11A is executed so that content keys are encrypted by the respective session keys to effect distribution. The PC or the reproducing device is likewise able to use a session key produced in the authentication process and co-owned to decrypt an encrypted content key and obtain a content key.

On the other hand, in an example making use of an enabling key block (EKB) shown in the lower stage of FIG. 11B, an enabling key block (EKB), and. data (Kroot (Kcon)) having a content key Kcon encrypted by a node key or a root key obtained by processing the enabling key block (EKB) are distributed from a content provider, whereby the content key Kcon can be decrypted and obtained by only the apparatus capable of processing the distributed EKB.

Accordingly, for example, the useable enabling key block (EKB) is produced only on the left end in FIG. 11B, and the enabling key block (EKB), and data having a content key Kcon encrypted by a node key or a root key obtained by EKB processing are sent together whereby the PC, the reproducing apparatus or the like present cannot execute processing of EKB by a leaf key or node key owned by itself. Accordingly, the useable content key can be distributed to only a valid device safely without executing processes such as authentication process between the data transmit-receive devices, the production of a session key, and the process for encrypting a content key Kcon by the session key.

Where the useable content key is desired to be distributed to a PC, a recording and reproducing unit also, an enabling key block (EKB) capable of being processed is produced and distributed to thereby obtain a common content key.

### [Distribution Of Authentication Key Using Enabling Key Block (EKB) (Common Key System)]

In the distribution of data used in the enabling key block (EKB) or a key described above, since an enabling key block (EKB) and a content or a content key which are transferred between devices always maintain the same encryption form, there is the possibility that an invalid copy is produced due to the so-called replay attack, which steals and records a data transmission channel and transfer it later again. For preventing such an attack as described, there is effective means for executing authentication process and key exchange process similar to those of prior art between data transfer devices. Now, a description is made of the constitution in which an authentication key Kake used when the authentication process and key exchange process are executed is distributed to a device using the aforementioned enabling key block (EKB) whereby the authentication process in conformity with a common key system having a common authentication key as a safe private key is executed. That is; this is an example in which encrypted message data by EKB is used as an authentication key.

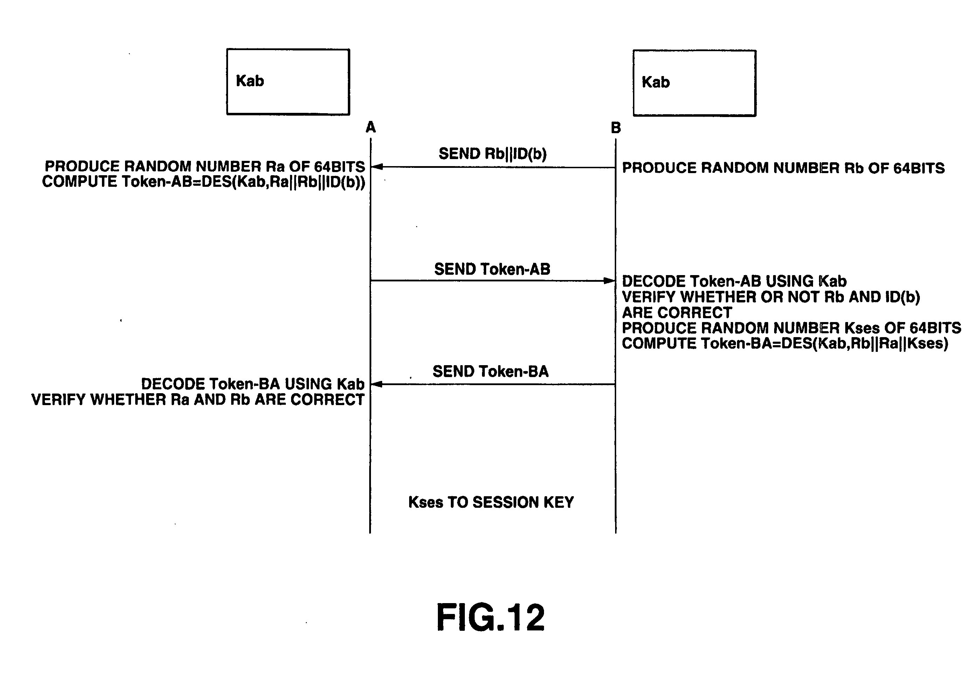

FIG. 12 shows a mutual authentication method (IS0/IEC 9798-2) using a common key encryption system. While in FIG. 12, DES is used as the common key encryption system, other systems may be used as long as they are common key encryption systems. In FIG. 12, first, B produces the random number Rb of 64 bits, and Rb and ID (b), which is B's own ID, are transmitted to A. A which receives them newly produces a random number Ra of 64 bits, and data are encrypted using a key Kab in the CBC mode of DES in order to Ra, Rb and Rc to transmit them to B. The key Kab is a key to be stored in a recording element as a private key common to A and B. According to the encrypting processing by the key Kab using the CBC mode of DES, for example, in the processing using DES, an initial value and Ra are subjected to exclusive OR; in the DES encryption part, the key Kab is used for encrypting to generate an encrypted text Eland continuously, the encrypted text E1 and Rb are subjected to exclusive OR; in the DES encryption part, a key Kab is used for encrypting, and: encrypted text E2 and ID (b) are subjected to exclusive OR; and in the DES encryption part, a key Kab is used for encrypting to generate transmission data (Token-AB) by an encrypted text E3 produced.

B, which received the above data, decrypts the received data by a key Kab (authentication key) likewise stored in a recording element as a common private key. A decrypting method of received data, first, decrypts an encrypted text E1 by an authentication key Kab to obtain the random number Ra. Next, an encrypted text E2 is decrypted by an authentication key Kab, and the result therefrom and E1 are subjected to exclusive OR to obtain Rb. Finally, an encrypted text E3 is decrypted by an authentication key Kab, and the result therefrom and E2 are subjected to exclusive OR to obtain ID (b). Authentication is made if Ra and ID (b) out of Ra, Rb and ID (b) thus obtained coincide with one transmitted by B. When passed this authentication, B authenticates that A is valid.

Next, B produces a session key (Kses) to be used after authentication (Producing method: To use the random number). Then, Rb, Ra, Kses are encrypted in that order using an authentication key Kab in the CBC mode of DES and are returned to A.

A, which received the above data, decrypts the received data by an authentication key Kab. A decrypting method of the received data is similar to the decrypting process of B, which is therefore omitted in its detail. Authentication is made if Rb and Ra out of Rb, Ra and Kses thus obtained are coincided with one transmitted by A. When passed the authentication, A authenticates that B is valid. After authentication of mating parties each other, the session key Kses is used as a common key for secrete communication after authentication.

Where invalidity or lack of coincidence is found, when the received data are authenticated, processing is interrupted as a failure of mutual authentication.

In the above-described authentication process, A and B co-own a common authentication key Kab. The common authentication key Kab is distributed to a device using the enabling block key (EKB).

For example, in the example shown in FIG. 12, there may be employed the constitution in which out of A or B, the other encrypts an authentication key Kab and an enabling key block (EKB) produced by producing a decodable enabling key block (EKB) to transmit it to the other, or the constitution in which a third party produces an enabling key bock (EKB) that can be used by both devices A and B for the devices A and B to encrypt an authentication key Kab by the enabling key block (EKB) produced for the devices A, B to distribute it.

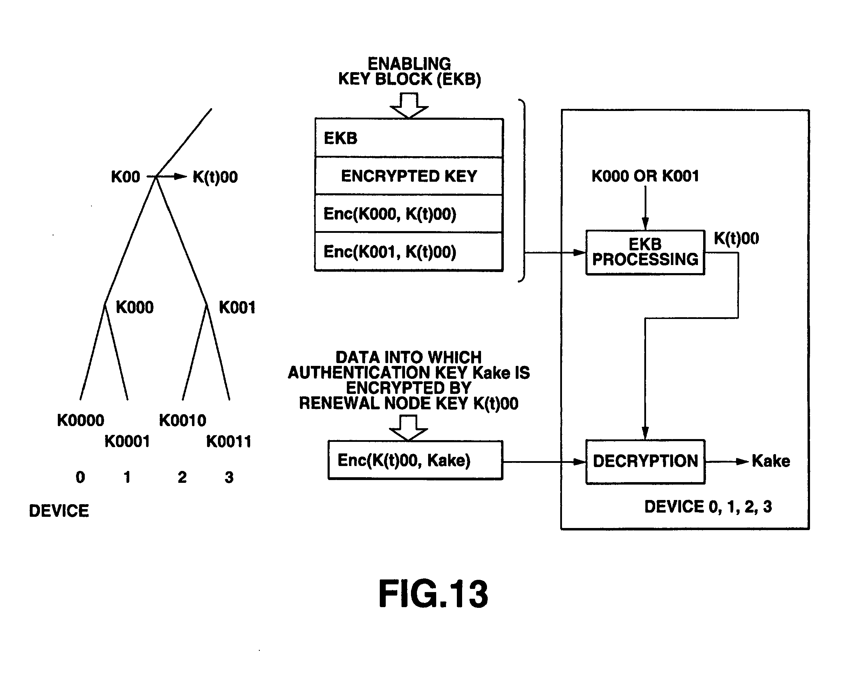

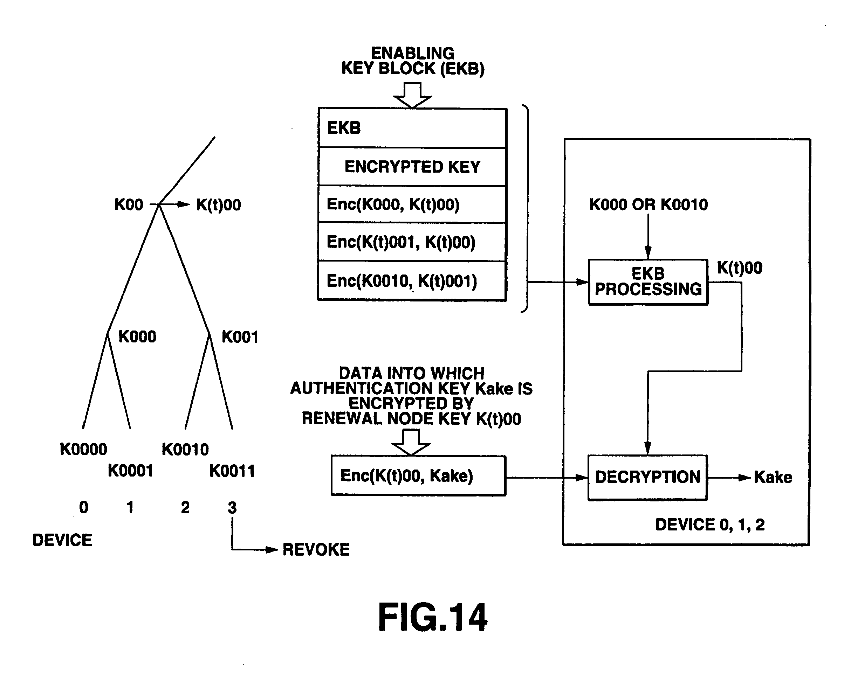

FIGS. 13 and 14 show examples of the constitution in which an authentication key Kake common to a plurality of devices is distributed by an enabling key block (EKB). FIG. 13 shows an example in which a decodable authentication key Kake is distributed to devices 0, 1, 2, 3, and FIG. 14 shows an example in which the device 3 out of the devices 0, 1, 2, 3 is revoked to distribute a decodable authentication key to only the devices 0, 1, 2.

In the example of FIG. 13, a node key K(t)00 renewed using a node key and a leaf key in the devices 0, 1, 2, 3 is produced and distributed, by producing a decodable enabling key block (EKB), along with data (b) having an authentication key Kaka decrypted by a renewal node key K(t)00. First, the respective devices, as shown on the right side of FIG. 13, processes (decrypts) EKB to thereby obtain a renewed node key K(t)00, and then decrypts an authentication key: Enc(K(t)00, Kake) encrypted using the obtained node key K(t)00 to obtain an authentication key Kake.

In other devices 4, 5, 6, 7 ..., even if the same enabling key block (EKB) is received, the node key K(t)00 renewed by processing EKB cannot be obtained, and therefore, an authentication key can be sent to only the valid device safely.

On the other hand, the example of FIG. 14 is an example in which as the device is, for example, revoked by leak of a key, the device 3 in a group surrounded by the dotted frame of FIG. 3 produces a decodable enabling key block (EKB) with respect to the only members of the other group, that is, the devices 0, 1, 2 for distribution. Data having (a) an enabling key block (EKB) and (b) an authentication key (Kake) shown in FIG. 14 encrypted by the node key (K(t)00) are distributed.

On the right side of FIG. 14, the decrypting procedure is shown. First, the devices 0, 1, 2 obtains an enabling node key (K(t)00) by decrypting process using a leaf key or a node key owned by itself from the received enabling key block. Next, the devices obtain an authentication Key Kake by decrypting made by K(t)00.

The devices 4, 5, 6 ... in the other group shown in FIG. 3 cannot obtain a renewal node key (K(t)00) using a leaf key and a node key owned by itself even if similar data (EKB) is received. Similarly, also in the device 3 revoked, the renewal node key (K(t)00) cannot be obtained by a leaf key and a node key owned by itself, and only the device having a valid right is able to decrypt an authentication key for use.

If distribution of an authentication key making use of EKB is used, only the valid right holder is able to distribute a decodable authentication key safely with less data quantity.

### [Distribution of content key using a public key authentication and an enabling key block (EKB)]

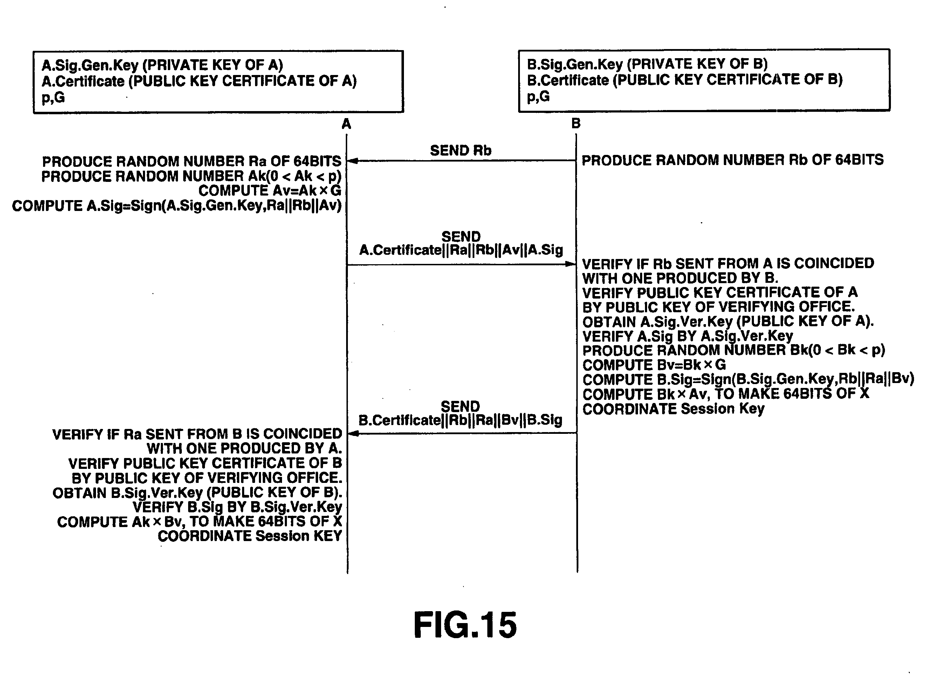

In the following, the distribution process of the content key using a public key authentication and an enabling key block (EKB) will be described. First, a mutual authentication method using an elliptic curve encryption of 160-bit length, which is a public key encryption system, will be described with reference to FIG. 15. In FIG. 15, ECC is used as the public key encryption system, but any system may be used as long as it is a public key encryption system similar thereto. Further, the key size need not be 160, bits. In FIG. 15, first, B produces the random number Rb of 64 bits to transmit it to A A which received it newly produces the random number Ra of 64 bits and the random number Ak smaller than the prime number p. And, a point Av = Ak x G obtained by making a base point. G, Ak times is obtained to produce an electronic signature A, Sig with respect to Ra, Rb, Av (X coordinate and Y coordinate), which is returned along with a public certificate of A to B. In Ra and Rb, X coordinate and Y coordinate of 64 bits, Av are respectively 160 bits, and therefore, an electronic signature with respect to 448 bits in total is produced.

B which received the public key certificate, Ra, Rb, Av, the electronic signature A. Sig authenticates if Rb transmitted by A is coincided with one produced by B. As a result, when coincided, an electronic signature within the public key certificate of A is authenticated by a public key of an authentication office to take out a public key of A. The electronic signature A. Sig is authenticated using a public key of A taken out.

Next, B produces the random number Bk which is smaller than the prime number p. A point Bv = Bk x G obtained by making a base point G Bk times is obtained to produce an electronic signature B. Sig with respect to Rb, Ra, Bv (X coordinate and Y coordinate), which is returned to A along with a public key certificate of B.

A which received the public key certificate, Rb, Ra, Av, the electronic signature B. Sig of B authenticates if Ra transmitted by B is coincided with one produced by A. As a result, when coincided, an electronic signature within the public key certificate of B is authenticated by a public key of an authentication office to take out a public key of B. The electronic signature B. Sig is authenticated using a public key of B taken out. After the authentication of an electronic signature has been succeeded, A authenticates B to be valid.

Where both of them have succeeded for authentication, B computes Bk x Av (Since Bk is the random number, but Av is the point on the elliptic curve, scalar-times computation at the point on the oval curve is necessary.), and A computes Ak x Bv, and uses the lower 64 bits of the X coordinate of these points as a session key for use for thereafter communication (where a common key encryption is a common key encryption of 64 bit key length). Of course, a session key may be produced from the Y coordinate, and the coordinate need not be the lower 64 bits. In the secrete communication after mutual authentication, sometimes, the transmission data is not only encrypted by a session key but is also applied with an electronic signature.

Where in the authentication of an electronic signature or authentication of the received data, invalidity or uncoincidence is found, processing is interrupted due to a failure of mutual authentication.

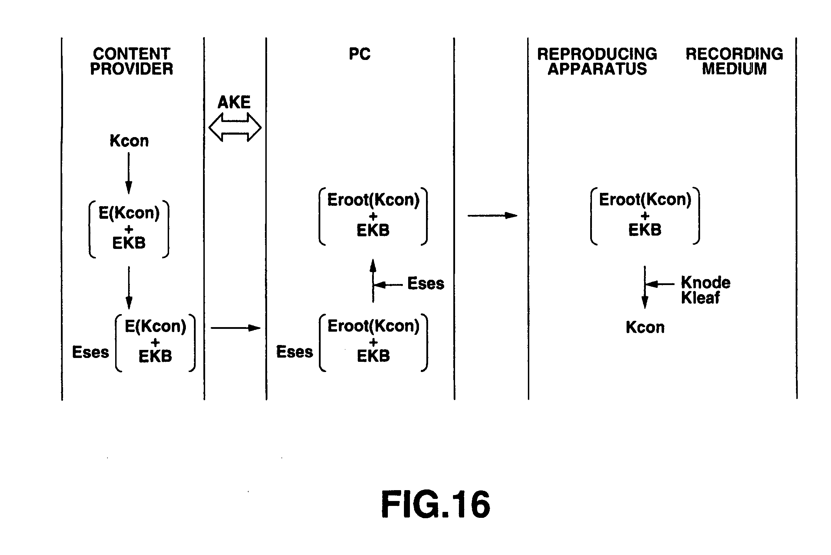

FIG. 16 shows an example of distribution process of content keys using a public key authentication and an enabling key block(EKB), First, the authentication process according to the public key system explained referring to FIG. 15 is executed between a content provider and PC. The content provider produces a decodable EKB by a reproducing apparatus which is a content key distribution destination, a node key and a leaf key owned by a recording medium to encrypt a content key E(Kcon) which executed encryption by a renewal node key and an enabling key block (EKB) by a session key Kses produced by the authentication process between PCs, which is transmitted to PC.

PC decrypts [a content key E (Kcon) which executed encryption by a renewal node key and an enabling key block (EKB)] encrypted by a session key, and thereafter transmits it to a reproducing apparatus and a recording medium.

The reproducing apparatus and the recording medium decrypt [a content key E (Kcon) which executed encryption by a renewal node key and an enabling key block (EKB)] to thereby obtain a content key Kcon.

According to the above constitution, since [a content key E (Kcon) which executed an encryption by a renewal node key and an enabling key block (EKB)] are transmitted under the condition of the authentication between a content provider and PC, for example, even in the case where a node key is leaked, positive data transmission to a mating party is enabled.

### [Distribution of a program code by using an enabling key block (EKB)]

While in the above-described example, a description has been made of a method for encrypting a content key, an authentication key or the like using an enabling key block (EKB) to distribute it, the constitution in which various program codes are distributed using an enabling key block (EKB) may be employed. That is, this is an example in which encrypted message data by EKB is used as a program code. This constitution will be described hereinafter.

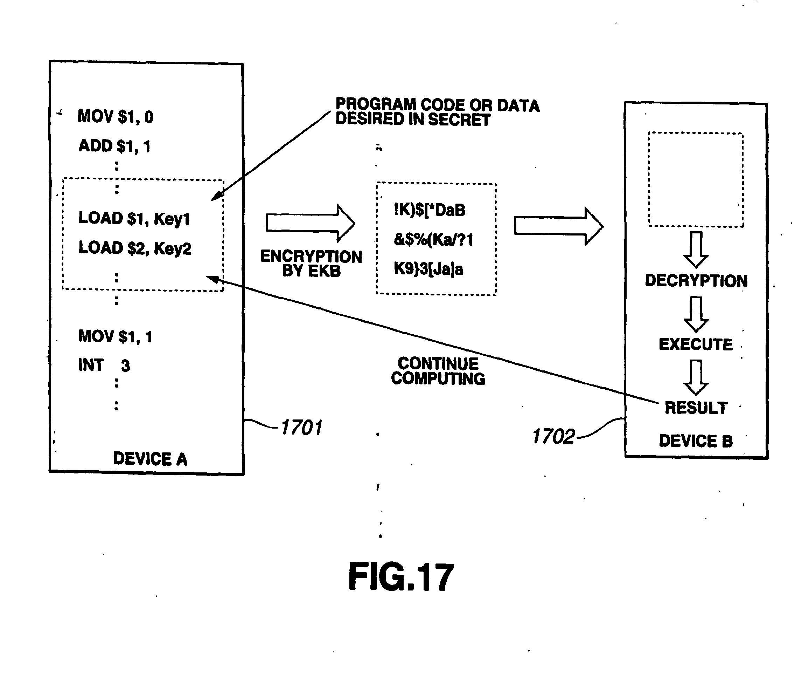

FIG. 17 shows an example in which a program code is encrypted, for example, by a renewal node key of an enabling key block (EKB) to transmit it between devices. A device 1701 transmits an enabling key block (EKB) that can be decrypted by a node key and a leaf key of a device 1702 and a program code subjected to decrypting by a renewal node key contained in the enabling key block (EKB) to a device1702. The device 1702 processes the received EKB to obtain a renewal node key, and further executes decrypting of a program code by a renewal node key obtained to obtain a program code.

In the example shown in FIG. 17, further, processing by the program code obtained in the device 1702 is executed to return the result to the device 1701, and the device 1701 further continues processing on the basis of the result.

As described above, the enabling key block (EKB) and the program code subjected to decrypting processing by the renewal node key contained in the enabling key block (EKB) are distributed whereby a program code capable of being decrypted in a specific device can be distributed to the specific device or the group shown in FIG. 3.

### [Constitution for causing ICV: Integrity Check Value to correspond to a transmission content]

Next, a description will be made of the processing constitution in which for preventing falsification of a content, the integrity check value (ICV) is produced to correspond to the content, and the presence or absence of the falsification of the content is judged by computing the ICV.

The integrity check value (ICV) is, for example, computed using a hash function with respect to the content, and is computed by ICV =hash (Kicv, C1, C2, ...). Kicv is an ICV producing key. C1, C2 are information of a content, and a message authentication code. (MAC) of important information of the content is used.

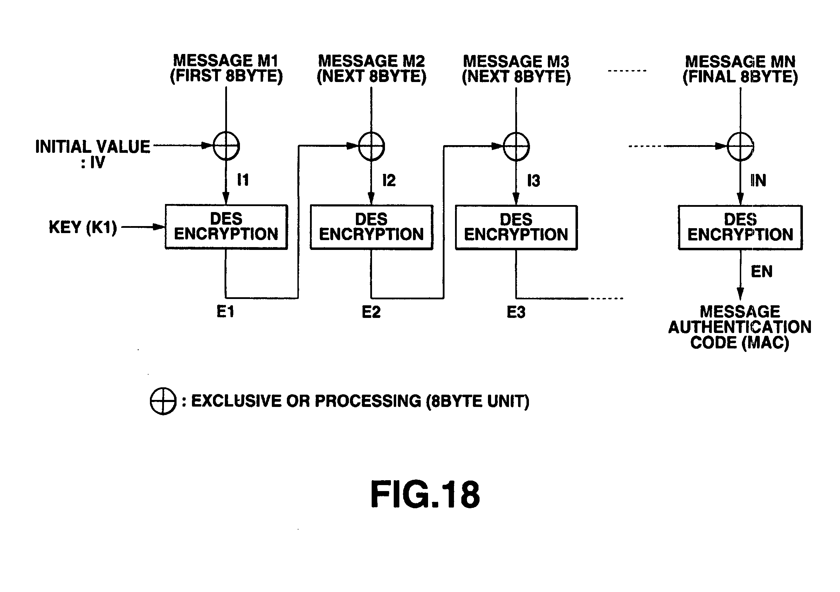

FIG. 18 shows a MAC value produced using for example the DES encryption processing constitution. As shown in the constitution of FIG. 18, a message is divided into 8-bit units (hereinafter, the divided messages are M1, M2, MN). First, the initial value (hereinafter, IV) and M1 are subjected to exclusive OR (result of which is I1). Next, I1 is put into a DES encryption part to carry out encryption using a key (hereinafter, K1) and an output is E1. Continuously, E1 and M2 are subjected to exclusive OR, output I2 of which is put into the next DES encryption part , and is encrypted using the key 1 to produce an output E2. Thereafter, this procedure is repeated, and the encryption processing applied to all the messages. The last output EN is a message authentication code (MAC).

A hash function is applied to the MAC value of the content and the ICV producing key to produce the integrity check value (ICV) of the content. ICV produced when a content is produced for which the fact that no falsification is present is assured is compared with ICV produced on the basis of a new content. If the same ICV is obtained, the fact that the content is not falsified is assured, and if ICV is different, judgment that falsification is present is made.

### [Constitution for distributing a producing key Kicv of the check value (ICV) by EKB]

Next, the constitution in which Kicv, which is an integrity check value (ICV) producing key of a content, is sent by the enabling key block will be described. That is, this is an example in which encrypted message data by EKB is an integrity check value (ICV) producing key of a content.

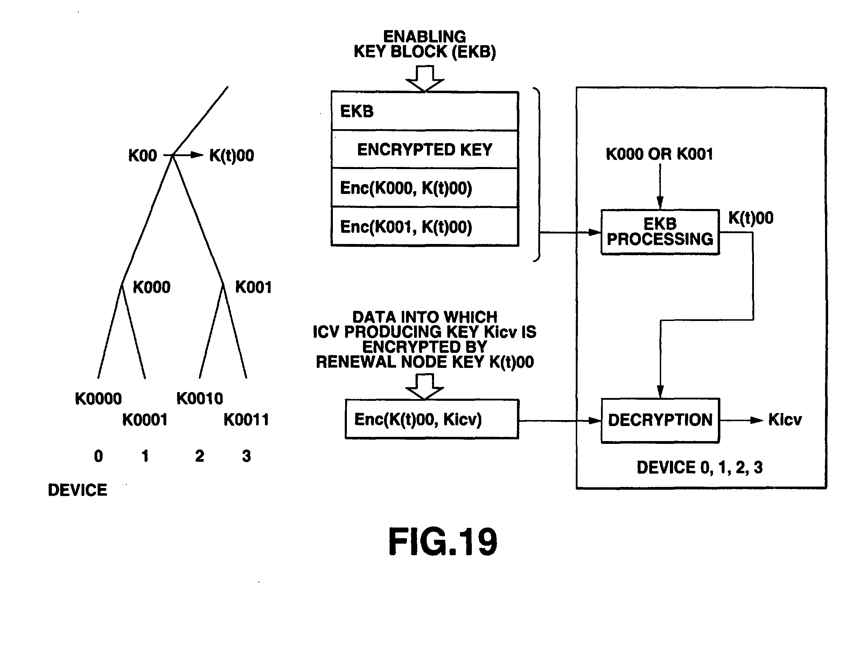

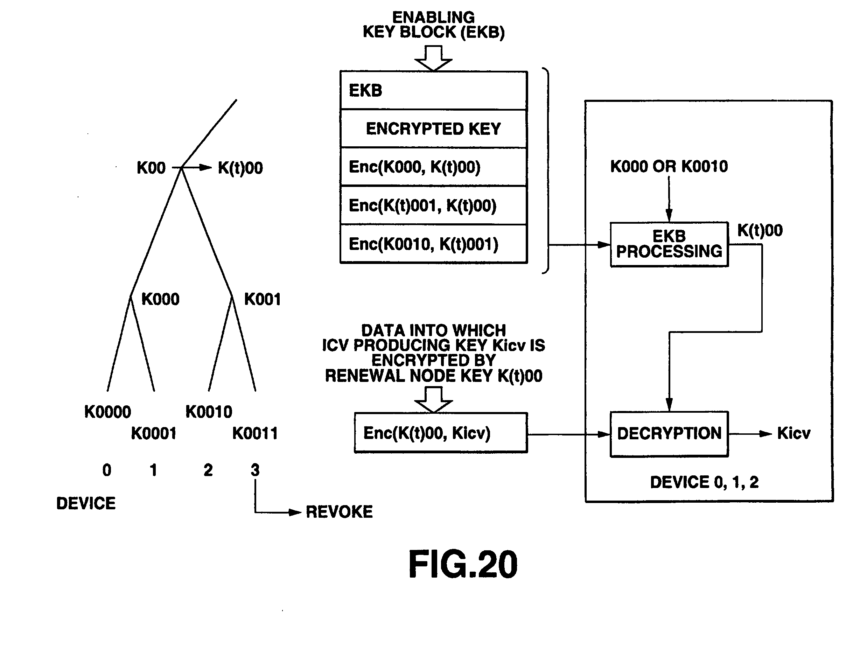

FIG. 19 and FIG. 20 show an example in which, where contents common to a plurality of devices are sent, an integrity check value producing key Kicv for authenticating the presence or absence of falsification of these contents is distributed by the enabling key block (EKB). FIG. 19 shows an example in which a decodable integrity check value producing key Kicv is distributed to devices 0, 1, 2, 3, and FIG. 20 shows an example in which the device 3 out of the devices 0, 1, 2, 3 is revoked, and a decodable integrity check value producing key Kicv is distributed to only the devices 0, 1, 2.

In the example of FIG. 19, a node key K(t)00 renewed using a node key and a leaf key owned by the devices 0, 1, 2, 3 along with data (b) having a check value producing key Kicv encrypted by a renewal node key K(t)00 are distributed by producing a decodable enabling key block (EKB). As shown on the right side in FIG. 19, the respective devices first process (decrypt) the EKB to thereby obtain a renewed node key K(t)00, and subsequently decrypt a check value producing key : Enc(K(t)00, Kiev) encrypted using the obtained node key K(t)00 to obtain a check value producing key Kicv.

Since other devices 4, 5, 6, 7 ... cannot obtain a node key K(t)00, renewed by processing EKB by a node key and a leaf key owned by itself even if the same enabling key block (EKB) is received, the check value producing key can be sent to only a valid device safely.

The example of FIG. 20 is an example in which the device 3, for example, is revoked by leak of a key. The device 3 is one of the group surrounded by the dotted frame of FIG. 3. A decodable enabling key block (EKB) is produced for distribution to only the other members of the other group, that is, the devices 0,1, 2.

Data having (a) an enabling key block (EKB) and (b) a check value producing key (Kicv) shown in FIG. 20 encrypted by the node key (K(t)00) are distributed.

On the right side of FIG. 20, the decrypting procedure is shown. First, the devices 0, 1, 2 obtain a renewal node key (K(t)00) by a decrypting process using a leaf key or a node key owned by itself from the received enabling key block. Next, the devices obtain a check value producing key Kicv by decryption using K(t)00.

The devices 4, 5, 6 ... in the other group shown in FIG. 3 cannot obtain a renewal node key (K(t)00) using a leaf key and a node key owned by itself even if similar data (EKB) is received. Similarly, also in the device 3 revoked, the renewal node key (K(t)00) cannot be obtained by a leaf key and a node key owned by itself, and only the device having a valid right is able to decrypt an authentication key.

If distribution of a check value reproducing key making use of EKB is used, only the valid right holder is able to distribute a decodable check value producing key safely with less data quantity.

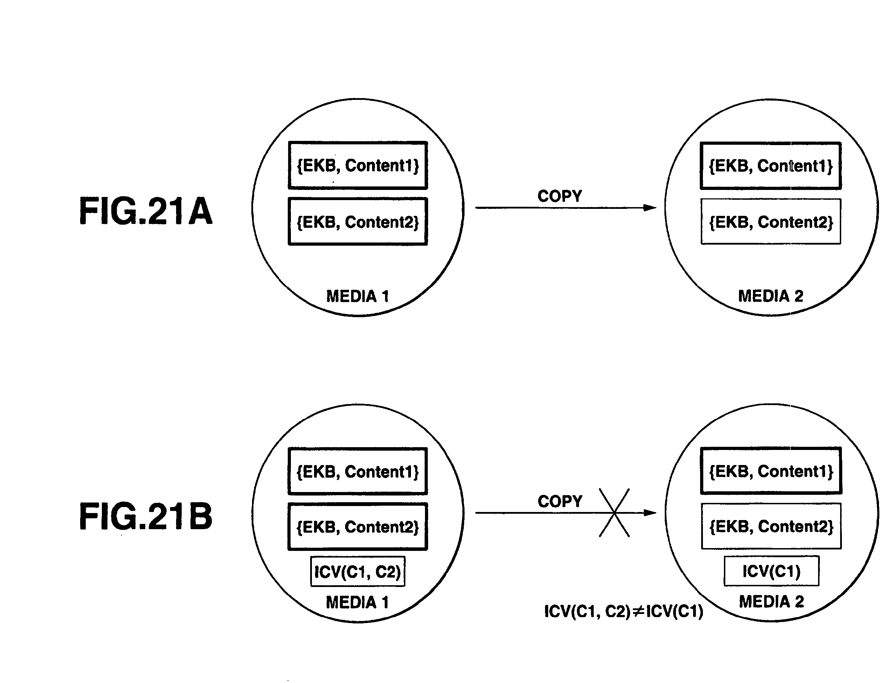

By using the integrity check value (ICV) of contents as described above, it is possible to eliminate invalid copies of EKB and encrypted contents. Assume for example, as shown in FIGS. 21A and 21B, there is a medium 1 in which a content C1 and a content C2 are stored along with an enabling key block (EKB) capable of obtaining content keys, which is copied to a medium 2 without modification. It is possible to copy EKB and encrypted contents, which can be used in a device capable of decrypting EKB.

There is provided a constitution in which, as shown in FIG. 21B, integrity check values (ICV (C1, C2)) are stored corresponding to contents properly stored in the respective media. The (ICV (C1, C2)) shows ICV = hash (Kicv, C1, C2) which is an integrity check value of contents computed using the hash function in the content C1 and the content C2. In the constitution of FIG. 21B, a content 1 and a content 2 are properly stored in the medium 1, and integrity check values (ICV (C1, C2)) produced on the basis of the content C1 and the content C2 are stored. Further, a content 1is properly stored in the medium 2, and an integrity check values (ICV (C1)) produced on the basis of the content C1 is stored therein. In this constitution, Assume that (EKB, content 2) stored in the medium 1is copied to the medium 2, when in the medium 2, a content check value is newly produced, ICV (C1, C2) are to be produced, so that it becomes obvious that different from Kicv (C1) stored in the medium, falsifying of contents and storing of new contents due to the invalid copy are executed. In the device for reproducing media, ICV checking is executed in the step previous to the reproducing step, and judgment is made of coincidence between the produced ICV and the stored ICV, if not coincident, the constitution in which reproducing is not executed is provided to enable prevention of reproducing contents copied invalidly.

Furthermore, there can be provided the constitution in which for enhancing safety, the integrity check value (ICV) of contents is rewritten to produce them on the basis of data including a counter. That is, this constitution is to make computation by ICV = hash (Kicv, counter + 1, C1, C2, ...). Here, a counter (counter + 1) is set as a value in which one increment is made every rewriting. It is necessary to have a constitution in which a counter value is stored in a secure memory.

Further, in the constitution in which the integrity check value (ICV) of contents is cannot be stored in the same medium as contents, the integrity check value (ICV) of contents is stored in a separate medium.

For example, where contents are stored in media which take no measures to prevent copies such as a read only memory or normal MO, there is the possibility that when the integrity check value (ICV) is stored in the same medium, rewriting of the ICV is done by an invalid user, failing to maintain the safety of ICV: In such a case, there can be provided the constitution in which ICV is stored in a secure medium on a host machine, and ICV is used for copy control (for example, check-in / check-out, move), to thereby enable safe management of ICV and checking of falsification of contents.

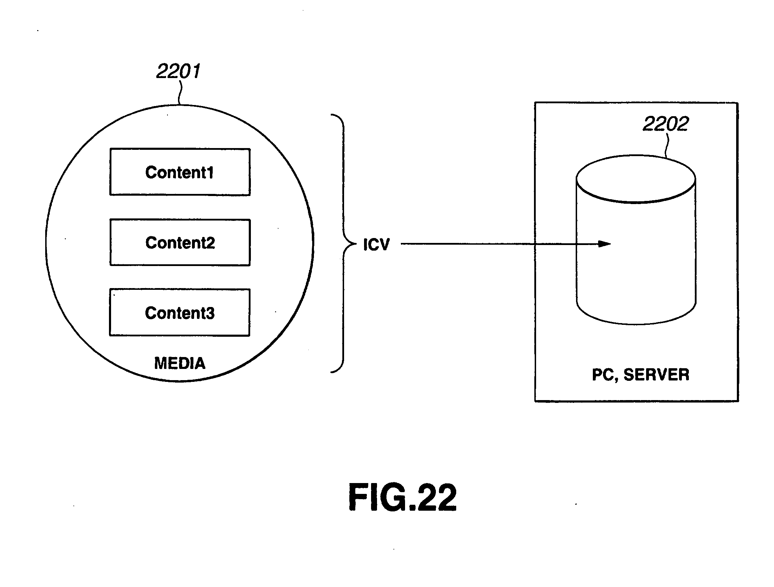

The above constitution is shown in FIG. 22. In FIG. 22, contents are stored in a medium 2201 which takes no measures for preventing copying such as read only media or normal MO, and the integrity check values (ICV) in connection with these contents are stored in a secure medium 2202 on a host machine to which a user is not allowed to get access to prevent invalid rewriting of the integrity check value (ICV) by a user. If, as such a constitution as described above, for example, employment is made of a constitution in which when a device on which a media 2201 is mounted executes reproducing of the media 2201, a PC or a server which is a host machine executes checking of ICV to judge the propriety of reproducing, reproducing of invalid copy contents or falsified contents can be prevented.

### [Category classification of a hierarchical tree structure]

A description has been made of the constitution in which an encrypted key is constituted as a hierarchical tree structure shown in FIG. 3 such as a root key, a node key, a leaf key, etc., and a content key, an authentication key, an ICV producing key or a. program code, data or the like are encrypted along with an enabling key block and distributed, but a description will be made hereinafter of the constitution in which a hierarchical tree structure, which defines a node key or the like, is classified for categories of devices to execute efficient key renewing process, encrypted key distribution, and data distribution.

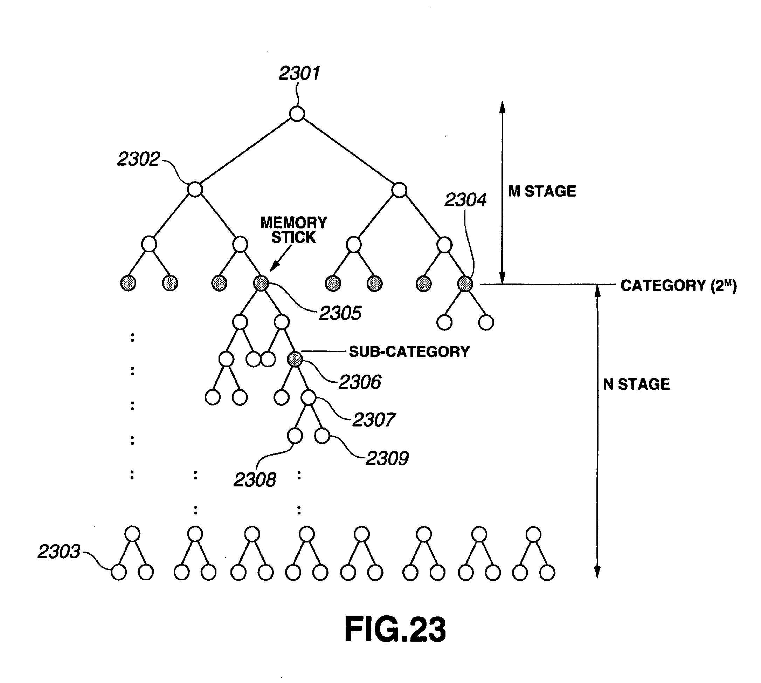

FIG. 23 shows one example of classification of category of a hierarchical tree structure. In FIG. 23, a root key Kroot 2301 is set on the uppermost stage of the hierarchical tree structure, a node key 2302 is set in the intermediate stage, and a leaf key 2303 is set in the lowest stage. Each device in the structure holds individual leaf keys, and a series of node keys from a leaf key to a root key, and a root key.

Here, as one example, nodes from the uppermost stage to the stage M is set as a category node 2304. That is, each of nodes on the stage M is set as a device setting node of a specific category. Nodes and leaves lower than the stage M+1 are taken as nodes and leaves in connection with devices contained in the category thereof with one node in the M stage as a top node.

For example, a category [Memory stick (trademark)] is set to one node 2305 in the stage M of FIG. 23, and nodes and leaves provided lower than the node 2305 are set as category-exclusive use nodes or leaves containing various devices using the memory stick. That is, those below the node 2305 are defined as the gathering of nodes and leaves associated with devices defined in the category of the memory stick.

Further, a stage at a level several stages lower than the stage M can be set as a sub-category node 2306. For example, a node of [Reproducing exclusive-use unit] is set as a sub-category node contained in the category of the device using the memory stick in a node two stages below a category [memory stick] node 2305 as shown in the figure. Further, a node 2307of a telephone with a music reproducing function contained in the category of the reproducing exclusive-use unit below the node 2306 of the reproducing exclusive-use unit as a sub-category node; and a [PHS] node 2308 and a [Portable telephone] node 2309 contained in the category of the telephone with a music reproducing function can be set therebelow.

Further, the category and sub-categories can be set not only at the kind of devices, but also at nodes managed independently, for example, makers, a content provider, a settlement organization or the like, that is, at suitable units such as processing unit, jurisdiction unit, or service providing unit (these will be generally called entity). For example, if one category node is set as a game machine XYZ exclusive-use top node sold by game machine makers, a node key and a leaf key in the lower stage below the top node can be stored in the game machine XYZ sold by makers for sales, after which distribution of encrypted contents, or distribution of various keys, and renewal processing are distributed producing an enabling key block (EKB) constituted by node keys and leaf keys below the top node key, and data that can be utilized merely for the devices below the top node can be distributed.

The constitution can be provided in which the node below one node as a top is: set as an associated node of the category or sub-categories defined, whereby makers, a content provider or the controlling one top node in the category stage or sub-category stage independently produces an enabling key block with the node as a top to distribute it to the devices belonging to those below the .top node, and key renewing can be executed without affecting at all on the devices belonging to the nodes of other categories not belonging to the top node.

### [Key distributing constitution by simplified EKB (1)]

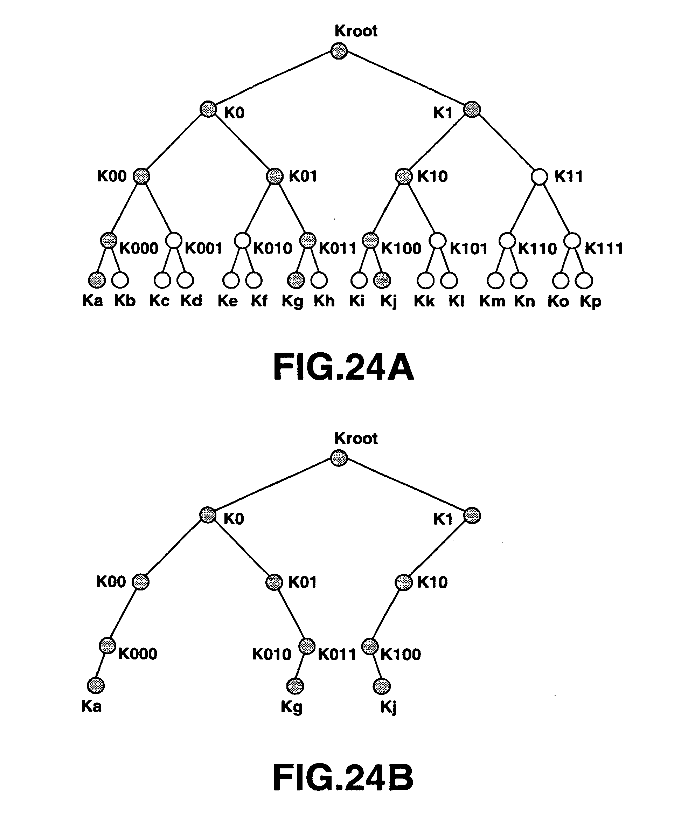

For example, in the tree structure of FIG. 3 described previously, where for example, a content key is addressed to a predetermined device (leaf), a decodable enabling key block (EKB) is produced and provided using a leaf key and a node key owned by a key distributing device. For example, in a tree structure shown in FIG. 24A, where a key, for example, a content key is transmitted to devices a, g, j constituting a leaf, a decodable enabling key block (EKB) is produced for the nodes a, g, j and distributed.

It is contemplated that for example, a content key K(t)con is subjected to encrypting processing by a renewal root key K(t)root to distribute it along with EKB. In this case, the devices a, g, j execute processing of EKB using a leaf key and a node key shown in FIG. 24B to obtain K(t)root, and execute decrypting process of a content key K(t)con by the obtained renewal root key K(t)root to obtain a content key.

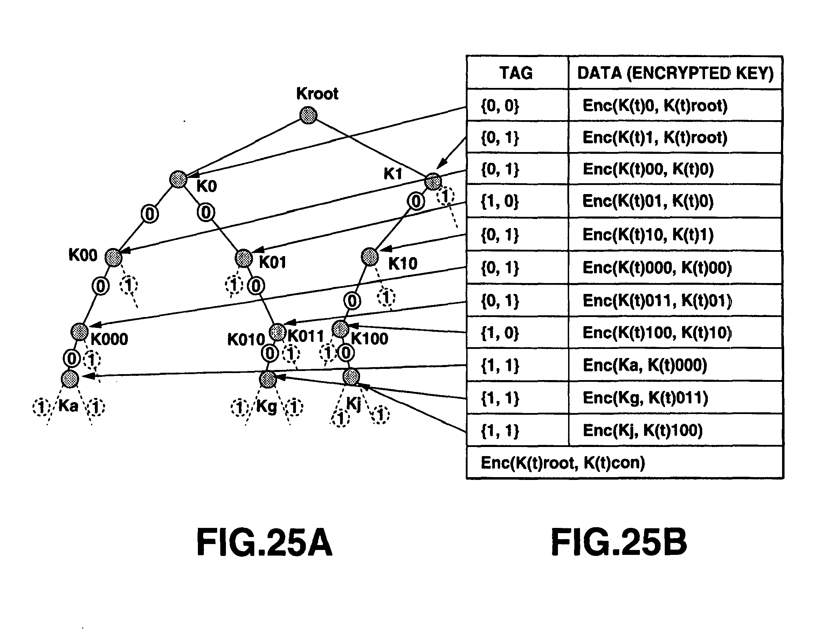

The data structure of the enabling key block (ERK) provided in this case is as shown in FIG. 25. The enabling key block (ERK) shown in FIG. 25 is constituted in accordance with the format of the enabling key block (EKB) explained previously with reference to FIG. 6; has a tag corresponding to data (encrypted key).The tag is 0, if data is present in the directions of left (L) and right (R), and is 1 if not, as previously explained with reference to FIGS. 7A to 7C.

The device which received the enabling key block (EKB) sequentially executes decrypting process of encrypted keys on the basis of an encrypted key of the enabling key block (EKB) and the tag to obtain a renewal key of an upper node. As shown in FIG. 25, in the enabling key block (EKB), the more the number of stages (depth) from a root to a leaf, the quantity of data lines in the EKB increases. The number of stages (depth) increases according to the number of devices (leaf), and where there are many numbers of devices to be a distributing destination of keys, the data quantity of EKB further increases.

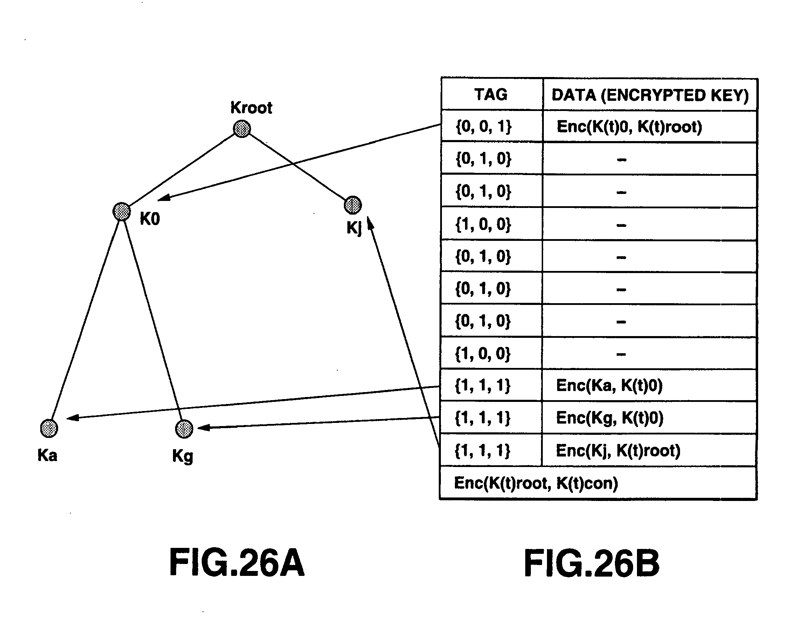

The constitution in which the reduction of data quantity of the enabling key block (EKB) as described is enabled will be described below. FIGS. 26A and 26B show an example in which the enabling key block (EKB) is simplified according to the key distribution device.

It is assumed that similarly to FIG. 25, a key, for example, a content key is transmitted to devices a, g, j constituting a leaf. As shown in FIG. 26A, a tree constituted merely by a key distributing device is constructed. In this case, a tree constitution of FIG. 26B is constructed as a new tree constitution based on the constitution shown in FIG. 24B. No branch is present from Kroot to Kj, but only one branch will suffice, and , from K root to Ka and Kg, a tree of FIG. 26A having a 2-branch constitution is constructed merely by constituting a branch point at K0.

As shown in FIG. 26A, a simplified tree having only K0 as a node is produced. The enabling key block (EKB) for the renewal key distribution is produced on the basis of these simplified trees. The tree shown in FIG. 26 (a) is a re-constructed hierarchical tree re-constructed by selecting a pass constituting a 2-branch type tree with a decodable terminal node or leaf as the lowest stage to omit unnecessary nodes. The enabling key block (EKB) for distributing a renewal key is constituted on the basis of only the key corresponding to a node or a leaf of the re-constructed hierarchical tree.

The enabling key block (EKR) described previously with reference to FIG. 25 stores data having all keys from leaf a, g, j to Kroot, but the simplified EKB stores encrypted data with respect to only the nodes constituting the simplified tree. As shown in FIG. 26B, the tag has a 3-bit constitution. A first bit and a second bit have meaning similar to that of the example of FIG. 25, in which if data are present in the directions of left (L) and right (R), it indicates 0, and if not, 1. A third bit is a bit for indicating that whether or not an encrypted key is contained in EKB, and if data is stored, 1 appears, and if not, 0 appears.

An enabling key block (EKB) provided for a device (leaf) stored in a data communication network or a memory medium is considerably reduced in data quantity as shown in FIG. 26B, as compared with the constitution shown in FIG. 25. Each device which received the enabling key block (EKB) shown in FIGS: 26A and 26B sequentially decrypts only data in a portion where 1 is stored in the third bit of the tag to enable realization of decrypting of a predetermined encrypted key. For example, the device a decrypt Enc(Ka, K(t)0) by a leaf key Ka to obtain a node key K(t)0, and decrypts encrypted data Enc(K(t)0, K(t)root) by a node key K(t)0 to obtain K(t)root. The device j decrypts encrypted data Enc(Kj, K(t)root) by a leaf key Kj to obtain K(t)root.

The enabling key block (EKB) is produced using only the keys of leaf and node which constructs a simplified new tree constitution constituted merely by the device of the distributing destination to constitute a constructed tree to thereby enable producing an enabling key block (EKR) with less data quantity, and the data distribution of the enabling key block (EKB) can be executed efficiently.

### [Key distributing constitution by simplified EKB (2)]

A system will be described in which the enabling key block (EKB) produced on the basis of the simplified tree shown in FIGS. 26A and 26B are further simplified to enable reduction of data quantity and efficient processing.

The system described with reference to FIGS. 26A and 26B is the re-constructed hierarchical tree reconstructed by selecting a path constituting a 2-branch type tree with the decodable terminal node or leaf as the lowermost stage to omit unnecessary nodes. The enabling key block (EKB) for distributing a renewal key is constituted on the basis of only the key corresponding to a node or a leaf of the re-constructed hierarchical tree.

The re-constructed hierarchical tree shown in FIG. 26A distributes the enabling key block (EKB) shown in FIG. 26B to enable obtaining the renewal root key Kroot in the leaf a, g, j. In processing the enabling key block (EKB) of FIG. 26B , the leaf j is able to obtain the root key K(t)root by one time decrypting process of Enc(Kj, K(t)root). However, the leaves a, g obtain K(t)0 by decryption of Enc(Kg, K(t)0) and Enc(Ka, K(t)0), and thereafter further execute decryption of Enc(K(t)0, K(t)root) to obtain a root key K(t)root. That is, the leaves a, g execute decryption twice.

In the reconstructed hierarchical tree of FIGS. 26A and 26B, where the node K0 executes its own control as a control node of lower leaves a, g (that is it executes control of lower leaf as a sub-root node described later) it is effective in a sense of confirming that the leaves a, g obtain a renewal key. If the node KO does not carry out control of the lower leaf, or if the control is carried out and distribution of a renewal key from the upper node is allowed, the re-constructed hierarchical tree shown in FIG. 26A may be further simplified to omit the key of node K0 to produce the enabling key block (EKB) for distribution.

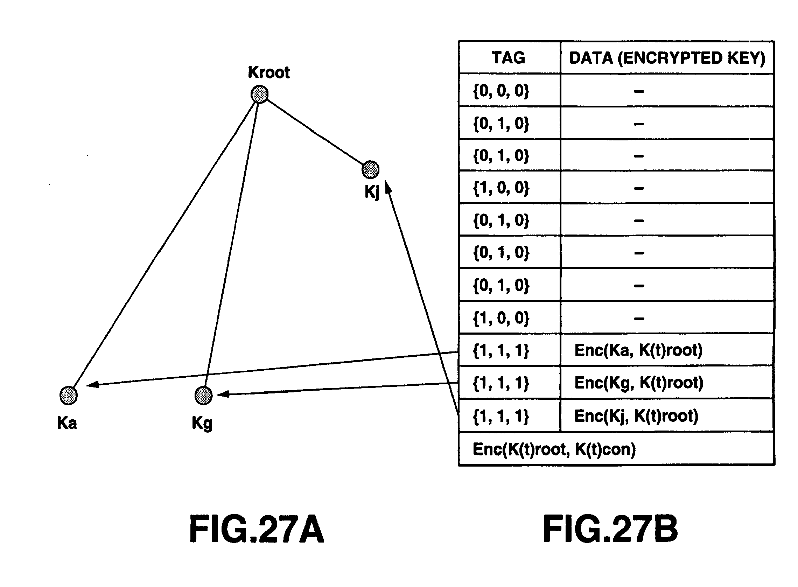

FIGS. 27A and 27B show the data structure of the enabling key block (EKB) as described above. It is assumed similarly to FIGS. 26A and 26B that a key, for example, a content key is transmitted to each of the devices a, g, j constituting a leaf. As shown in FIG. 27A, a tree is constructed in which a root Kroot and leaf a, g, j are connected directly.

As shown in FIG. 27A, a simplified tree having a node K0 omitted from the re-constructed hierarchical tree shown in FIG. 26A is produced. The enabling key block (EKB) for distributing a renewal key is produced on the basis of these simplified trees. The tree shown in FIG. 27A is a re-constructed hierarchical tree re-constructed merely by a pass for directly connecting a decodable leaf and a root, The enabling key block (EKB) for distributing a renewal key is constituted on the basis of a key corresponding to a leaf of the re-constructed hierarchical tree.

Although the example of FIG. 27A is an example of the constitution in which a terminal is a leaf, it is possible, in a case of distributing keys to the uppermost node or a plurality of middle and lower nodes, to produce the enabling key block (EKB) on the basis of the simplified tree in which the uppermost node and the middle and lower nodes are directly connected to execute key distribution. As described above, the re-constructed hierarchical tree has a simplified structure in which a top node and a terminal node or leaf are directly connected. In the simplified tree, it is possible to constitute it as a tree having not only two branches from the top node but a multi-branch not less than three according to the number of distribution nodes or leaves.

The enabling key block (EKB) described previously with reference to FIG. 25 has a data structure in which data having all keys from each leaf a, g, j to Kroot encrypted are stored, and the enabling key block (EKB) stores K0 as a common node of leaf keys a, g of leaves a, g, j, and a root key. The enabling key block (EKB) based on the simplified hierarchical tree shown in FIG. 27A omits the key of node K0, and therefore, the enabling key block (EKB) with less data quantity is obtained, as shown in FIG. 27B.

The enabling key block (EKB) shown in FIG. 27B has a tag of 3 bits similarly to the enabling key block (EKB) shown in FIG. 26B. In the first and second bits, if data are present in the directions of left (L) and right (R), it indicates 0, and if not, 1. A third bit is a bit for indicating whether or not an encrypted key is stored within the EKB, and where data is stored, 1 appears, and if not, 0 appears.

In the enabling key block (EKB) of FIG. 27B, each leaf a, g, j is able to obtain a root key K(t)root by one-time decryption of Enc(Ka, K(t)root), Enc(Kg, K(t)root) and Enc(Kj, K(t)root).

The enabling key block (EKB) is produced on the basis of the simplified tree having the structure in which the uppermost node of the simplified re-constructed hierarchical tree, the terminal node constituting a tree or a leaf are directly connected. The EKB contains the key corresponding to the top node and the terminal node, or the leaf of the re-constructed hierarchical tree and no other keys.

A simplified new tree structure described with reference to FIGS. 26A and 26B or FIGS. 27A and 27B, makes it possible to produce the enabling key block (EKB) with less data and to effectively execute data distribution of the enabling key block (EKB).

The simplified hierarchical tree structure can be utilized effectively particularly in the EKB control structure used with an "entity" described later. The entity is a group of a plurality of nodes or leaves selected in a tree structure. The entity may be a group selected according to the kind of devices, or selected as the grouping of a variety of forms such as a processing unit, a control unit, or a service providing unit having a common point such as control units of a device providing maker, a content provider, a settlement organization or the like. Devices classified into categories are gathered into a single entity. For example, a simplified tree similar to that described above is re-constructed by top nodes (sub-roots) of a plurality of entities to produce EKB to thereby make it possible to produce and distribute the decodable simplified enabling key block (EKB) in the devices belonging to the selected entity. The control constitution of the entity unit will be described in detail later.

Such an enabling key block (EKB) as described above can be stored in an information recording medium such as an optical disk, DVD or the like. For example, there can be provided the constitution in which an information recording medium, in which message data such as contents encrypted by a renewal node key is stored in the enabling key bock (EKB) containing data part constituted by the aforementioned encrypted key data and a tag part as position discrimination date in the hierarchical tree structure of encrypted key data, is provided for each device. The device sequentially extracts and decrypts encrypted key data contained in the enabling key block (EKB) in accordance with the discrimination data of the tag part. Of course, there can be employed the constitution in which the enabling key block (EKB) is distributed through a network such as an internet.

### [EKB control constitution of entity unit]

Next, a description will be made of the constitution in which a node or a leaf constituting a tree constitution as a key distribution constitution is controlled by a block as the gathering of a plurality of nodes or leaves. The block as the gathering of a plurality of nodes or leaves will be hereinafter called an entity. The entity is set as the gathering set according to the kind of devices or as the gathering of various forms such as a processing unit, a jurisdiction unit or a service providing unit having a common point such as device providing makers, a content provider or a settlement organization.

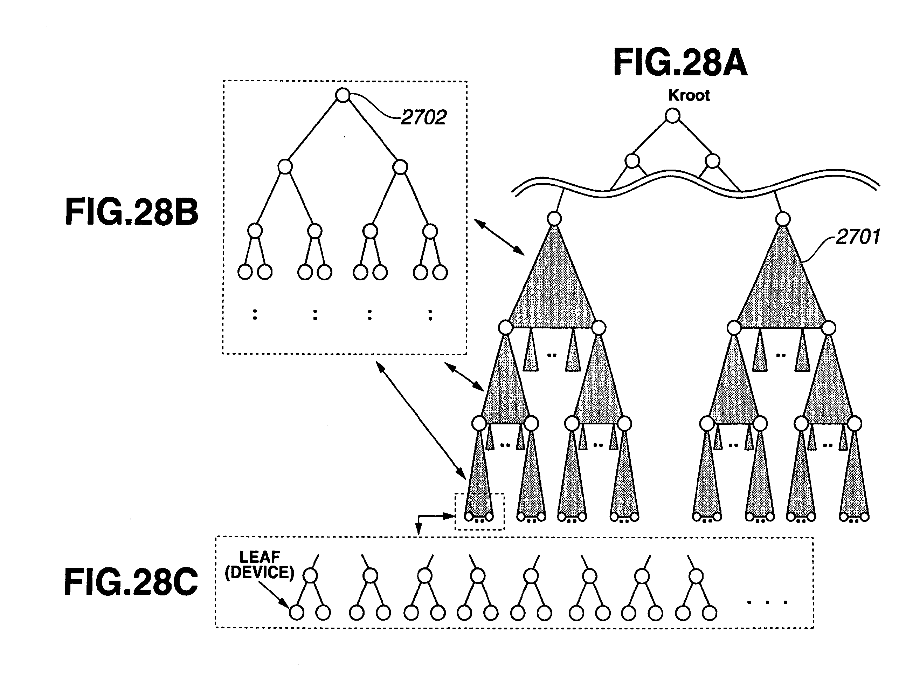

The entity will be described with reference to FIGS. 28A to 28C. FIG. 28A is a view for explaining the control constitution in entity unit of a tree. One entity is shown as a triangle in the figure, for example, a plurality of nodes are contained in one entity 2701. FIG. 28B shows the node constitution within the one entity. The one entity is constituted by a plurality of 2-branch type trees with one node as the top node. The top node 2702 of the entity will be hereinafter called a sub-root.

The terminal of the tree is constituted by a leaf as shown in FIG. 28C, that is, a device. The device belongs to any entity constituted by a tree with a plurality of devices as leaves and having a top node 2702 which is a sub-root.

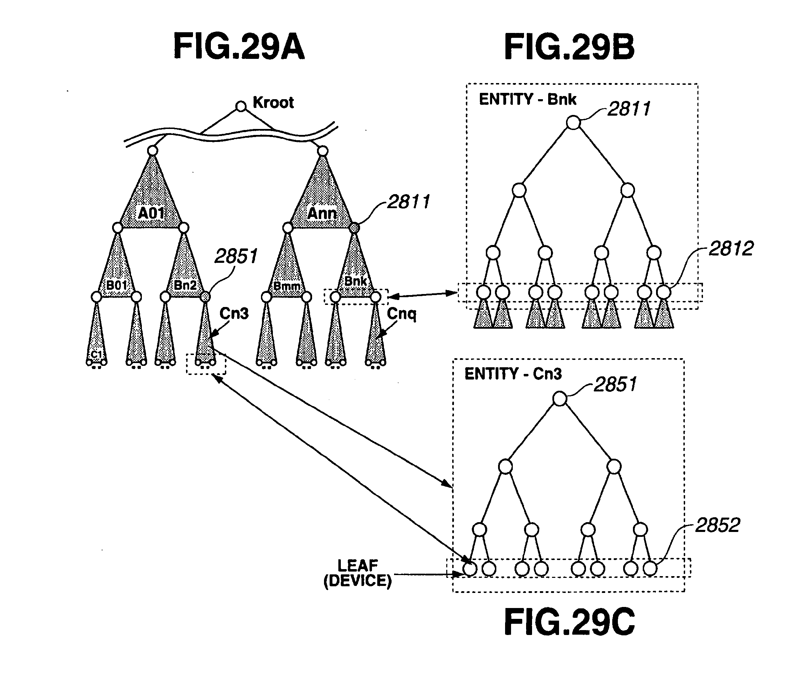

As will be understood from FIG. 28A, the entity has a hierarchical structure. This hierarchical structure will be described with reference to FIGS. 29A to 29C.

FIG. 29A is a view for explaining the hierarchical structure in a simplified form. Entities A01 to Ann are constituted in the stage several stages below Kroot, entities B01 to Bnk are set below the entities A1 to An, and entities C1 to Cnq are set thereunder. Each entity has a tree shape constituted by plural stages of nodes and leaves, as shown in FIGS. 29B and 29C.

For example, the tree structure of the entity Bnk has a plurality of nodes between a terminal node 2812 and a sub-root 2811 or top node. This entity has a discriminator Bnk, and the entity Bnk independently executes node key control corresponding to the node within the entity Bnk to thereby execute control of a lower (child) entity set with the terminal node 2812 as a top. On the other hand, the entity Bnk is under the (host) entity Ann whereby the sub-root 2811 of Bnk is a terminal node 2811 of Ann.

The structure of an entity Cn3 has a terminal node 2852, and a sub-root 2851 as: a top node, and a plurality of other nodes and leaves, as shown in FIG. 29C. This entity has a discriminator Cn3, the entity Cn3 independently executes control of a node key and a leaf key corresponding to the node and leaf within the entity Cn3 to thereby execute control of a leaf (device) corresponding to the terminal node 2852. On the other hand, the entity Cn3 is under the (host) entity Bn2 having the sub-root 2851 of Cnk as a terminal node of Bn2. The key control in each entity is, for example, key renewing process, revoke process and the like, which will be described in detail later.

In a device which is a leaf of the lowest entity are stored its own leaf key and the node keys of each node positioned in the path from the leaf to the sub-root node which is the top node of the entity to which the device belongs. For example, the device of the terminal node 2852 stores keys from the terminal node (leaf) 2852 to the sub-root node 2851.

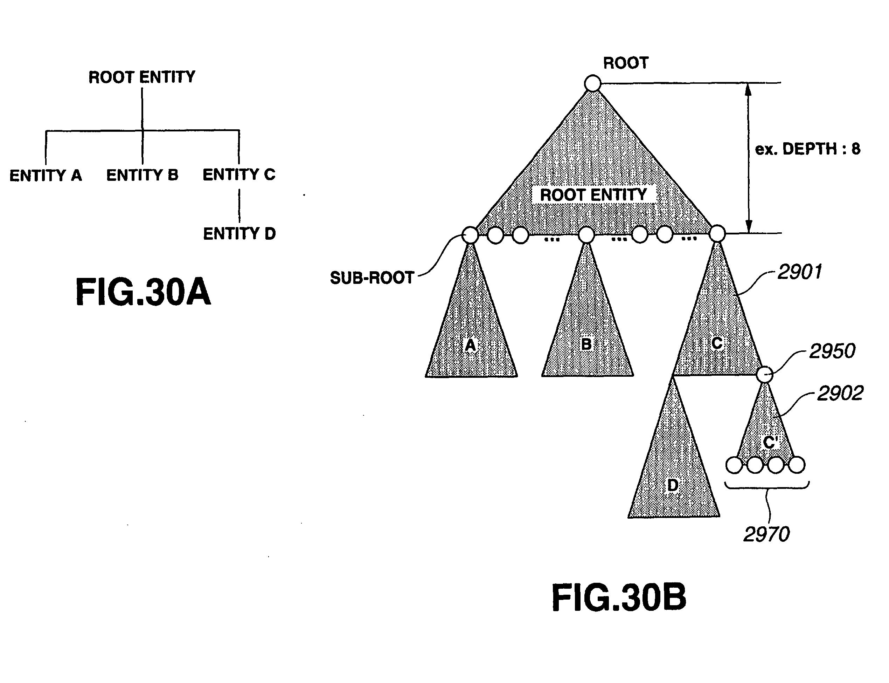

A tree structure of entities will be described with reference to FIGS. 30A and 30B. Entities are able to be organised in a tree structure constituted by a variety of stage numbers. The stage number, that is the depth, can be set according to the number of child entities corresponding to the terminal nodes controlled by the root entity.

The detail of the structure of host and child entities as shown in FIG. 30A is as shown in FIG. 30B, The root entity is an entity in the uppermost stage having a root key. Entities A, B, C are set as a plurality of child entities in the terminal node of the root entity, and an entity D is set as a child entity of entity C. An entity C2901 has not less than one node of its terminal node as a sub-node 2950. If the number of entities controlled by sub-node 2950 are increased, an entity C'2902 having plural stages of trees can be newly installed with node 2950 as a top node (referred to herein as a reserve node) to thereby provide further control terminal nodes 2970. Further child entities can be added to control terminal nodes 2970.

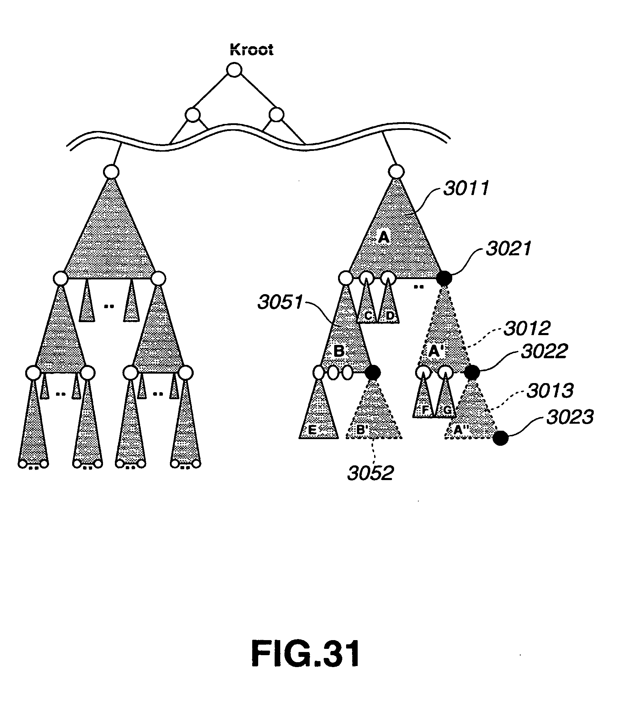

The reserve node will be further described with reference to FIG. 31. Entity A, 3011 has child entities B, C, D ... to be controlled, and has one reserve node 3021. Where child entities to be controlled are further increased, a child entity A', 3012 under the own control is set to the reserve node 3021, and child entities F, G to be controlled can be further set to the terminal node of the child entity A', 3012. Also in the child entity A', 3012 under the own control, at least one of the terminal nodes is set as a reserve node 3022 whereby a child entity A"3013 is further set to further increase the control entities. One or more reserve nodes are secured also in the terminal node of the child entity A"3013. Such a reserve node holding constitution as described is employed whereby the child entities under a certain entity can be increased endlessly. With respect to the reserve entity, not only one terminal node but a plurality of nodes may be set.

In the respective entities, the enabling key block (EKB) is constituted in entity unit, and key renewing and revoke processing are to be executed in entity unit. As shown in FIG. 31, the enabling key block (EKB) of individual entity is set to a plurality of entities A, A', A", but these can be collectively controlled, for example, by device makers who control the entities A, A', A" in common.

### [Registration process of new entities]

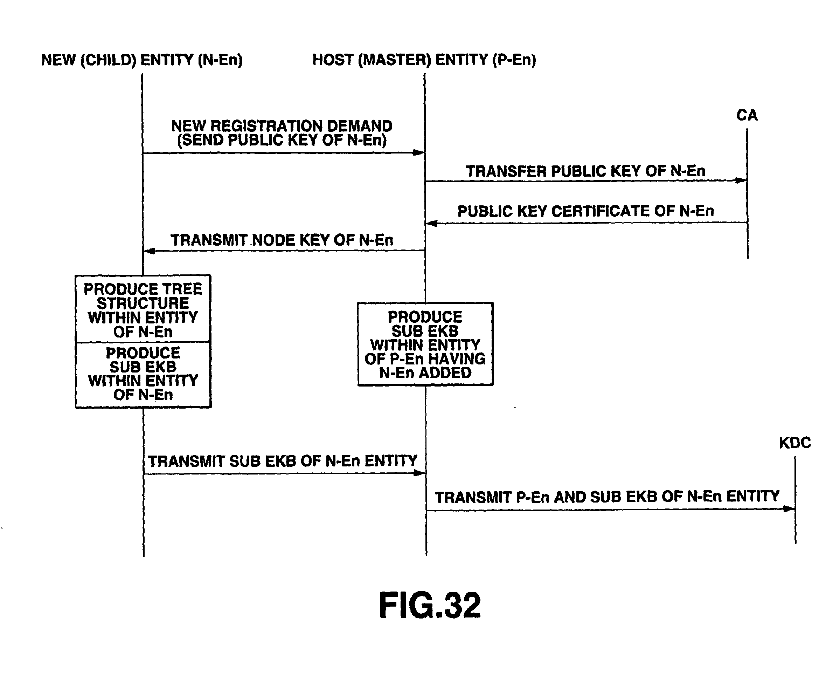

Next, the registration process of new entities will be described. FIG. 32 shows a registration processing sequence. A description will be made in accordance with the sequence in FIG. 32. A new (child) entity(N-En) newly added during the constitution of a tree executes requesting of new registration to a host entity (P-En). Each entity holds a public key in accordance with a public key encryption system, and a new entity sends its own public key to the host entity (P-En) when the registration request is made.

The host entity (P-En) which received the registration request transfers a public key of the new (child) entity received to a certificate authority (CA) and receives a public key of the new (child) entity (N-En) to which a signature of CA is added. These procedures are carried out as a procedure for mutual authentication between the host entity (P-En) and the new (child) entity (N-En).

When the authentication of the new registration requesting entity is terminated, the host entity (P-En) grants the registration of the new (child) entity (N-En) to transmit a node key of the new (child) entity (N-En) to the new (child) entity (N-En) . This node key is one node key of the terminal node of the host entity (P-En) which corresponds to a top node of the new (child) entity (N-En), that is, a sub-root key.

When the transmission of node key is finished, the new (child) entity (N-En) constructs the tree constitution of the new (child) entity (N-En), sets a sub-root key of a top node received to a top of the constructed tree, and sets node and leaf keys to produce an enabling key block (EKB) within the entity. The enabling key block (EKB) within one entity is called a sub-EKB.

On the other hand, the host entity (P-En) produces the sub-EKB within the host entity(P-En) to which is added a terminal node to be enabled by the addition of the new (child) entity (N-En).

When the sub-EKB constituted by a node key and a leaf key within the new (child) entity (N-En) is produced, the new (child) entity (N-En) transmits it to the host entity (P-En).

The host entity (P-En) which receives the sub-EKB from the new (child) entity (N-En) transmits the received sub-EKB and a renewal sub-EKB of the host entity (P-En) to a key distribution center (KDC).

The key distribution center (KDC) is able to produce various EKBs, that is, EKB that can be decrypted merely by a specific entity or device on the basis of sub-EKBs of all entities. EKB to which such a decodable entity or device is set is distributed, for example, to a content provider, who encrypts a content key on the basis of EKB to distribute it through a network or store it in a recording medium, thus enabling distribution of a content that can be used merely by a specific device.

The registration processing with respect to the key distribute center (KDC) of the sub-EKB of the new entity is not limited to a method for sequentially transferring the sub-EKB through the host entity, but there can be also employed the constitution which executes the processing for registering the sub-EKB in the key distribute center (KDC) directly from the new registration entity without the intervention of the host entity.

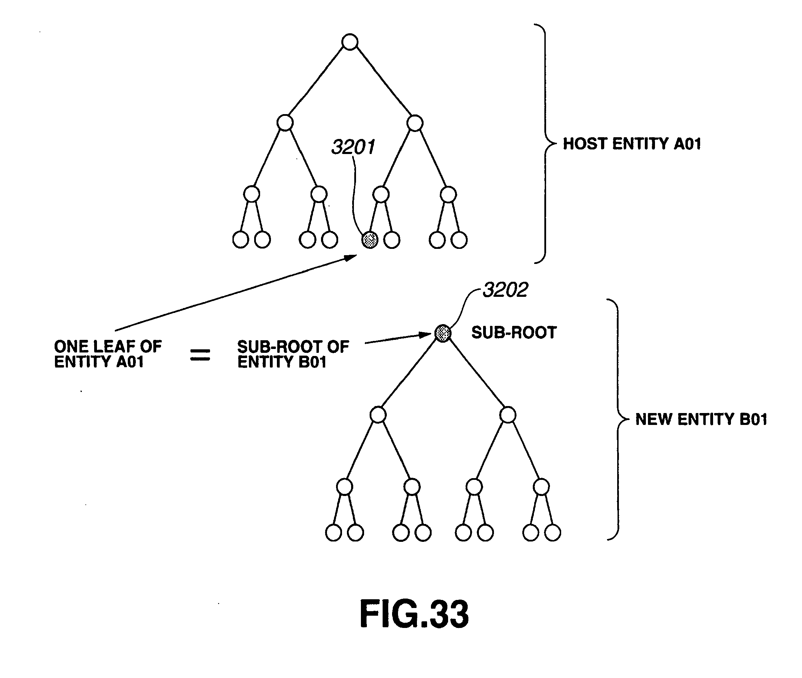

The correspondence of the host entity to the child entity to be newly added to the host entity will be described with reference to FIG. 33. One terminal node 3201 of the host entity is distributed as a top node of the newly added entity to the child entity whereby the child entity is added as an entity under the control of the host entity. The entity under the control of the host entity termed herein, which will be described later, also includes meaning of the constitution in which the revoke processing of the child entity can be executed by the host entity.

As shown in FIG. 33, when a new entity is set to the host entity, one node 3201 of a terminal node which is a leaf of the host entity and a top node 3202 of the newly added entity are set as equal nodes. That is, one terminal node which is one leaf of the host node is set as a sub-root of the newly added entity. By being so set, the newly added entity is enabled under the whole tree constitution.

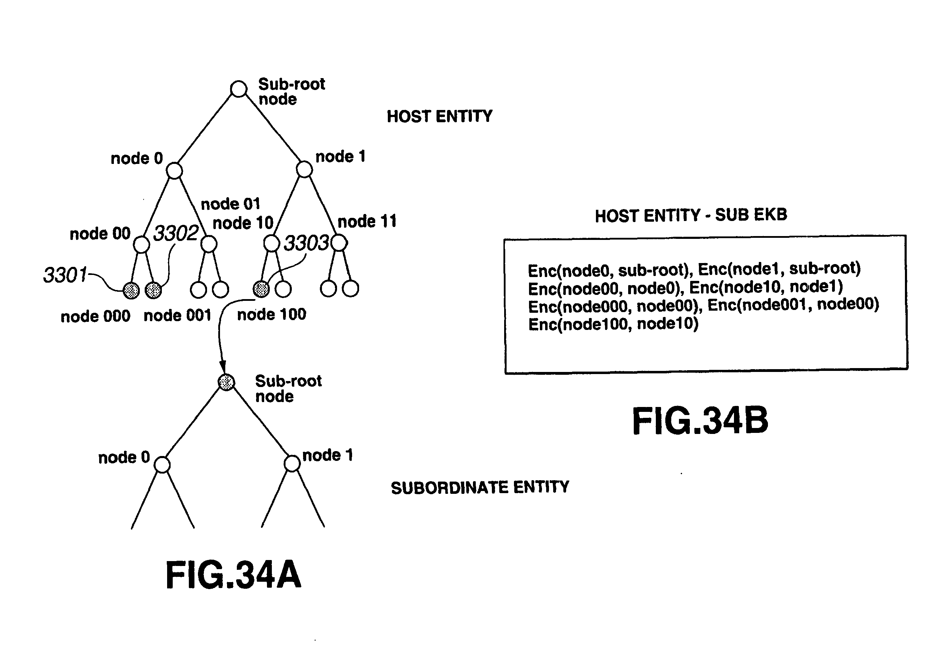

FIGS. 34A and 34B show an example of a renewal EKB produced by the host entity when the newly added entity is set. FIG. 34A shows an example of a sub-EKB produced by the host entity when a new entity added terminal node (node 100) 3303 is applied to the newly added entity, in the constitution shown in FIG. 34A which has a terminal node (node 000). 3301 which has been effectively present and a terminal node (node 001) node 3302.

The sub-EKB has the constitution as shown in FIG. 34B. There are a host node key encrypted by a terminal node which has been effectively present, a further host node key encrypted by the host node key, ... and a sub-root key. Similarly to FIG. 34B, each entity has and controls EKB constituted to have a host node encrypted by an effective terminal node or leaf key, encrypts a further host node key by the host node key, and an encrypted data to a sub-root sequentially being increased in depth.

### [Revoke processing under the control of entity]

Next, a description will be made of the revoke processing of a device or an entity in the constitution in which the key distribution tree constitution is controlled as an entity unit. In previous FIGS. 3 and 4, a description has been made of the processing for distributing an enabling key block (EKB) in which only the specific device out of the whole tree constitution is decodable, and the revoked device is undecodable. The revoke processing described in FIGS. 3 and 4 is the processing for revoking a device which is a specific leaf out of the whole tree, but the constitution by entity control of the tree is possible to execute the revoke processing every entity.

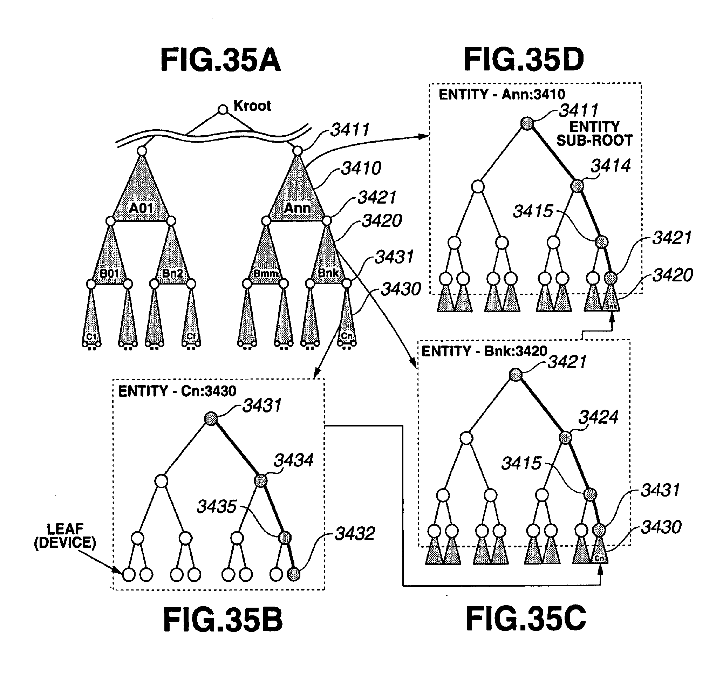

A description will be made hereinafter of the revoke processing in the constitution under the entity control with reference to FIGS. 35A to 35D and drawings continuous thereto. FIGS. 35A to 35D is a view for explaining the revoke processing of a device by an entity which controls an entity in the lowest stage, out of entities constituting a tree, that is, an entity controlling individual devices.

FIG. 35A shows the key distribution tree structure under the control of entity. A root node is set to the uppermost part of the tree, and entities A01 to Ann, entities B01 to Bnk below the previous entities, and entities C1 to cn in the lowest stage are constituted. In the lowest entity, the terminal node (leaf) is individual devices, for example, a recording and reproducing unit, a reproducing exclusive-use unit or the like.

The revoke processing is independently in each entity. For example, in the entities C1 to Cn in the lowest stage, the revoke processing of a device of a leaf is executed. FIG. 35B shows the tree constitution of an entity Cn, 3430 which is one of the entities in the lowest stage. The entity Cn, 3430 has a top node 3431, and a leaf which is a terminal node has a plurality of devices.

Assume that a device to be revoked, for example, a device 3432 is present in a leaf, the entity Cn, 3430 produces an enabling key block (sub-EKB) constituted by a node key and a leaf key in the independently renewed entity Cn. This enabling key block is a key block constituted by an encrypted key that cannot be decrypted in the revoke key in the revoke device 3432 but that can be decrypted by only the device constituting other leaf: A controller of the entity Cn produce it as a renewed sub-EKB. Concretely, the block, which comprises an encrypted key which renews node keys of nodes 3431, 3434, and 3435constituting a pass associated with a sub-root to a revoke device 3432, and can decrypt the renewal key only in a leaf device other than the revoke device 3432. This processing corresponds to the processing in which a root key is replaced by a sub-root which is a top key of entity, in the revoke processing constitution described in FIGS. 3 and 4.

The enabling key block (sub-EKB) renewed by the entity Cn, 3430 through the revoke processing is transmitted to the host entity. In this case, the host entity is an entity Bnk, 3420, and an entity having a top node 3431 of the entity Cn, 3430 as a terminal node.

The entity Bnk, 3420, when receives the enabling key block (sub-EKB) from the child entity Cn, 3430, sets the terminal node 3431 of the entity Bnk, 3420 corresponding to the top node 3431 of the entity Cnk, 3430 contained in the key block to a key renewed in the child entity Cn, 3430, and executes the renewal processing of sub-EKB of own entity Bnk, 3420. FIG. 35C shows the tree of entity Bnk, 3420. In the entity Bnk, 3420, a node key to be renewed is a node key on a pass from the sub-root 3421 in FIG. 35C to the terminal node 3431 constituting an entity containing a revoke device. That is, node keys of the nodes 3421, 3424, 3425 constituting a pass associated with the node 3431 of the entity transmitted from the renewal sub-EKB are to be renewed. These node keys of nodes are renewed to produce a new renewal sub-EKB of the entity Bnk, 3420.

Further, the enabling key block (sub-EKB) renewed by the entity Bnk, 3420 is transmitted to the host entity. In this case, the host entity is the entity Ann, 3410, and an entity having a top node 3421 of the entity Bnk, 3420 as a terminal node.

When the entity Ann, 3410 receives the enabling key block (sub-EKB) from the child entity Bnk, 3420, it sets the terminal node 3421 of the entity Ann, 3410 corresponding to the top node 3421 of the entity Bnk 3420 contained in the key block to a key renewed in the child entity Bnk, 3420, and executes the renewal processing of the sub-EKB of itself, entity Ann, 3410, FIG. 35D shows the tree of entity Ann, 3410. In the entity Ann, 3410, node keys to be renewed are node keys 3411, 3414, 3415 on a path from the sub-root 3411 in FIG. 35D to the terminal node 3421 constituting an entity containing a revoke device. These node keys of nodes are renewed to produce a new renewal sub-EKB of the entity Ann, 3410.

These processes sequentially execute in the host entity to the root entity described in FIG. 30B. The revoke processing of devices is completed by a series of processes as described. The sub-EKB renewed in the entity is finally transmitted to the key distribute center (KDC) and stored therein. The key distribute center (KDC) produces various EKBs on the basis of the renewal sub-EKB of all entities. The renewal EKB is an encrypted key block that cannot be decrypted by the device revoked.

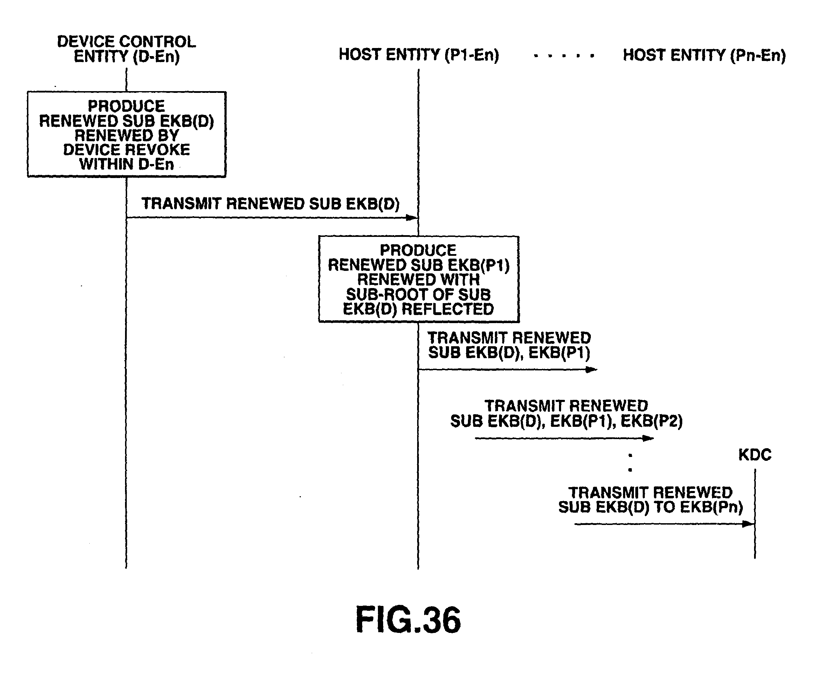

FIG. 36 shows a sequence of revoke process of the device. The processing procedure will be described with reference to the sequence figure of FIG. 36. First, the device control entity (D-En) in the lowest stage of the tree constitution carries out key renewing necessary for revoking a leaf to be revoked in the device control entity (D-En) to produce a new sub-EKB of the device control entity (D-En). The sub-EKB is sent to the host entity. The host entity (P1- En) which received the renewal sub-EKB (D) produces a renewal sub-EKB (P1) in which a terminal node key corresponding to a renewal top node of the renewal sub-EKB (D) is renewed and node keys on a pass from the terminal node to the sub-root. These processes are sequentially executed in the host entity, and all sub-EKBs finally renewed are stored and controlled by the key distribute center (KDC).

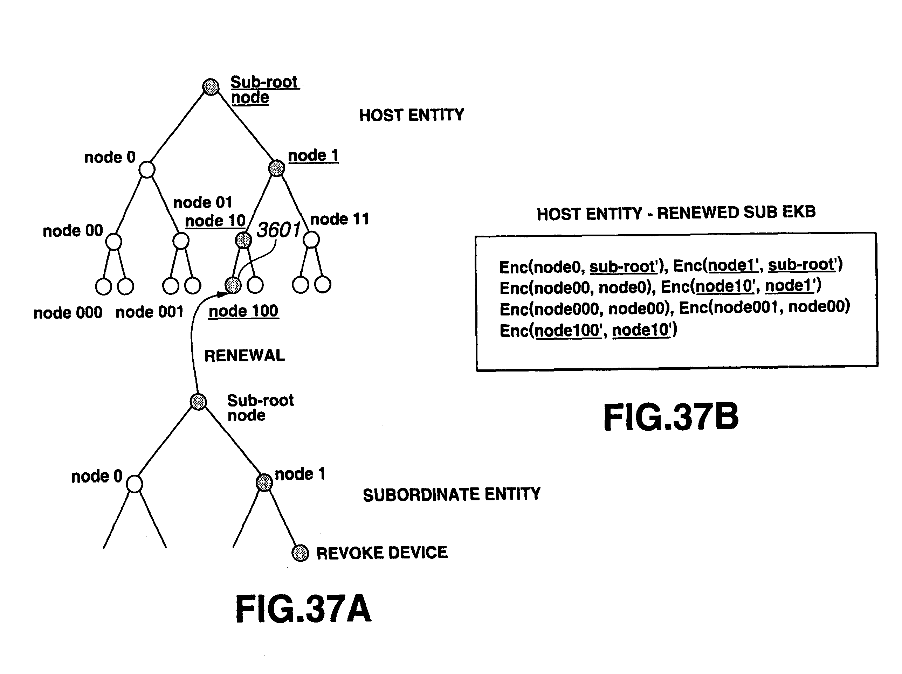

FIGS. 37A and 37B show an example of an enabling key block (EKB) to be produced as a result that the host entity carries out renewal processing by the revoke processing of a device.

FIGS. 37A and 37B are views each for explaining an example of EKB produced in the host entity which received renewal sub-EKB from the child entity containing a revoke device, in the constitution shown in FIG. 37A. A top node of the child entity containing the revoke device corresponds to a terminal node (node 100) 3601 of the host entity.

The host entity renews node keys which are present in a pass from the sub-root of the host entity to the terminal node (node 100) 3601 to produce a new renewed sub-EKB. The renewal sub-EKB is as shown in FIG. 37B. The renewed key is shown with the underline and ['] attached thereto. The node keys on a pass from the renewed terminal node to the sub-rot are renewed to obtain a renewal: suti-EKB in its entity.

Next, processing where an object subjected to revoking is an entity, that is, revoke processing of entity, will be described.

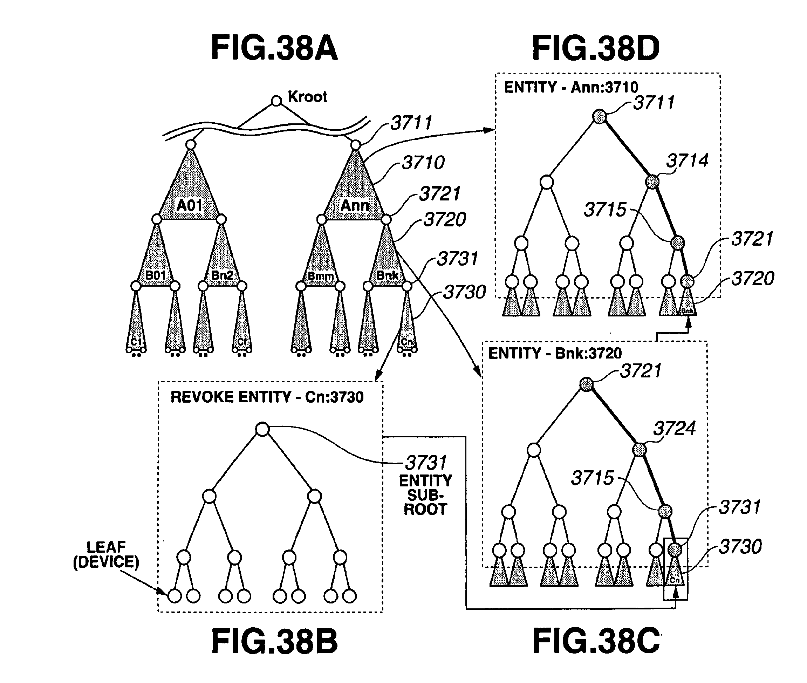

FIG. 38A shows the key distribution tree structure by entity control. A root node is set to the uppermost part of the tree, and entities A01 to Ann are constituted several stages thereunder; entities B01 to Bnk are constituted in the stage lower than A01 to Ann, and entities C1 to Cn are constituted in the stage lower than the stage B01 to Bnk. In the lowest entity, the terminal node (leaf) is an individual device, for example, such as recording and reproducing unit, a reproducing exclusive-use unit or the like.

Now, a description is made of the case where the revoke processing is carried out with respect to the entity Cn, 3730. The entity Cn, 3730 in the lowest stage has the constitution in which a top node 3431 is provided, and a plurality of devices are provided at leaves which are terminal nodes, as shown in FIG. 38B.

The revoking of the entity Cn, 3730 enables collective revocation of all devices belonging to the entity Cn, 3730 from the tree structure. The revoke processing of the entity Cn, 3730 is executed in the entity Bnk, 3720 which is the host entity of the entity Cn, 3730. The entity Bnk, 3720 is an entity having the top node 3731 of the entity Cn, 3730 as a terminal node.

Where revoking of the child entity Cn, 3730 is executed, the entity Bnk, 3720 renews the terminal node 3731 of the entity Bnk, 3720 corresponding to the top node 3731 of the entity Cnk, 3730, and further carries out renewing of node keys on a path from the revoke entity 3730 to the sub-root of the entity Bnk, 3720 to produce an enabling key block to produce a renewal sub-EKB. The node key to be renewed is a node key on a path from the sub-root 3721 shown in FIG. 38C to a top node of a revoke entity. That is, nodes 3721, 3724, 3725 and 3731 are objects to be renewed. These node keys of nodes are renewed to produce new renewal sub-EKB of the entity Bnk, 3720.

Alternatively, where revoking of the child entity Cn, 3730 is executed, the entity Bnk, 3720 does not renew the terminal node 3731 of the entity Bnk, 3720 corresponding to the top node 3731 of the entity Cnk, 3730 but renews a node key except the terminal node 3731 on the path from the revoke entity 3730 to the sub-root of the entity Bnk, 3720 to produce an enabling key block to produce a renewal sub-EKB.

Further, the enabling key block (sub-EKB) renewed by the entity Bnk, 3720 is transmitted to the host entity. In this case, the host entity is an entity Ann, 3710, which is an entity having a top node 3721 of the entity Bnk, 3720 as a terminal node.

When an enabling key bock (sub-EKB) is received from the child entity Bnk, 3720, the entity Ann, 3710 sets the terminal node 3721 of the entity Ann, 3710 corresponding to the top node 3721 of the entity Bnk, 3720 contained in the key block to a key renewed in the child entity Bnk, 3720 to execute renewal processing of the sub-EKB of the own entity Ann, 3710. FIG. 38D shows the tree constitution of the entity Ann, 3710. In the entity Ann, 3710, the node key to be renewed is a node key of each node 3711, 3714, 3715 constituting a path from the sub-root 3711 of FIG. 38D to the node 3721 of the entity having transmitted the renewal sub-EKB. These node keys of the nodes are renewed to produce a new renewal sub-EKB of the entity Ann, 3710.

These processes are sequentially executed in the host entity to execute it to the root entity described with reference to FIG. 30B. The revoke processing is completed by a series of processes. The sub-EKB renewed in the respective entity is finally transmitted to the key distribute center (KDC) and stored. The key distribute center KDC produces various EKBs on the basis of the renewal sub-EKB of all entities. The renewal EKB is an encrypted key block that cannot be decrypted by the device belonging to the entity revoked.

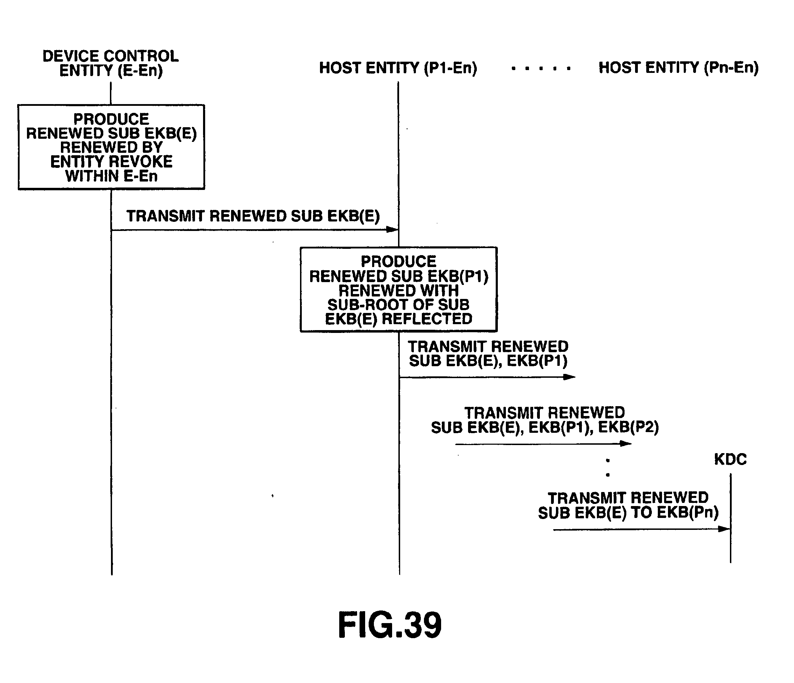

FIG. 39 shows a sequence of revoke process of the entity. The processing procedure will be described with reference to the sequence figure of FIG. 39. First, the entity control entity (E-En) for revoking the entity carries out key renewing necessary for revoking a terminal node to be revoked in the entity control entity (E-En) to produce a new sub-EKB of the entity control entity (E-En) . The sub-EKB is sent to the host entity. The host entity (P1- En) which received the renewal sub-EKB (E) produces a renewal sub-EKB (P1) in which a terminal node key corresponding to a renewal.top node of the renewal sub-EKB (P1) is renewed and node keys on a pass from the terminal node to the sub-root are renewed. These processes are sequentially executed in the host entity, and all sub-EKB finally renewed are stored and controlled by the key distribute center (KDC). The key distribute center (KDC) produces various EKB on the basis of the renewal EKB of all entities. The renewal EKB is an encrypted key block that cannot be decrypted by a device belonging to the entity revoked.

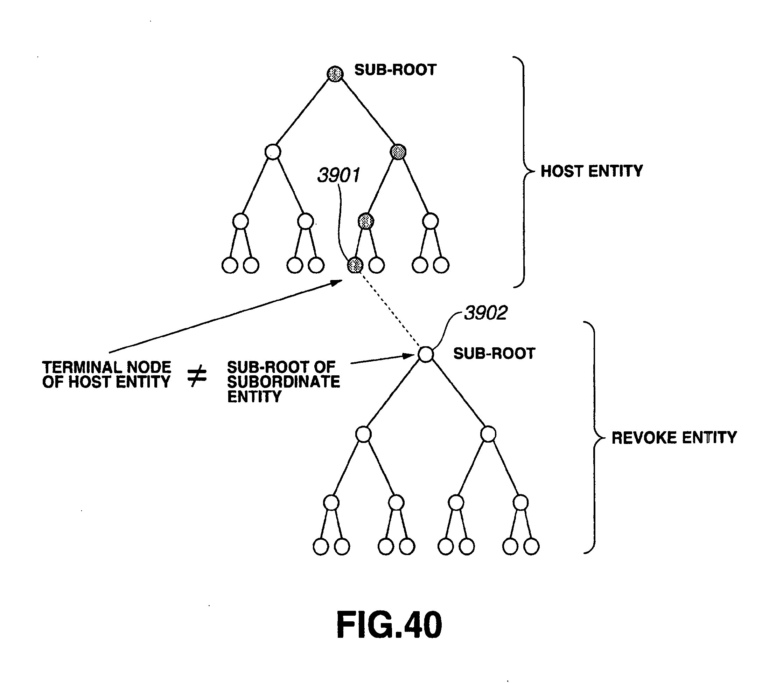

FIG. 40 is a view for explaining the correspondence of the child entity revoked to the host entity which carried out revoking. A terminal node 3901 of the host entity is renewed by revoking the entity, and a new sub-EKB is produced by renewing of node keys which are present in a path from the terminal node 3901 to the sub-root in the tree of the host entity. As a result, the node key of the top node 3902 of the child entity revoked is not coincided with the node key of the terminal node 3901 of the host entity. EKB produced by the key distribute center (KDC) after revoking of the entity is to be produced on the basis of the key of the terminal node renewed, and therefore, the device corresponding to the leaf of the child entity not holding the renewal key disables decrypting of EKB produced by the key distribute censer (KDC).

While in the foregoing, the revoking process of the entity in the lowest stage for controlling the device has been described, processing for revoking the entity control entity in the middle sage of the tree by the host entity is also enabled by the process similar to that described above. By revoking the entity control entity in the middle stage, a plurality of entities and devices belonging to the lower level of the entity control entity revoked can be revoked collectively.

As described, by the execution of revoking in an entity unit, revoking process which is simple as compared with the revoking process for executing it in a device unit one by one becomes enabled.

### [Capability control of entity]

Next, a description will be made of the processing constitution in which in the key distribution tree constitution in an entity unit, capability granted by each entity is controlled to carry out content distribution according to the capability. The capability termed herein is, for example, defined information of the data processing ability of a device whether decrypting of specific compressed voice data is enabled, whether specific voice reproducing system is granted, or specific image processing program can be processed, whether a device is a device capable of processing what content or program.

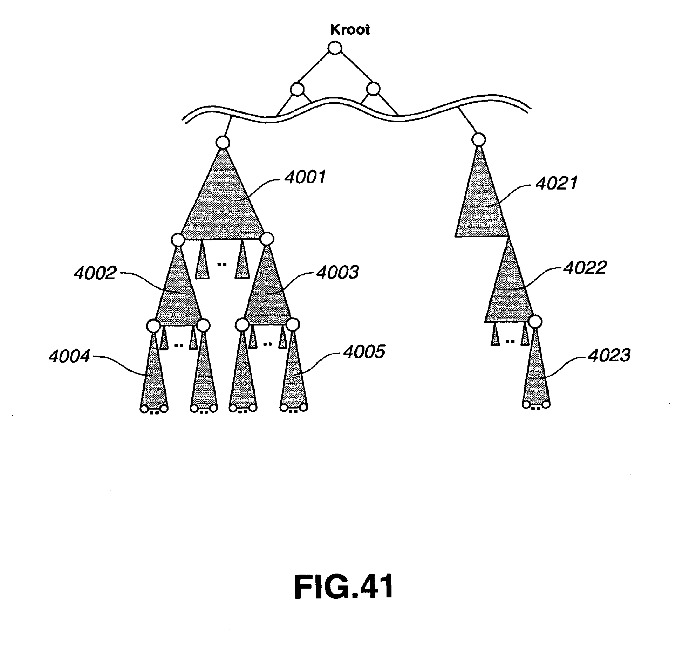

FIG. 41shows an example of the entity constitution which defines the capability. This is the constitution in which a root node is positioned at the uppermost top of the key distribution tree, a plurality of entities are connected to the lower layer, and each node has a 2-branch. Here, for example, an entity 4001 is defined as an entity having capability to grant either voice reproducing systems A, B or C. Concretely, for example, where music data compressed by voice compressed program A, B or C system are distributed; processing for extending the device belonging to the entity constituted below the entity.4001 is enabled.

Similarly, : entity 4002, entity 4003, entity 4004, and entity 4005 are respectively defined as entities having capability capable of processing voice reproducing system B or C, voice reproducing system A or B, voice reproducing system B, and voice reproducing system C, respectively.

On the other hand, an entity 4021 is defined as an entity to grant image reproducing systems p, q, r, and an entity 4022 and an entity 4023 are respectively defined as entities having capability to enable image reproducing of a system p.

The capability information of the entities as described is controlled in the key distribute center (KDC). For example, where a content provider desires to distribute music data compressed by a specific compression program to various devices, an enabling key block (EKB) decodable with respect to only the device which can reproduce the specific compression program can be produced on the basis of capability information of each entity. The content provider for distributing contents distributes a content key encrypted by the enabling key block (EKB) produced on the basis of the capability information and distributes compressed voice data encrypted by the content key to the devices. By the provision of this constitution, it is possible to provide accurately a specific processing program to only the device capable of processing data.

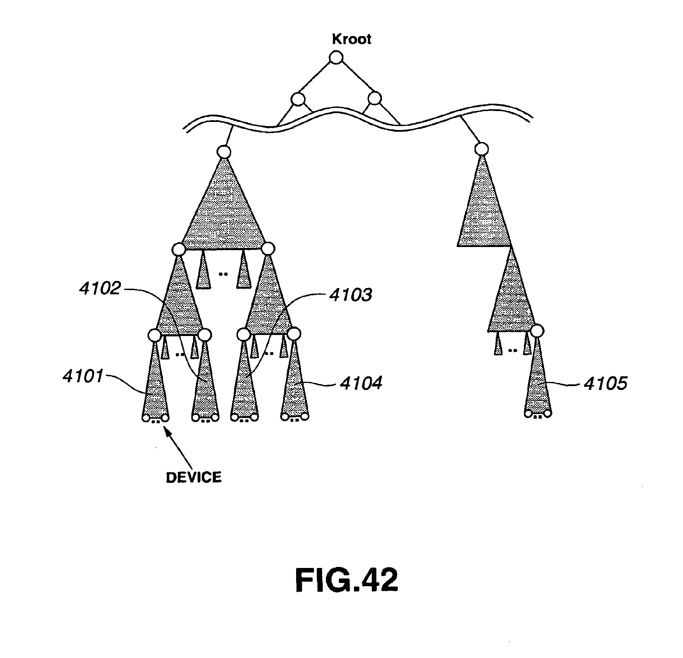

While in FIG. 41, the constitution in which capability information is defined in connection with all the entities is shown, it is noted that it is not always necessary to define the capability information with respect to all the entities as in the constitution of FIG. 41, but the constitution may be employed in which for example, as shown in FIG. 42; capability is defined with respect to only the entity in the lowest stage to which the device belongs, capability of the device belonging to the entity in the lowest stage is controlled in the key distribute center (KDC), and the enabling key block (EKB) that can be decrypted merely for the device capable of providing a process desired by a content provider is produced on the basis of capability information defined in the entity in the lowest stage. FIG. 42 shows the constitution in which capability in entity 4101 = 4105 for which the device is defined, is defined in the terminal node, and capability with respect to these entities is controlled in the key distribute center (KDC). For example, to the entity 4101 belong devices capable of processing a system B with respect to voice reproducing and a system r with respect to image reproducing, respectively. To the entity 4102 belong devices capable of processing a system A with respect to voice reproducing and a system q with respect to image reproducing, respectively.

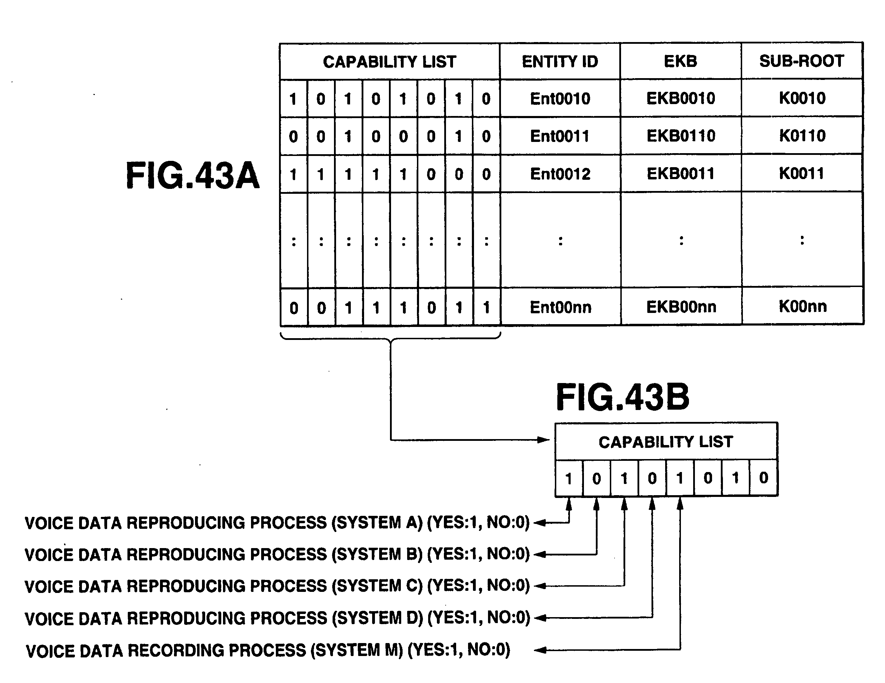

FIGS. 43A and 43B show an example of the constitution of a capability control table controlled in the key distribute center (KDC). The capability control table has the data constitution as shown in FIG. 43A. That is, propriety with respect to various data processes is set to [1] or [0] such that there are an entity ID as a discriminator for discriminating entities and a capability list indicative of capability defined in the entities, and in the capability list, as shown in FIG. 43B, for example, if a voice data reproducing processing system (A) is can be processed, [1] appears, if not, [0] appears, and if a voice data reproducing processing system (B) can be processed, [1] appears, if not, [0] appears. The method of setting capability is not limited to such a form as described, but other constitutions may be employed if capability with respect to the control device of entities can be discriminated.

In the capability control table, where sub-EKB if each entity of sub-EKB is stored in a separate data base, discrimination information of sub-EKB is stored, and sub-root node discrimination data of each entity is stored.

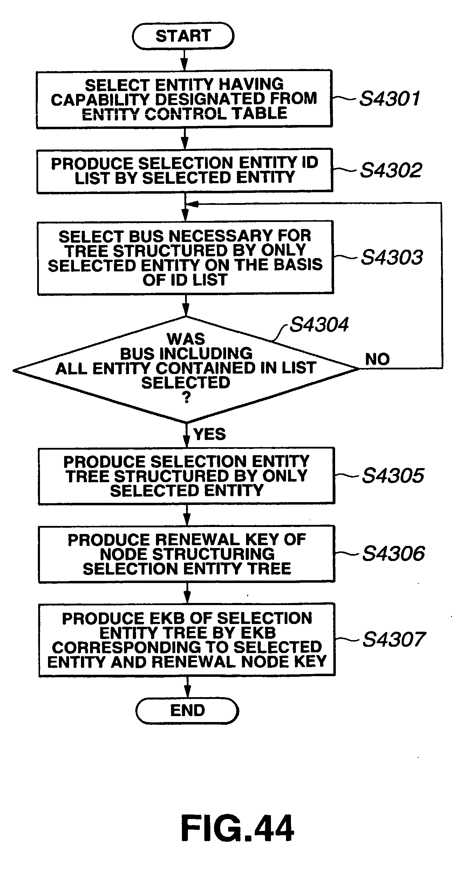

In the key distribute center (KDC), for example, only the device capable of reproducing a specific content produces a decodable enabling key block (EKB) on the basis of the capability control table. The processing for producing the enabling key block on the basis of capability information will be described with reference to FIG. 44.

First, in Step S4301, the key distribute center (KDC) selects an entity having the designated capability from the capability control table. Concretely, for example, where a content provider desires to distribute reproducible data on the basis of the voice data reproducing processing system A is set to [1] is selected from the capability list of FIG. 43A. an entity, for example, in which item of the voice data reproducing (system A) is set to [1], is selected from the capability list of FIG. 43A.

Next, in Step S4302, a list of selected entity ID constituted by the selected entities is produced. Next, in Step S4303, a pass (a pass of key distribution constitution) necessary for a tree constituted by selected entity ID is selected. In Step 4304, whether or not all pass selections contained in the list of selected entity ID are completed is judged to produce a pass in Step S4303 till completion. This means the process for sequentially selecting the respective passes where a plurality of entities are selected.

When all pass selections contained in the selected entity ID are completed, the procedure proceeds to Step S4305 to constitute a key distribution tree structure constituted merely by the selected entities.

Next, in Step S4306, renewing of node keys of the tree structure produced in Step S4305 is carried out to produce renewal nod keys. Further, sub-EKB of the selected entities constituting the tree is taken out of the capability control table, and the enabling key block (EKB) that can be decrypted merely in the device of the selected entities is produced on the basis of the sub-EKB and the renewal node key produced in Step S4306. The enabling key block (EKB) thus produced is utilized merely in the device having specific capability, that is, being a decodable enabling key block (EKB. For example, a content key is encrypted by the enabling key block (EKB), and a content compressed on the basis of a specific program in the content key is distributed to the device whereby the content is utilized only in the specific decodable device selected by the key distribute center (KDC).

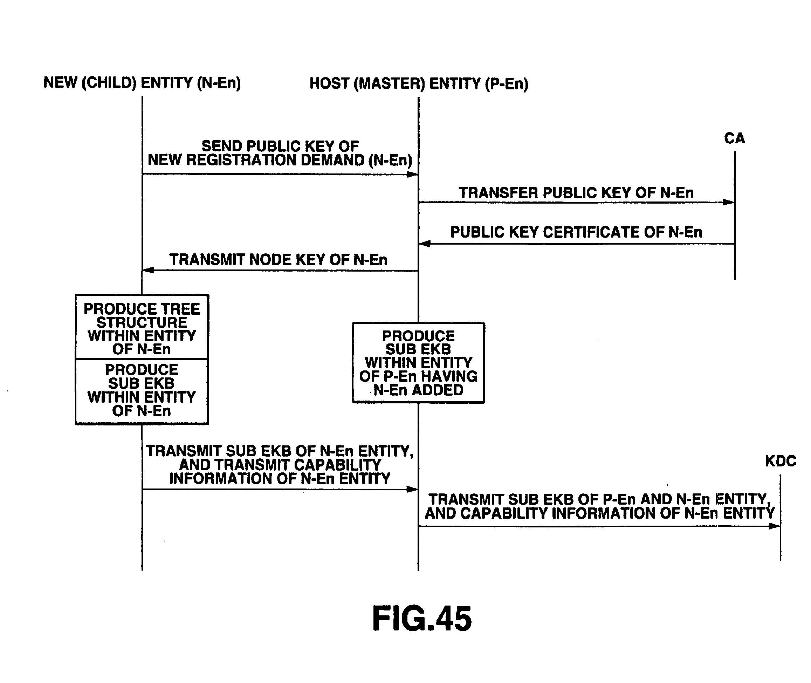

As described above, in the key distribute center (KDC), for example, only the device capable of reproducing the specific content produces the decodable enabling key block (EKB) on the basis of the capability control table. Accordingly, where a new entity is registered, it is necessary to previously obtain capability of a newly registered entity. The processing of notifying capability with the entity new registration will be described with reference to FIG. 45.

FIG. 45 is a view showing a capability notice processing sequence where the new entity is participated in the key distribution tree constitution.

The new (child) entity (N-En) added newly to the tree constitution executes a new registration request with respect to the hose entity (P-En). Each entity holds a public key in accordance with the public key encryption system, and the new entity sends own public key to the host entity (P-En) when the registration request takes place.

The host entity (P-En) which received the registration request transfers the public key of the new (child) entity (N-En) received to the certificate authority (CA), and receives a public key of the new (child) entity (N-En) to which a signature of CA is added. These procedures are carried out as the procedure of mutual authentication between the host entity (P-En) and the new (child) entity (N-En).

When the authentication of the new registration request entity is finished by these processes, the host entity (P-Ne) grants the registration of the new (child) entity (N-En) to transmit a node key of the new (child) entity (N-En) to the new (child) entity (N-En). This node key is one node key of the terminal node of the host entity (P-En) and corresponds to a top node of the new (child) entity (N-En), that is, a sub-root key.

When transmission of this node key is finished, the new (child) entity (N-En) constructs the tree constitution of the new (child) entity (N-En) , sets the sub-root key of the top node received to the top of the constructed tree, sets keys of each node and leaf, and produces the enabling key block (sub-EKB) in the entity. On the other hand, the host entity (P-En) also produces the sub-EKB in the host entity (P-En) to which is added a terminal node to be effective by the addition of the new (child) entity (N-En).

When the new (child) entity (N-En) produces sub-EKB constituted by a node key and a leaf key in the new (child) entity (N-En), the new (child) entity (N-En) transmits it to the host entity (P-En), and further notifies capability information with in connection with the device controlled by own entity to the host entity.

The host entity (P-En) which received sub-EKB and capability information from the new (child) entity (N-En) transmits sub-EKB and capability information received, and renewed sub-EKB of the host entity (P-En) to the key distribute center (KDC).

The key distribute center (KDC) registers the sub-EKB and capability information of entity received in the capability control table described with reference to FIGS. 43A.and 43B, and renews the capability control table. The key distribute center (KDC) is possible to produce various forms of EKB, that is, EKB that can be decrypted merely by the entity having specific capability or devices.

The present invention has been described in detail with reference to the specific embodiments. However, it is obvious that those skilled in art may amend or replace the embodiments within the scope not departing from the subject matter of the present invention. That is, the present invention has been disclosed in the form of illustration and should not be interpreted imitatively. For judging the subject matter of the present invention, reference should be made to the claims described herein after.

### Industrial Applicability

As described above, according to the information processing system and method according to the present invention, in the production of the enabling key block (EKB) that can be applied as the encrypting processing key block such as a content key, an authentication key, a content check value producing key, a program data or the like, the hierarchical key distribution tree is reconstructed according to the distribution device, and the enabling key block (EKB) is produced on the basis of the node and leaf contained in the reconstructed simplified tree. Therefore, a considerable reduction of data quantity of the enabling key block (EKB) is realized.

Further, according to the information processing system and method according to the present invention, the enabling key block (EKB) on the basis of the simplified reconstructed hierarchical tree is constituted, and data for judging the propriety of encrypted key data is contained in a tag as a position discriminator of encrypted key data in EKB. Therefore, a considerable reduction in data quantity of EKB is realized, and extraction of encrypted key data using a tag in the device which received EKB is facilitated to make EKB decrypting process in the device effective.

## Claims

1. An information processing system having a group of information processing devices organised in a hierarchical tree structure having a plurality of nodes and leaves, said nodes being connected to a top node via one or more intermediate nodes, and each leaf corresponding to an information processing device, the nodes having respective keys, each information processing device having processing means storing a key set comprising a leaf key unique to that device, the root key of the top node and the node keys of the or each intermediate node that are in the direct path from the corresponding leaf to the top node, and operable to decrypt encrypted message data distributed to said device, using said key set;
the system being arranged to send to an information processing device a message encrypted by a new node key, the message comprising an enabling key block (EKB), the EKB including:
a data part containing at least the new node key encrypted by the key of another node of the group; and
a tag part containing data indicating the position in the hierarchical tree of the or each said encrypted key.

2. A system according to claim 1, wherein the said new node key is encrypted by the key of a subordinate node.

3. A system according to claim 2, wherein the said data part contains at least a new root key encrypted by the key of the subordinate node.

4. A system according to claim 2 or 3 wherein the said data part contains a plurality of new node keys each encrypted by the key of a subordinate node, the most subordinate new key being encrypted by an unchanged key of a node subordinate to the node of the most subordinate new key.

5. A system according to claim 1, 2, 3 or 4 wherein the tag part indicates, for each new encrypted key, which node key encrypts that new key.

6. A system according to claim 5 when dependent upon claim 2, 3 or 4 wherein, for each node having a plurality of immediately subordinate nodes, the tag part stores data indicating, for each immediately subordinate node, whether or not that immediately subordinate node stores a decryption key.

7. A system according to claim 6 wherein, each intermediate node has left and right subordinate nodes.

8. A system according to claim 1, wherein the said data part of the EKB represents the said tree structure simplified as constituted by a top node connected to a plurality of terminal nodes omitting at least some intermediate nodes, the data in the data part containing for a node of the simplified tree at least one new node key encrypted by the key of another node of the simplified tree.

9. A system according to claim 8, wherein the tag part contains data indicates for each node of the un-simplified tree, whether the EKB of the simplified tree contains encrypted data for that node of the un-simplified tree.

10. A system according to claim 8 or 9 wherein the simplified tree has no more than 2 branches associated with each node above a terminal node.

11. A system according to claim 8 or 9 wherein the simplified tree has not less than 3 branches directly connecting the top node with respective terminal nodes.

12. A system according to any preceding claim wherein the said message comprises a combination of:
(i) said EKB including said data part and tag part; and
(ii) a message data part including message data encrypted by a new node key included in the EKB.

13. A system according to claim 12, wherein the said message data is a content key.

14. A system according to claim 12, wherein the said message data is an authentication key.

15. A system according to claim 12, wherein the said message data is a key for generating an integrity check value.

16. A system according to claim 12, wherein the said message data comprises a program code.

17. A system according to any one of claims 12 to 16 wherein the said processing means of a said device is operable to sequentially extract the said new node key from the EKB and decrypt the message data using the extracted node key.

18. A system according to any preceding claim wherein the said group having the said hierarchical tree structure is an entity comprising a set of the said devices having a common attribute.

19. A system according to claim 18 wherein the said group is a group the tree structure of which has, as the top node, a terminal node of the tree structure of another group the another group being an entity comprising a set of devices having a common attribute.

20. A method of processing information in a system having a group of information processing devices organised in a hierarchical tree structure having a plurality of nodes and leaves, said nodes being connected to a top node via one or more intermediate nodes, and each leaf corresponding to an information processing device, the nodes having respective keys, each information processing device having processing means, the method comprising:
storing in each device a key set comprising a leaf key unique to that device, the root key of the top node and the node keys of the or each intermediate node that are in the direct path from the corresponding leaf to the top node;
generating, and sending to an information processing device, a message encrypted by a new node key, the message comprising an enabling key block (EKB), the EKB including:
a data part containing at least the new node key encrypted by the key of another node of the group; and
a tag part containing data indicating the position in the hierarchical tree of the or each said encrypted key.

21. A method according to claim 20, wherein the said new node key is encrypted by the key of a subordinate node.

22. A method according to claim 21, wherein the said data part contains at least a new root key encrypted by the key of the subordinate node.

23. A method according to claim 21 or 22 wherein the said data part contains a plurality of new node keys each encrypted by the key of a subordinate node, the most subordinate new key being encrypted by an unchanged key of a node subordinate to the node of the most subordinate new key.

24. A method according to claim 20, 21, 22 or 23 wherein the tag part indicates, for each new encrypted key, which node key encrypted to that new key.

25. A method according to claim 24 when dependent upon claim 21, 22 or 23 wherein, for each node having a plurality of immediately subordinate nodes, the tag part stores data indicating, for each immediately subordinate node, whether or not that immediately subordinate node stores a decryption key.

26. A method according to claim 25 wherein, each intermediate node has left and right subordinate nodes.

27. A method according to claim 20, wherein the said data part of the EKB represents the said tree structure simplified as constituted by a top node connected to a plurality of terminal nodes omitting at least some intermediate nodes, the data in the data part containing for a node of the simplified tree at least one new node key encrypted by the key of another node of the simplified tree.

28. A method according to claim 27, wherein the tag part contains data indicates for each node of the un-simplified tree, whether the EKB of the simplified tree contains encrypted data for that node of the un-simplified tree.

29. A method according to claim 27 or 28 wherein the simplified tree has no more than 2 branches associated with each node above a terminal node.

30. A method according to claim 27 or 28 wherein the simplified tree has not less than 3 branches directly connecting the top node with respective terminal nodes.

31. A method according to any one of claims 20 to 30, wherein the said message comprises a combination of:
(i) said EKB including said data part and tag part; and
(ii) a message data part including message data encrypted by a new node key included in the EKB.

32. A method according to claim 31, wherein the said message data is a content key.

33. A method according to claim 31, wherein the said message data is an authentication key.

34. A method according to claim 31, wherein the said message data is a key for generating an integrity check value.

35. A method according to claim 31, wherein the said message data comprises a program code.

36. A method according to any one of claims 31 to 35, comprising the steps of sequentially extracting the said new node key from the EKB and decrypting the message data using the extracted node key.

37. A method according to any one of claims 20 to 36 wherein the said group having the said hierarchical tree structure is an entity comprising a set of the said devices having a common attribute.

38. A method according to claim 37 wherein the said group is a group the tree structure of which has, as the top node a terminal node of the tree structure of another group the another group having an entity comprising a set of devices having a common attribute.

39. A method according to any one of claims 20 to 38 comprising the steps of
decrypting, in a said device, the said enabling key block using the said key set; and
decrypting the said encrypted message.

40. A method according to any one of claims 20 to 39 wherein the said message comprises a combination of:
(i) said EKB including said data part and tag part; and
(ii) a message data part including message data encrypted by a new node key included in the EKB.

41. A method according to claim 40, wherein the said message data is a content key.

42. A method according to claim 40, wherein the said message data is an authentication key.

43. A method according to claim 40 wherein the said message data is a key for generating an integrity check value.

44. A method according to claim 40, wherein the said message data comprises a program code.

45. An information recording medium for use in a system of any one of claims 1 to 19 on which is stored;
the said enabling key block including the data part and the tag part together with message data encrypted by the said new node key.

46. A medium according to claim 45, wherein the said new node key is encrypted by the key of a node subordinate thereto in the group.

47. A medium according to claim 46, wherein the said data part contains at least a new root key encrypted by the key of the subordinate node.

48. A medium according to claim 46 or 47 wherein the said data port contains a plurality of new node keys each encrypted by the key of a subordinate node, the most subordinate new key being encrypted by an unchanged key of a node subordinate to the node of the most subordinate new key.

49. A medium according to claim 45, 46, 47 or 48 wherein the tag part indicates, for each new encrypted key, which node key encrypted to that new key.

50. A medium according to claim 49 when dependent upon claim 46, 47 or 48
wherein, for each node having a plurality of immediately subordinate nodes, the tag part stores data indicating, for each immediately subordinate node, whether or not that immediately subordinate node stores a decryption key.

51. A medium according to claim 50 wherein, each intermediate node has left and right subordinate nodes.

52. A medium according to claim 45, wherein the said data part of the EKB represents the said tree structure simplified as constituted by a top node connected to a plurality of terminal nodes omitting at least some intermediate nodes, the data in the data part containing for a node of the simplified tree at least one new node key encrypted by the key of another node of the simplified tree.

53. A medium according to claim 52, wherein the tag part contains data indicates for each node of the un-simplified tree, whether the EKB of the simplified tree contains encrypted data for that node of the un-simplified tree.

54. A medium according to claim 52 or 53 wherein the simplified tree has no more than 2 branches associated with each node above a terminal node.

55. A medium according to claim 52 or 53 wherein the simplified tree has not less than 3 branches directly connecting the top node with respective terminal nodes.

56. A medium according to any one of claims 45 to 55, wherein the said message data is a content key.

57. A medium according to any one of claims 45 to 55, wherein the said message data is an authentication key.

58. A medium according to any one of claims 45 to 55, wherein the said message data is a key for generating an integrity check value.

59. A medium according to any one of claims 45 to 55, wherein the said message data comprises a program code.

60. A computer program comprising computer code which, when loaded into a suitable computer system and executed, causes the computer system to implement the method of any of claims 20 to 38.

## Patentansprüche

1. Informationsverarbeitungssystem, welches eine Gruppe von Informationsverarbeitungseinrichtungen hat, welche in einer hierarchischen Baumstruktur organisiert sind, die mehrere Knoten und Blätter hat, wobei die Knoten mit einem Kopfknoten über einen oder mehrere Zwischenknoten verbunden sind, und jedes Blatt einer Informationsverarbeitungseinrichtung entspricht, wobei die Knoten entsprechende Schlüssel aufweisen, wobei jede Informationsverarbeitungseinrichtung eine Informationseinrichtung hat, welche einen Schlüsselsatz speichert, der einen Blattschlüssel, der für diese Einrichtung spezifisch ist, den Wurzelschlüssel des Kopfknotens und den Knotenschlüssel des oder jedes Zwischenknotens aufweist, welche im unmittelbaren Pfad vom entsprechenden Blatt zum Knopfknoten sind, und betriebsfähig ist, verschlüsselte Mitteilungsdaten zu entschlüsseln, welche der Einrichtung zugeteilt sind, wobei der Schlüsselsatz verwendet wird;
wobei das System eingerichtet ist, zu einer Informationsverarbeitungseinrichtung eine Mitteilung zu senden, welche durch einen neuen Knotenschlüssel verschlüsselt ist, wobei die Mitteilung einen Freigabeschlüsselblock (EKB) umfasst, wobei der EKB aufweist:
ein Datenteil, welches zumindest den neuen Knotenschlüssel enthält, der durch den Schlüssel eines anderen Knotens der Gruppe verschlüsselt ist; und
ein Kennzeichnungsteil, welches Daten enthält, welche die Position im hierarchischen Baum des oder jedes verschlüsselten Schlüssels zeigt.

2. System nach Anspruch 1, wobei der neue Knotenschlüssel durch den Schlüssel eines untergeordneten Knotens verschlüsselt ist.

3. System nach Anspruch 2, wobei das Datenteil zumindest einen neuen Wurzelschlüssel enthält, der durch den Schlüssel des untergeordneten Knotens verschlüsselt ist.

4. System nach Anspruch 2 oder 3, wobei das Datenteil mehrere neue Knotenschlüssel enthält, die jeweils durch den Schlüssel eines untergeordneten Knotens verschlüsselt sind, wobei der untergeordnetste neue Schlüssel durch einen nicht geänderten Schlüssel eines Knotens verschlüsselt ist, der dem Knoten des untergeordnetsten neuen Schlüssels untergeordnet ist.

5. System nach Anspruch 1, 2, 3 oder 4, wobei das Kennzeichnungsteil für jeden neuen verschlüsselten Schlüssel zeigt, welcher Knotenschlüssel diesen neuen Schlüssel verschlüsselt.

6. System nach Anspruch 5, wenn von Anspruch 2, 3 oder 4 abhängig, wobei für jeden Knoten, der mehrere unmittelbar untergeordnete Knoten hat, das Kennzeichnungsteil Daten speichert, welche für jeden unmittelbar untergeordneten Knoten zeigen, ob dieser unmittelbar untergeordnete Knoten einen Entschlüsselungsschlüssel speichert oder nicht.

7. System nach Anspruch 6, wobei jeder Zwischenknoten einen linken und rechten untergeordneten Knoten hat.

8. System nach Anspruch 1, wobei das Datenteil des EKB die vereinfachte Baumstruktur zeigt, die durch einen Kopfknoten gebildet ist, der mit mehreren Anschlussknoten verbunden ist, wobei zumindest einige Zwischenknoten ausgelassen sind, wobei die Daten im Datenteil für einen Knoten des vereinfachten Baums zumindest einen neuen Knotenschlüssel enthalten, der durch den Schlüssel eines anderen Knotens des vereinfachten Baums verschlüsselt ist.

9. System nach Anspruch 8, wobei das Kennzeichnungsteil Daten enthält, die für jeden Knoten des nicht vereinfachten Baums bezeichnend sind, ob der EKB des vereinfachten Baums verschlüsselte Daten für diesen Knoten des nicht vereinfachten Baums enthält.

10. System nach Anspruch 8 oder 9, wobei der vereinfachte Baum nicht mehr als zwei Zweige hat, welche mit jedem Knoten über einem Anschlussknoten verknüpft sind.

11. System nach Anspruch 8 oder 9, wobei der vereinfachte Baum nicht weniger als drei Zweige hat, die den Kopfknoten mit den entsprechenden Anschlussknoten unmittelbar verbinden.

12. System nach einem der vorhergehenden Ansprüche, wobei die Mitteilung eine Kombination aufweist von:
(i) dem EKB, der das Datenteil und das Kennzeichnungsteil aufweist; und
(ii) einem Mitteilungsdatenteil, welches Mitteilungsdaten aufweist, welche durch einen neuen Knotenschlüssel verschlüsselt sind, der im EKB enthalten ist.

13. System nach Anspruch 12, wobei die Mitteilungsdaten ein Inhaltsschlüssel sind.

14. System nach Anspruch 12, wobei die Mitteilungsdaten ein Beglaubigungsschlüssel sind.

15. System nach Anspruch 12, wobei die Mitteilungsdaten ein Schlüssel sind, um einen Integritätsprüfwert zu erzeugen.

16. System nach Anspruch 12, wobei die Mitteilungsdaten einen Programmcode umfassen.

17. System nach einem der Ansprüche 12 bis 16, wobei die Verarbeitungseinrichtung einer genannten Einrichtung betriebsfähig ist, sequentiell den neuen Knotenschlüssel vom EKB zu extrahieren und die Mitteilungsdaten unter Verwendung des extrahierten Knotenschlüssels zu entschlüsseln.

18. System nach einem der vorhergehenden Ansprüche, wobei die Gruppe, welche die hierarchische Baumstruktur hat, eine Einheit ist, welche einen Satz der Einrichtungen aufweist, welche ein gemeinsames Attribut haben.

19. System nach Anspruch 18, wobei die Gruppe eine Gruppe ist, deren Baumstruktur - als Kopfknoten - einen Anschlussknoten der Baumstruktur einer anderen Gruppe hat, wobei die andere Gruppe eine Einheit ist, welche einen Satz von Einrichtungen aufweist, die ein gemeinsames Attribut haben.

20. Verfahren zum Verarbeiten von Information in einem System, welches eine Gruppe von Informationsverarbeitungseinrichtungen hat, welche in einer hierarchischen Baumstruktur organisiert sind, die mehrere Knoten und Blätter hat, wobei die Knoten mit einem Kopfknoten über einen oder mehrere Zwischenknoten verbunden sind und jedes Blatt einer Informationsverarbeitungseinrichtung entspricht, wobei die Knoten entsprechende Schlüssel haben, wobei jede Informationsverarbeitungseinrichtung eine Verarbeitungseinrichtung hat, wobei das Verfahren aufweist:
Speichern - in jeder Einrichtung - eines Schlüsselsatzes, der einen Blattschlüssel, der für diese Einrichtung spezifisch ist, den Wurzelschlüssel des Kopfknotens und die Knotenschlüssel des oder jedes Zwischenknotens, welche in dem direkten Pfad vom entsprechenden Blatt zum Kopfknoten sind, aufweist;
Erzeugen und Senden - zu einer Informationsverarbeitungseinrichtung - einer Mitteilung, welche durch einen neuen Knotenschlüssel verschlüsselt ist, wobei die Mitteilung einen Freigabeschlüsselblock (EKB) aufweist, wobei der EKB aufweist:
ein Datenteil, welches zumindest den neuen Knotenschlüssel enthält, der durch den Schlüssel eines anderen Knotens der Gruppe verschlüsselt ist; und
ein Kennzeichnungsteil, welches Daten enthält, welche die Position im hierarchischen Baum des oder jedes verschlüsselten Schlüssels zeigen.

21. Verfahren nach Anspruch 20, wobei der neue Knotenschlüssel durch den Schlüssel eines untergeordneten Knotens verschlüsselt ist.

22. Verfahren nach Anspruch 21, wobei das Datenteil zumindest einen neuen Wurzelschlüssel enthält, der durch den Schlüssel des untergeordneten Knotens verschlüsselt ist.

23. Verfahren nach Anspruch 21 oder 22, wobei das Datenteil mehrere neue Knotenschlüssel enthält, welche jeweils durch den Schlüssel eines untergeordneten Knotens verschlüsselt sind, wobei der untergeordnetste neue Schlüssel durch einen nicht geänderten Schlüssel eines Knotens verschlüsselt ist, der dem Knoten des untergeordnetsten neuen Schlüssels untergeordnet ist.

24. Verfahren nach Anspruch 20, 21, 22 oder 23, wobei das Kennzeichnungsteil für jeden neunen verschlüsselten Schlüssel zeigt, welcher Knotenschlüssel auf diesen neuen Schlüssel verschlüsselt ist.

25. Verfahren nach Anspruch 24, wenn abhängig vom Patentanspruch 21, 22 oder 23, wobei für jeden Knoten, der mehrere unmittelbar untergeordnete Knoten hat, das Kennzeichnungsteil Daten speichert, welche für jeden unmittelbar untergeordneten Knoten zeigen, ob dieser unmittelbar untergeordnete Knoten einen Entschlüsselungsschlüssel speichert oder nicht.

26. Verfahren nach Anspruch 25, wobei jeder Zwischenknoten einen linken und rechten untergeordneten Knoten hat.

27. Verfahren nach Anspruch 20, wobei das Datenteil des EKB die vereinfachte Baumstruktur zeigt, die durch einen Kopfknoten gebildet ist, der mit mehreren Anschlussknoten verbunden ist, wobei zumindest einige Zwischenknoten ausgelassen sind, wobei die Daten im Datenteil für einen Knoten des vereinfachten Baums zumindest einen neuen Knotenschlüssel enthalten, der durch den Schlüssel eines anderen Knotens des vereinfachten Baums verschlüsselt ist.

28. Verfahren nach Anspruch 27, wobei das Kennzeichnungsteil Daten enthält, welche für jeden Knoten des nicht vereinfachten Baums zeigen, ob der EKB des vereinfachten Baums verschlüsselte Daten für diesen Knoten des nicht vereinfachten Baums enthält.

29. Verfahren nach Anspruch 27 oder 28, wobei der vereinfachte Baum mehr als zwei Zweige hat, welche mit jedem Knoten über einem Anschlussknoten verknüpft sind.

30. Verfahren nach Anspruch 27 oder 28, wobei der vereinfachte Baum nicht weniger als drei Zweige hat, welche den Kopfknoten mit den jeweiligen Anschlussknoten unmittelbar verbinden.

31. Verfahren nach einem der Ansprüche 20 bis 30, wobei die Mitteilung eine Kombination aufweist von:
(i) dem EKB, der das Datenteil und das Kennzeichnungsteil aufweist; und
(ii) einem Mittelungsdatenteil, welches Mitteilungsdaten aufweist, welche durch einen neuen Knotenschlüssel, der im EKB enthalten ist, verschlüsselt sind.

32. Verfahren nach Anspruch 31, wobei die Mitteilungsdaten ein Inhaltsschlüssel sind.

33. Verfahren nach Anspruch 31, wobei die Mitteilungsdaten ein Berechtigungsschlüssel sind.

34. Verfahren nach Anspruch 31, wobei die Mitteilungsdaten ein Schlüssel sind, um einen Integritätsprüfwert zu erzeugen.

35. Verfahren nach Anspruch 31, wobei die Mitteilungsdaten einen Programmcode umfassen.

36. Verfahren nach einem der Ansprüche 31 bis 35, welches die Schritte aufweist, um sequentiell den neuen Knotenschlüssel vom EKB zu extrahieren und die Mitteilungsdaten unter Verwendung des extrahierten Knotenschlüssels zu entschlüsseln.

37. Verfahren nach einem der Ansprüche 20 bis 36, wobei die Gruppe, welche die hierarchische Baumstruktur hat, eine Einheit ist, welche einen Satz der Einrichtungen aufweist, die ein gemeinsames Attribut haben.

38. Verfahren nach Anspruch 37, wobei die Gruppe eine Gruppe ist, deren Baumstruktur als Kopfknoten einen Anschlussknoten der Baumstruktur der anderen Gruppe hat, wobei die andere Gruppe eine Einheit hat, welche einen Satz von Einrichtungen aufweist, die ein gemeinsames Attribut haben.

39. Verfahren nach einem der Ansprüche 20 bis 38, welches folgende Schritte aufweist:
Entschlüsseln - in einer genannten Einrichtung - des Freigabeschlüsselblocks unter Verwendung des Schlüsselsatzes; und
Entschlüsseln der verschlüsselten Mitteilung.

40. Verfahren nach einem der Ansprüche 20 bis 39, wobei die Mitteilung eine Kombination aufweist von:
(i) dem EKB, der das Datenteil und das Kennzeichnungsteil aufweist; und
(ii) einem Mitteilungsdatenteil, welches Mitteilungsdaten aufweist, welche durch einen neuen Knotenschlüssel verschlüsselt sind, der im EKB enthalten ist.

41. Verfahren nach Anspruch 40, wobei die Mitteilungsdaten ein Inhaltsschlüssel sind.

42. Verfahren nach Anspruch 40, wobei die Mitteilungsdaten ein Berechtigungsschlüssel sind.

43. Verfahren nach Anspruch 40, wobei die Mitteilungsdaten ein Schlüssel sind, um einen Integritätsprüfwert zu erzeugen.

44. Verfahren nach Anspruch 40, wobei die Mitteilungsdaten einen Programmcode umfassen.

45. Informationsaufzeichnungsmedium zur Verwendung in einem System nach einem der Ansprüche 1 bis 19, auf welchem gespeichert ist:
der Freigabeschlüsselblock, der das Datenteil und das Kennzeichnungsteil zusammen mit Mitteilungsdaten, welche durch den neuen Knotenschlüssel verschlüsselt sind, aufweist.

46. Medium nach Anspruch 45, wobei der neue Knotenschlüssel durch den Code eines Knotens verschlüsselt ist, der dazu in der Gruppe untergeordnet ist.

47. Medium nach Anspruch 46, wobei das Datenteil zumindest einen neuen Wurzelschlüssel enthält, der durch den Schlüssel des untergeordneten Knotens verschlüsselt ist.

48. Medium nach Anspruch 46 oder 47, wobei das Datenteil mehrere neue Knotenschlüssel enthält, die jeweils durch den Schlüssel eines untergeordneten Knotens verschlüsselt sind, wobei der untergeordnetste neue Schlüssel durch einen nicht geänderten Schlüssel eines Knotens verschlüsselt ist, der dem Knoten des untergeordnetsten neuen Schlüssels untergeordnet ist.

49. Medium nach Anspruch 45, 46, 47 oder 48, wobei das Kennzeichnungsteil für jeden neuen verschlüsselten Schlüssel zeigt, welcher Knotenschlüssel auf diesen neuen Schlüsselt verschlüsselt ist.

50. Medium nach Anspruch 49, wenn vom Anspruch 46, 47 oder 48 abhängig, wobei für jeden Knoten, der mehrere unmittelbar untergeordnete Knoten hat, das Kennzeichnungsteil Daten speichert, welche für jeden unmittelbar untergeordneten Knoten zeigen, ob dieser unmittelbar untergeordnete Knoten einen Entschlüsselungsschlüssel speichert oder nicht.

51. Medium nach Anspruch 50, wobei jeder Zwischenknoten einen linken und rechten untergeordneten Knoten hat.

52. Medium nach Anspruch 45, wobei das Datenteil des EKB die vereinfachte Baumstruktur zeigt, die durch einen Kopfknoten ausgebildet ist, der mit mehreren Anschlussknoten verbunden ist, wobei zumindest einige Zwischenknoten ausgelassen sind, wobei die Daten im Datenteil für einen Knoten des vereinfachten Baums zumindest einen neuen Knotenschlüssel enthalten, der durch den Schlüssel des anderen Knotens des vereinfachten Baums verschlüsselt ist.

53. Medium nach Anspruch 52, wobei das Kennzeichnungsteil Daten enthält, die für jeden Knoten des nicht vereinfachten Baums zeigen, ob der EKB des vereinfachten Baums verschlüsselte Daten für diesen Knoten des nicht vereinfachten Baums enthält.

54. Medium nach Anspruch 52 oder 53, wobei der vereinfachte Baum nicht mehr als zwei Zweige hat, die mit jedem Knoten über einem Anschlussknoten verknüpft sind.

55. Medium nach Anspruch 52 oder 53, wobei der vereinfachte Baum nicht weniger als drei Zweige hat, welche unmittelbar den Kopfknoten mit den jeweiligen Anschlussknoten verbinden.

56. Medium nach einem der Ansprüche 45 bis 55, wobei die Mitteilungsdaten ein Inhaltschlüssel sind.

57. Medium nach einem der Ansprüche 45 bis 55, wobei die Mitteilungsdaten ein Berechtigungsschlüssel sind.

58. Medium nach einem der Ansprüche 45 bis 55, wobei die Mitteilungsdaten ein Schlüssel sind, um einen Integritätsprüfwert zu erzeugen.

59. Medium nach einem der Ansprüche 45 bis 55, wobei die Mitteilungsdaten einen Programmcode umfassen.

60. Computerprogramm, welches einen Computercode aufweist, welches, wenn dies in ein geeignetes Computersystem geladen und ausgeführt wird, veranlasst, dass das Computersystem das Verfahren nach einem der Ansprüche 20 bis 38 ausführt.

## Revendications

1. Un système de traitement d'information ayant un groupe de dispositifs de traitement d'information organisés en une structure en arbre hiérarchique ayant une multiplicité de noeuds et de feuilles, les noeuds étant connectés à un noeud de sommet en passant par un ou plusieurs noeuds intermédiaires, et chaque feuille correspondant à un dispositif de traitement d'information, les noeuds ayant des clés respectives, chaque dispositif de traitement d'information ayant un moyen de traitement qui stocke un ensemble de clés comprenant une clé feuille spécifique à ce dispositif, la clé racine du noeud de sommet et les clés de noeud du ou de chaque noeud intermédiaire qui sont dans le chemin direct allant de la feuille correspondante au noeud de sommet, et pouvant fonctionner de façon à déchiffrer des données de message chiffrées distribuées audit dispositif, en utilisant l'ensemble de clés;
le système étant agencé pour envoyer à un dispositif de traitement d'information un message chiffré par une nouvelle clé de noeud, le message comprenant un bloc de clés de validation (EKB pour "Enabling Key Block"), l'EKB incluant :
une partie de données contenant au moins la nouvelle clé de noeud chiffrée par la clé d'un autre noeud du groupe; et
une partie d'étiquette contenant des données indiquant la position, dans l'arbre hiérarchique, de ladite clé chiffrée, ou de chacune d'elles.

2. Un système selon la revendication 1, dans lequel la nouvelle clé de noeud est chiffrée par la clé d'un noeud subordonné.

3. Un système selon la revendication 2, dans lequel la partie de données contient au moins une nouvelle clé racine chiffrée par la clé du noeud subordonné.

4. Un système selon la revendication 2 ou 3, dans lequel la partie de données contient une multiplicité de nouvelles clés de noeud, chacune d'elles étant chiffrée par la clé d'un noeud subordonné, la nouvelle clé la plus subordonnée étant chiffrée par une clé inchangée d'un noeud subordonné au noeud de la nouvelle clé la plus subordonnée.

5. Un système selon la revendication 1, 2, 3 ou 4, dans lequel la partie d'étiquette indique, pour chaque nouvelle clé chiffrée, quelle clé de noeud chiffre cette nouvelle clé.

6. Un système selon la revendication 5 lorsqu'elle dépend de la revendication 2, 3 ou 4 dans lequel, pour chaque noeud ayant une multiplicité de noeuds immédiatement subordonnés, la partie d'étiquette stocke des données indiquant, pour chaque noeud immédiatement subordonné, si ce noeud immédiatement subordonné stocke une clé de déchiffrement, ou non.

7. Un système selon la revendication 6 dans lequel chaque noeud intermédiaire a des noeuds subordonnés gauche et droit.

8. Un système selon la revendication 1, dans lequel la partie de données de l'EKB représente la structure en arbre simplifiée comme étant constituée d'un noeud de sommet connecté à une multiplicité de noeuds terminaux, en omettant au moins certains noeuds intermédiaires, les données dans la partie de données contenant, pour un noeud de l'arbre simplifié, au moins une nouvelle clé de noeud chiffrée par la clé d'un autre noeud de l'arbre simplifié.

9. Un système selon la revendication 8, dans lequel la partie d'étiquette contient des données indiquant, pour chaque noeud de l'arbre non simplifié, si l'EKB de l'arbre simplifié contient des données chiffrées pour ce noeud de l'arbre non simplifié.

10. Un système selon la revendication 8 ou 9, dans lequel l'arbre simplifié n'a pas plus de deux branches associées à chaque noeud au-dessus d'un noeud terminal.

11. Un système selon la revendication 8 ou 9 dans lequel l'arbre simplifié n'a pas moins de trois branches connectant directement le noeud de sommet à des noeuds terminaux respectifs.

12. Un système selon l'une quelconque des revendications précédentes, dans lequel ledit message comprend une combinaison de :
(i) ledit EKB incluant la partie de données et la partie d'étiquette; et
(ii) une partie de données de message incluant des données de message chiffrées par une nouvelle clé de noeud incluse dans l'EKB.

13. Un système selon la revendication 12, dans lequel les données de message sont une clé de contenu.

14. Un système selon la revendication 12, dans lequel les données de message sont une clé d'authentification.

15. Un système selon la revendication 12, dans lequel les données de message sont une clé pour générer une valeur de contrôle d'intégrité.

16. Un système selon la revendication 12, dans lequel les données de message comprennent un code de programme.

17. Un système selon l'une quelconque des revendications 12 à 16, dans lequel le moyen de traitement dudit dispositif peut fonctionner de façon à extraire séquentiellement de l'EKB la nouvelle clé de noeud, et à déchiffrer les données de message en utilisant la clé de noeud extraite.

18. Un système selon l'une quelconque des revendications précédentes, dans lequel ledit groupe ayant la structure en arbre hiérarchique est une entité comprenant un ensemble desdits dispositifs ayant un attribut commun.

19. Un système selon la revendication 18, dans lequel ledit groupe est un groupe dont la structure en arbre a, pour le noeud de sommet, un noeud terminal de la structure en arbre d'un autre groupe, l'autre groupe étant une entité comprenant un ensemble de dispositifs ayant un attribut commun.

20. Un procédé de traitement dans un système ayant un groupe de dispositifs de traitement d'information organisés en une structure en arbre hiérarchique ayant une multiplicité de noeuds et de feuilles, les noeuds étant connectés à un noeud de sommet en passant par un ou plusieurs noeuds intermédiaires, et chaque feuille correspondant à un dispositif de traitement d'information, les noeuds ayant des clés respectives, chaque dispositif de traitement d'information ayant un moyen de traitement, le procédé comprenant les étapes suivantes :
stocker dans chaque dispositif un ensemble de clés comprenant une clé feuille spécifique à ce dispositif, la clé racine du noeud de sommet et les clés de noeud du ou de chaque noeud intermédiaire qui sont dans le chemin direct allant de la feuille correspondante au noeud de sommet;
générer, et envoyer à un dispositif de traitement d'information, un message chiffré par une nouvelle clé de noeud, le message comprenant un bloc de clés de validation (EKB), l'EKB incluant :
une partie de données contenant au moins la nouvelle clé de noeud chiffrée par la clé d'un autre noeud du groupe; et
une partie d'étiquette contenant des données indiquant la position, dans l'arbre hiérarchique, de ladite clé chiffrée, ou de chacune d'elles.

21. Un procédé selon la revendication 20, dans lequel la nouvelle clé de noeud est chiffrée par la clé d'un noeud subordonné.

22. Un procédé selon la revendication 21, dans lequel la partie de données contient au moins une nouvelle clé racine chiffrée par la clé du noeud subordonné.

23. Un procédé selon la revendication 21 ou 22, dans lequel la partie de données contient une multiplicité de nouvelles clés de noeud, chacune d'elles étant chiffrée par la clé d'un noeud subordonné, la nouvelle clé la plus subordonnée étant chiffrée par une clé inchangée d'un noeud subordonné au noeud de la nouvelle clé la plus subordonnée.

24. Un procédé selon la revendication 20, 21, 22 ou 23, dans lequel la partie d'étiquette indique, pour chaque nouvelle clé chiffrée, quelle clé de noeud a chiffré cette nouvelle clé.

25. Un procédé selon la revendication 24 lorsqu'elle dépend de la revendication 21, 22 ou 23 dans lequel, pour chaque noeud ayant une multiplicité de noeuds immédiatement subordonnés, la partie d'étiquette stocke des données indiquant, pour chaque noeud immédiatement subordonné, si ce noeud immédiatement subordonné stocke une clé de déchiffrement, ou non.

26. Un procédé selon la revendication 25 dans lequel chaque noeud intermédiaire a des noeuds subordonnés gauche et droit.

27. Un procédé selon la revendication 20, dans lequel la partie de données de l'EKB représente la structure en arbre simplifiée comme étant constituée d'un noeud de sommet connecté à une multiplicité de noeuds terminaux, en omettant au moins certains noeuds intermédiaires, les données dans la partie de données contenant, pour un noeud de l'arbre simplifié, au moins une nouvelle clé de noeud chiffrée par la clé d'un autre noeud de l'arbre simplifié.

28. Un procédé selon la revendication 27, dans lequel la partie d'étiquette contient des données indiquant, pour chaque noeud de l'arbre non simplifié, si l'EKB de l'arbre simplifié contient des données chiffrées pour ce noeud de l'arbre non simplifié.

29. Un procédé selon la revendication 27 ou 28, dans lequel l'arbre simplifié n'a pas plus de deux branches associées à chaque noeud au-dessus d'un noeud terminal.

30. Un procédé selon la revendication 27 ou 28 dans lequel l'arbre simplifié n'a pas moins de trois branches connectant directement le noeud de sommet à des noeuds terminaux respectifs.

31. Un procédé selon l'une quelconque des revendications 20 à 30, dans lequel ledit message comprend une combinaison de :
(i) ledit EKB incluant la partie de données et la partie d'étiquette; et
(ii) une partie de données de message incluant des données de message chiffrées par une nouvelle clé de noeud incluse dans l'EKB.

32. Un procédé selon la revendication 31, dans lequel les données de message sont une clé de contenu.

33. Un procédé selon la revendication 31, dans lequel les données de message sont une clé d'authentification.

34. Un procédé selon la revendication 31, dans lequel les données de message sont une clé pour générer une valeur de contrôle d'intégrité.

35. Un procédé selon la revendication 31, dans lequel les données de message comprennent un code de programme.

36. Un procédé selon l'une quelconque des revendications 31 à 35, comprenant les étapes consistant à extraire séquentiellement de l'EKB la nouvelle clé de noeud, et à déchiffrer les données de message en utilisant la clé de noeud extraite.

37. Un procédé selon l'une quelconque des revendications 20 à 36, dans lequel ledit groupe ayant la structure en arbre hiérarchique est une entité comprenant un ensemble desdits dispositifs ayant un attribut commun.

38. Un procédé selon la revendication 37, dans lequel ledit groupe est un groupe dont la structure en arbre a, pour le noeud de sommet, un noeud terminal de la structure en arbre d'un autre groupe, l'autre groupe étant une entité comprenant un ensemble de dispositifs ayant un attribut commun.

39. Un procédé selon l'une quelconque des revendications 20 à 38, comprenant les étapes consistant à
déchiffrer le bloc de clés de validation dans l'un desdits dispositifs, en utilisant l'ensemble de clés; et
déchiffrer le message chiffré.

40. Un procédé selon l'une quelconque des revendications 20 à 39, dans lequel ledit message comprend une combinaison de :
(i) ledit EKB incluant la partie de données et la partie d'étiquette; et
(ii) une partie de données de message incluant des données de message chiffrées par une nouvelle clé de noeud incluse dans l'EKB.

41. Un procédé selon la revendication 40, dans lequel les données de message sont une clé de contenu.

42. Un procédé selon la revendication 40, dans lequel les données de message sont une clé d'authentification.

43. Un procédé selon la revendication 40, dans lequel les données de message sont une clé pour générer une valeur de contrôle d'intégrité.

44. Un procédé selon la revendication 40, dans lequel les données de message comprennent un code de programme.

45. Un support d'enregistrement d'information pour l'utilisation dans un système de l'une quelconque des revendications 1 à 19, sur lequel est stocké :
ledit bloc de clés de validation incluant la partie de données et la partie d'étiquette conjointement à des données de message chiffrées par la nouvelle clé de noeud.

46. Un support selon la revendication 45, dans lequel la nouvelle clé de noeud est chiffrée par la clé d'un noeud qui lui est subordonné dans le groupe.

47. Un support selon la revendication 46, dans lequel la partie de données contient au moins une nouvelle clé racine chiffrée par la clé du noeud subordonné.

48. Un support selon la revendication 46 ou 47 dans lequel la partie de données contient une multiplicité de nouvelles clés de noeud, chacune d'elles étant chiffrée par la clé d'un noeud subordonné, la nouvelle clé la plus subordonnée étant chiffrée par une clé inchangée d'un noeud subordonné au noeud de la nouvelle clé la plus subordonnée.

49. Un support selon la revendication 45, 46, 47 ou 48 dans lequel la partie d'étiquette indique, pour chaque nouvelle clé chiffrée, quelle clé de noeud a chiffré cette nouvelle clé.

50. Un support selon la revendication 49 lorsqu'elle dépend de la revendication 46, 47 ou 48 dans lequel, pour chaque noeud ayant une multiplicité de noeuds immédiatement subordonnés, la partie d'étiquette stocke des données indiquant, pour chaque noeud immédiatement subordonné, si ce noeud immédiatement subordonné stocke une clé de déchiffrement, ou non.

51. Un support selon la revendication 50 dans lequel chaque noeud intermédiaire a des noeuds subordonnés gauche et droit.

52. Un support selon la revendication 45, dans lequel la partie de données de l'EKB représente la structure en arbre simplifiée comme étant constituée d'un noeud de sommet connecté à une multiplicité de noeuds terminaux, en omettant au moins certains noeuds intermédiaires, les données dans la partie de données contenant, pour un noeud de l'arbre simplifié, au moins une nouvelle clé de noeud chiffrée par la clé d'un autre noeud de l'arbre simplifié.

53. Un support selon la revendication 52, dans lequel la partie d'étiquette contient des données indiquant, pour chaque noeud de l'arbre non simplifié, si l'EKB de l'arbre simplifié contient des données chiffrées pour ce noeud de l'arbre non simplifié.

54. Un support selon la revendication 52 ou 53, dans lequel l'arbre simplifié n'a pas plus de deux branches associées à chaque noeud au-dessus d'un noeud terminal.

55. Un support selon la revendication 52 ou 53 dans lequel l'arbre simplifié n'a pas moins de trois branches connectant directement le noeud de sommet à des noeuds terminaux respectifs.

56. Un support selon l'une quelconque des revendications 45 à 55, dans lequel les données de message sont une clé de contenu.

57. Un support selon l'une quelconque des revendications 45 à 55, dans lequel les données de message sont une clé d'authentification.

58. Un support selon l'une quelconque des revendications 45 à 55, dans lequel les données de message sont une clé pour générer une valeur de contrôle d'intégrité.

59. Un support selon l'une quelconque des revendications 45 à 55, dans lequel les données de message comprennent un code de programme.

60. Un programme d'ordinateur comprenant un code d'ordinateur qui, lorsqu'il est chargé dans un système informatique approprié et est exécuté, commande le système informatique pour exécuter le procédé de l'une quelconque des revendications 20 à 38.
